(19)

Europäisches
Patentamt
European
Patent Office
Office européen
des brevets

(11) **EP 4 345 069 A1**

(12) **EUROPEAN PATENT APPLICATION**

(43) Date of publication:
**03.04.2024 Bulletin 2024/14**

(21) Application number: **24155845.1**

(22) Date of filing: **05.02.2024**

(51) International Patent Classification (IPC):
**C03B 5/20** *(2006.01)*      **C03B 5/185** *(2006.01)*
**C03B 5/225** *(2006.01)*    **C03B 5/027** *(2006.01)*
**C03B 5/04** *(2006.01)*

(52) Cooperative Patent Classification (CPC):
**C03B 5/0275; C03B 5/04; C03B 5/185; C03B 5/20;
C03B 5/225;** C03B 17/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 EP 23200804**

(71) Applicant: **SCHOTT AG
55122 Mainz (DE)**

(72) Inventors:
 • **Eichholz, Rainer Erwin
  95666 Mitterteich (DE)**
 • **Schmidbauer, Wolfgang
  55122 Mainz (DE)**

 • **Rasp, Josef
  95666 Mitterteich (DE)**
 • **Weidmann, Günter
  55122 Mainz (DE)**
 • **Strobel, Alexander Uwe
  95666 Mitterteich (DE)**
 • **Stock, Markus
  95666 Mitterteich (DE)**
 • **Goldmann, Stefan
  95666 Mitterteich (DE)**
 • **Petri, Sven
  55122 Mainz (DE)**

(74) Representative: **Fuchs Patentanwälte
Partnerschaft mbB
Tower 185
Friedrich-Ebert-Anlage 35-37
60327 Frankfurt am Main (DE)**

(54)  **A VESSEL SYSTEM FOR PRODUCING AND REFINING A GLASS MELT, AND METHOD FOR PRODUCING AND REFINING A GLASS MELT**

(57)    This disclosure relates to a vessel system for producing and refining a glass melt, and a method for producing and refining a glass melt by means of which an excellent glass quality is achieved. A vessel system for producing and refining a glass melt comprises a melting vessel (101) for glass melting, a riser duct (201), a fining vessel (301) for refining a glass melt, and an optional vertical duct (401), wherein the riser duct (201) connects the melting vessel (101) to the fining vessel (301), wherein the fining vessel (301) is optionally suitable for purging the refined glass melt into the optional vertical duct (401).

Figure 1

EP 4 345 069 A1

## Description

This disclosure relates to a vessel system for producing and refining a glass melt, and a method for producing and refining a glass melt by means of which an excellent glass quality is achieved.

## Background

The production of glass has a high carbon footprint due to the amount of energy required for the melting and fining processes. This is particularly the case for heating by gas burners which use natural gas. A reduction of the carbon footprint is possible if, instead, an electric resistance heating is used which is provided with power from renewable energy sources like wind power, waterpower, or solar panels. The same power sources may also be used to produce hydrogen by electrolysis which then can be used to feed the gas burners. While the latter requires less changes to an existing glass production facility with a gas burner heating, the intermediate step of electrolysis is associated with a considerable energy loss. Hence, a direct use of the electrical power is more desirable.

There are various kinds of glass compositions. Some glass compositions are relatively easy to manufacture in good quality, others require sophisticated equipment and/or extremely well-balanced production processes. Generally, the glass compositions used to make drinking glasses and bottles, ordinary windowpanes, and other construction glass products, e.g., glass wool used for insulation, are relatively easy to manufacture in good quality because the glass used for these products has rather low melting temperatures and a steep viscosity-temperature curve. Additionally, quality criteria of these manufactured products are not very stringent. For example, drinking glasses and construction glass products may contain an occasional bubble and/or solid inclusions, and variations in shape and dimension which are tolerable for the said purposes. These glass products may contain impurities to a certain extent because their use does not require defined light transmission properties, or stringent purity regulations.

The types of glass compositions used for many mass products, such as soda lime glass compositions, have low melting temperatures because of significant amounts of alkali metal oxides and alkaline earth metal oxides. The respective glass melting facilities achieve very high throughput, often more than 200 tons of glass per day, or even 400 tons per day. Naturally, the amount of energy needed for making 200 tons of low melting glass is significantly lower than for a higher melting glass.

The quality required for a given product depends on its intended use. Some high-quality glasses are used to make products that may not have the occasional bubble and must meet stringent criteria in terms of shape, dimensional variations, and purity (both chemical and optical). Many of these glasses are rather difficult to manufacture not only because of the stringent criteria but also because of high melting temperatures. High melting temperatures may be necessary to achieve melt viscosities sufficient for homogenization and removal of bubbles from the melt. Examples of high-quality glass products include pharmaceutical containers and glass tubes used for making such containers.

An important step in the production of glass products that meet high-quality criteria rests in the fining step. Refining aims at the removal of bubbles from the glass melt by suitably high temperatures, optionally accompanied by stirring of the glass melt, and is generally assisted by refining agents which undergo chemical reactions and force gaseous components, such as e.g., $H_2O$, $CO_2$, $N_2$, $SO_2$, HCl, HF, and $O_2$, out of the glass melt. Additionally, design considerations of the fining vessel play an important role to provide for an efficient refining of the glass melt.

It is an object of this disclosure to provide glass products that meet high-quality criteria. A further object of this disclosure is to provide a method for the production of such glass products which also allows for a high throughput without diminishing the quality of the produced glass.

CN 107686226 A discloses a melting kiln for borosilicate glass comprising a cold-top melting furnace which is exclusively heated by electric means and a clarifier for, respectively heating and refining a glass melt. A liquid flow hole is provided at the bottom of the cold-top melting furnace, wherein an outlet end of the flow hole communicates with a lower end of a vertically arranged rising channel through which the molten glass passes. The upper end of the rising channel communicates with and feeds the molten glass into an inlet of the clarifier. The upper part of the cold-top melting furnace is provided with a feeding port for supplying borosilicate batch materials. The inner side of the cold-top melting furnace is provided with multiple kiln electrodes for heating by electric means. The interior of the clarifier is provided with a plurality of electrodes and a plurality of burners. Optionally, all burners may be arranged in the upper part of the clarifier. Optionally, a bubbling device may be disposed on the bottom brick of the clarifier to assist and improve refining the glass melt.

Yet, several drawbacks exist in the prior art with a view on providing efficient melting of the raw materials to obtain a homogeneous melt to be fed into a refining vessel and to thus provide high-quality glass products. Efficient melting is meant to embrace both energetic and hence process-economic melting of the raw materials as well as thorough physical intermixing of said raw materials when formed into a glass melt.

Therefore, it is an object of this disclosure to provide a method for making a glass melt which is efficient in terms of energy use, and which allows obtaining a glass product with well-defined high-quality criteria in subsequent process steps.

It is an object of this disclosure to provide a vessel system for producing and refining a glass melt, and a method for producing and refining a glass melt by means of which an excellent glass quality is achieved. It is a further related object of this disclosure to provide a continuous production method for making a glass melt which has a low carbon footprint.

## Summary of disclosure

In one aspect, this disclosure relates to a vessel system for producing and refining a glass melt, comprising a melting vessel (101) for glass melting, a riser duct (201), a fining vessel (301) for refining a glass melt, and an optional vertical duct (401), wherein the riser duct (201) connects the melting vessel (101) to the fining vessel (301), wherein the fining vessel (301) is optionally suitable for purging the refined glass melt into the optional vertical duct (401).

In a second aspect, this disclosure relates to a vessel system for producing and refining a glass melt, comprising a riser duct (201) and a fining vessel (301) for refining a glass melt, wherein the riser duct (201) is suitable for transferring a glass melt into the fining vessel (301).

In a third aspect, this disclosure relates to a vessel system for producing and refining a glass melt, comprising a riser duct (201), a fining vessel (301) for refining a glass melt, and a vertical duct (401), wherein the riser duct (201) is suitable for transferring a glass melt into the fining vessel (301), wherein the fining vessel (301) is suitable for purging the refined glass melt into the vertical duct (401).

In a fourth aspect, this disclosure relates to a method for producing and refining a glass melt, comprising the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203,031), and

- obtaining a refined glass melt.

In a fifth aspect, this disclosure relates to a method for producing and refining a glass melt, comprising the steps of

- feeding a glass melt (120, 207) from a melting vessel (101) to a flow duct (206) of a riser duct (201), and

- feeding the glass melt (120, 207) from an outlet (208) into a fining vessel (203,301), and

- obtaining a refined glass melt.

The glass in accordance with this disclosure may also be an intermediate product in the manufacture of another glass article, such as tubular glass in the form of semi-finished products, for example for further processing into pharmaceutical containers.

In a sixth aspect, this disclosure relates to a glass tube producible or produced using a vessel system according to any one of the first to third aspect and/or a method according to any one of the fourth to fifth aspect with an additional step of a tube drawing method, in particular the Danner method or the Vello method or the A-draw method, wherein the glass tube has

- (i) an aggregated airline length of 0.25 m or 0.15 m or 0.10 m or 0.05 m per 1 m tube length, wherein the aggregated airline length is defined as the sum of the lengths of closed airlines having a length > 15 mm and open airlines having a length > 2 mm, and/or (ii) no knots and stones with a diameter of > 0.8 mm per kg glass and/or at most 1 knot and/or stone with a diameter of > 0.5 per kg glass, and

- a Scope 1-PCF, product carbon footprint in Scope 1, of less than 400 g $CO_2$ / kg glass, optionally of less than 300 g $CO_2$ / kg glass or of less than 30 g $CO_2$ / kg glass.

In a seventh aspect, this disclosure relates to a use of a glass tube according to the sixth aspect for the production of pharmaceutical containers. The pharmaceutical container may be selected from bottles, for example large or small bottles, such as injection bottles or vials, ampoules, cartridges, bottles, flasks, phials, beakers, or syringes. Preferably, the containers are selected from the group consisting of ampoules, vials, syringes and/or cartridges. The term "pharmaceutical container" is to be understood as packaging made of glass that comes into direct contact with a medicament. The packaging protects the medicament from environmental influences and maintains the medicament according to its specification until it is used by the patient.

The production of pharmaceutical packages typically comprises post-processing steps, for example forming a pharmaceutical container from a glass tube. A typical process for the production of a glass tube for pharmaceutical containers involves a glass melt which is formed into a glass tube, for example by drawing. The formed glass tube is cut into larger portions which have two open ends. During post-processing, for example to provide pharmaceutical containers, one or both of the open ends can be closed, such as e.g. via hot forming.

The vessel system and the method for producing and refining a glass melt according to this disclosure allow producing glass products that meet high-quality criteria, while providing for a reduction of the carbon footprint. The provided method for the production of a refined glass melt, and glass products manufactured therefrom, allows for a high throughput without diminishing the quality of the produced glass. The vessel system may produce and fine an amount of glass melt in a range of from 40 t/d to 55 t/d, or even 35 t/d to 70 t/d. The disclosed vessel system is suitable for melting special-purpose glasses requiring high quality standards and an extremely low level of bubbles.

The method for making a glass melt may be carried out using the melting vessel for glass melting according to this disclosure. Both the method for making a glass melt and the melting vessel according to this disclosure provide for obtaining a homogenous glass melt which is essentially free of "relicts", such as, e.g., crystals of portions of the raw material. The method and the melting vessel provide for convection currents in a melting section which create a distinct temperature layer and density layer of the molten part in the melting section which is different from a conditioning section. The melting vessel according to this disclosure is designed to provide for continuous melting of a glass batch, i.e., a batch of raw materials which upon melting form a glass melt. The melting vessel provides for obtaining a homogeneous glass melt which may be processed further in additional parts downstream of the disclosed melting vessel. The melting vessel according to this disclosure is energy efficient with respect to melting the batch of raw materials to form a glass melt and to obtain a homogeneous glass melt.

The riser duct according to this disclosure may be particularly advantageous when used in a vessel system upstream of a fining vessel. The outlet of the riser duct may seamlessly continue into the fining vessel. Vessel systems known in the art will not be able to perform fining as described hereafter with the same efficiency due to the strong circular flow patterns in these known fining tanks. The riser duct allows feeding a glass melt into the fining vessel which has been previously generated, for example in a melting vessel. The riser duct may thus serve as a transport system between a melting vessel and a fining vessel and allows heating the glass melt to an appropriate temperature. Advantageously, in the riser duct the glass melt may be heated to a temperature of at least T3, or at least T2.5, or preferably at least T2 which corresponds to a viscosity of the glass melt of $10^2$ dPa s, which establishes fining conditions. When run at these conditions, large bubbles with a diameter of more than 500 $\mu$m may readily escape the glass melt via the glass melt surface and while they are still in the riser duct. Smaller bubbles with a diameter of 500 $\mu$m or less may require a fining vessel, e.g., according to this disclosure to leave the glass melt via the surface and to thus achieve sufficient fining with a view to providing high-quality glass products.

The fining vessel according to this disclosure provides for a so-called flat-bed refining method. Accordingly, the method may be run under the constraint that the glass melt in the fining vessel has a working height $h_{melt}$ of at least 0.35 m, wherein $h_{melt}$ is at most 0.6 m, for fining to take place. Considering the vessel system, the fining vessel may be designed and operated in such a way that fining takes place mainly, or even entirely, therein. The fining vessel according to this disclosure is designed in such a way to allow small bubbles with a diameter of 500 $\mu$m or less to form and to leave the glass melt.

Feeding the glass melt into the fining vessel after passing the riser duct allows a continuous filling of the glass melt into the fining vessel and allows maintaining a desirable glass melt level which thus enables flat-bed refining. The riser duct and the fining vessel act as communicating parts or sections, wherein the flow conditions of the glass melt in the riser duct directly influence and control the flow conditions of the glass melt in the fining vessel.

The refined glass melt leaves the fining vessel at elevated (fining) temperatures. The glass melt temperature may be controlled to decrease in a vertical duct to terminate any fining processes. The decrease of the glass melt temperature leads to a reduction of the partial pressure of gas species which have resulted from fining. Gas bubbles smaller than 50 $\mu$m which have not left the glass melt at the stage of fining will be dissolved again in the glass melt in the vertical duct, so that the final glass melt will be essentially bubble-free and may be fed into further downstream (conditioning) processes.

The vessel system for producing and refining a glass melt comprising a riser duct (201), a fining vessel (301), and a vertical duct (401) is advantageous because it allows preparing a glass melt for fining in the riser duct, it allows fining to take place in the fining vessel and enables a controlled temperature decrease in the vertical duct to terminate any fining processes and allows remaining gas bubbles smaller than 50 $\mu$m to be dissolved again in the glass melt. The partial pressure of any gas species may thus be raised in the riser duct by virtue of the chosen process temperature. The fining vessel is operated and designed such that gas bubbles are forced to leave the melt assisted by a raised partial pressure of the gas species. The vertical duct provides a bubble-free glass melt by decreasing the process temperature which decreases the gas partial pressure. By virtue of an increased glass melt level in the vertical duct, any remaining gas species may thus be resorbed into the glass melt.

**Brief Description of the Figures**

The vessel system according to this disclosure may include an optional melting vessel (101), a riser duct (201), a fining vessel (301), an optional vertical duct (401) and an optional storage vessel (501) which are, respectively, described individually and with an according annotation of reference signs. As far as applicable, their relationship with upstream and downstream parts is described. Therefore, individual elements or vessel parts of the vessel system may be denoted with two reference signs, i.e., indicating the elements or vessel part as such and in relation to another vessel part. For example, the riser duct (201) may be fed with a glass melt from a glass melting vessel (202,101), and the riser duct (201) allows feeding the glass melt into the fining vessel (203,301). The glass melting vessel (202,101) and the fining vessel (203,301) thus have two notations, i.e., 202 and 203 in relation to the riser duct (201), and 101 and 301 when referring to the glass melting vessel and the fining vessel, respectively, as such. For example, the fining vessel (301) may be arranged downstream of the riser duct (308,201), and the fining vessel (301) may be arranged upstream of a vertical duct (312,401). In direct relation to the fining vessel (301), the riser duct (308) and vertical duct (312) are denoted with 308 and 312, respectively. The vessel parts of the riser duct and the vertical duct as such are denoted with 201 and 401, respectively.

**Figure 1** depicts a vessel system for producing and refining a glass melt according to this disclosure, wherein the vessel system comprises a melting vessel (101), a riser duct (201), a fining vessel (301), a vertical duct (401) and a storage vessel (501).

**Figure 2** shows a side view of a melting vessel (101) according to this disclosure.

**Figure 3a** shows a top view of a melting vessel (101) according to this disclosure.

**Figure 3b** shows a top view of another melting vessel (101) according to this disclosure.

**Figure 4a** shows a top view of a melting vessel (101) according to this disclosure, indicating a bottom wall mass center (108-1) with an opening (105) having an opening mass center (108-2).

**Figure 4b** shows a top view of another melting vessel (101) according to this disclosure, indicating a bottom wall mass center (108-1) with an opening (105) having an opening mass center (108-2).

**Figure 5** shows a melting vessel (101) according to this disclosure with a common controller (107) for controlling two or more heating circuits (110).

**Figure 6** shows a perspective view of a riser duct with a lower electrode section and an upper electrode section.

**Figure 7** shows a perspective view of a riser duct as in Figure 6 having an additional middle electrode section.

**Figure 8** shows a perspective view of a riser duct having a continuously increasing width with a lower electrode section and an upper electrode section.

**Figure 9** shows a perspective view of a riser duct having a constant width with a lower electrode section, an upper electrode section, and two middle electrode sections.

**Figure 10** shows a longitudinal section of an apparatus according to this disclosure comprising a fining vessel (301) with a middle part (311), a riser duct (308) with an upstream part (309) and a vertical duct (312) with a downstream part (310)

**Figure 11** shows a longitudinal section of an apparatus according to this disclosure comprising a fining vessel (301) with a middle part (311), a riser duct (308) with an upstream part (309) and a vertical duct (312) with a downstream part (310).

**Figure 12** shows a longitudinal section of an apparatus according to this disclosure comprising a fining vessel (301) with a middle part (311), a riser duct (308) with an upstream part (309) and a vertical duct (312) with a downstream part (310).

**Figure 13** shows a longitudinal section of an apparatus according to this disclosure comprising a fining vessel (301) with a middle part (311), a riser duct (308) with an upstream part (309) and a vertical duct (312) with a downstream part (310).

**Figure 14** shows a top view of an apparatus according to this disclosure comprising a fining vessel (301) with a middle part, further indicating an upstream part (309) and a downstream part (310).

## Detailed description

The detailed description relates to the aspects described in the summary of disclosure. Any of the following embodiments may relate to both the vessel system, and any parts of it, such as the melting vessel (101) for glass melting, the riser duct (201), the fining vessel (301), the optional vertical duct (401), and the storage vessel (501), and the method.

## General definitions and standards

The terms "vessel system" and "apparatus" may be understood synonymously in this disclosure.

A "glass melt" is a volume of a batch of glass raw materials that has a viscosity of less than $10^{7.6}$ dPas. Such a viscosity can be measured using the fiber elongation method, e.g., as described in DIN ISO 7884-6:1998-02, where the elongation speed of a fiber with a defined diameter is determined with different weights at different temperatures.

The temperature at which the glass melt has a viscosity of $10^2$ dPas is herein called "temperature T2". Similarly, the temperature at which the glass melt has a viscosity of $10^4$ dPas is herein called "temperature T4". Temperature T2 is less than 1,500 °C for glass compositions with high contents of alkali metal oxides or alkaline earth metal oxides, such as soda lime glass and other glass compositions. These viscosities can be measured using a rotational viscosimeter, e.g. as described in DIN ISO 7884-2:1998-2. The dependence of viscosity on temperature is determined according to the VFT equation (Vogel-Fulcher-Tammann). The VFT equation is shown below.

$$lg(\eta/dPas)=A+\frac{B}{(t-t_0)}$$

In the VFT equation, t is the temperature under consideration. A, B and $t_0$ are the so-called VFT constants that are specific for each glass composition.

"Dwell time" is the time that a given portion of the glass melt spends in a part of the apparatus, e.g., the melting vessel before being withdrawn from the melting vessel, or the melting section (101a) of the melting vessel (101), or the conditioning section (101b) of the melting vessel (101). Dwell time can be measured using so-called tracers, i.e., components that are added to the glass melt so that they can be detected in the product, allowing conclusions as to the time spent in the melting vessel. Examples of tracer compounds are Ca, Sr and Y. The "average dwell time" is defined as:

$$\frac{melting\ vessel\ volume\ [m^3]}{melting\ vessel\ throughput\ [\frac{m^3}{h}]}$$

Whereas the "average dwell time" describes the time average which the glass melt takes to pass through a part of an apparatus, the "minimum dwell time", or "shortest dwell time", describes the shortest time that an individualized portion of the glass melt passes through a certain part of the apparatus. The "minimum dwell time" can also be measured using so-called tracers, for example by adding tracers to the batch of raw materials when fed into the melting vessel and by measuring the time it takes to detect said tracers upon leaving in the conditioning section (101b) of the melting vessel (101).

Analogously, the "minimum dwell time" of the glass melt in the conditioning section (101b) of the melting vessel (101) can be measured as the time difference between detecting tracers in the glass melt when passing the opening (105) and detecting said tracers at the second bottom wall (102b) of the conditioning section (101b). Analogously, the "minimum dwell time" of the glass melt in the middle part of the fining vessel can be measured by adding tracers to the glass melt in the upstream part and measuring the time it takes to detect said tracers in the downstream part.

If this disclosure refers to a length of any element, a width of any element or a height of any element, it shall be understood that with reference to a Cartesian coordinate system, length always refers to a maximal extension in the x-direction, width always refers to a maximal extension in the y-direction, and height always refers to a maximal extension in the z-direction, wherein the x-direction, y-direction and z-direction are oriented pairwise perpendicular to each other.

In this disclosure, "uniform flow" covers the two specific cases of plug flow and laminar flow and refers to a situation where particle movement through each cross-section is positively correlated with respect to its direction and its velocity to all neighboring cross-sections.

In this disclosure, "plug flow" refers to a situation where the velocity of the fluid is constant across any cross-section of the section, e.g., the conditioning section. The plug flow thus assumes that there is no boundary layer adjacent to the second wall and the second bottom wall of, e.g., the conditioning section.

In this disclosure, "laminar flow" means that fluid particles follow smooth paths in cross-sectional layers, wherein each layer moves smoothly past the adjacent layers with little or no mixing. In an ideal case, the fluid flows without lateral mixing and adjacent layers slide past one another. In an ideal case, there are no cross-currents perpendicular to the direction of flow, and no turbulences. In laminar flow, the motion of the particles of the fluid moves in straight lines parallel to adjacent solid surfaces.

In this disclosure, glass throughput refers to an amount of glass, for example given in tons or cubic meters, processed through a section volume or a sectional area per time, for example given in days. Accordingly, a ratio between the glass throughput and a bottom area may be expressed in tons per day per square meter, i.e., $t/(d\ m^2)$. Accordingly, a ratio between the glass throughput in $m^3/d$ and a volume may be expressed in 'per day' or 'day to the power of one', i.e., $d^{-1}$.

**Vessel system**

In one aspect, this disclosure relates to a vessel system for producing and refining a glass melt, comprising a melting vessel (101) for glass melting, a riser duct (201), a fining vessel (301) for refining a glass melt, and an optional vertical duct (401), wherein the riser duct (201) connects the melting vessel (101) to the fining vessel (301), wherein the fining vessel (301) is optionally suitable for purging the refined glass melt into the optional vertical duct (401).

In a second aspect, this disclosure relates to a vessel system for producing and refining a glass melt, comprising a riser duct (201) and a fining vessel (301) for refining a glass melt, wherein the riser duct (201) is suitable for transferring a glass melt into the fining vessel (301).

In a third aspect, this disclosure relates to a vessel system for producing and refining a glass melt, comprising a riser duct (201), a fining vessel (301) for refining a glass melt, and a vertical duct (401), wherein the riser duct (201) is suitable for transferring a glass melt into the fining vessel (301), wherein the fining vessel (301) is suitable for purging the refined glass melt into the vertical duct (401).

In a fourth aspect, this disclosure relates to a melting vessel (101).

In a fifth aspect, this disclosure relates to a riser duct (201).

In a sixth aspect, this disclosure relates to a fining vessel (301).

Melting vessel

In one embodiment, the melting vessel (101) comprises a melting section (101a) and a conditioning section (101b), wherein the conditioning section (101b) is below the melting section (101a). The melting section and the conditioning section shall be understood as geometrical bodies whose inner dimensions and geometrical properties are described in the following two paragraphs. For the purpose of describing volumes and heights of the conditioning section and the melting section, the terminology "wall", i.e., the first bottom wall (102a), the first wall (103a), the second bottom wall (102b) and the second wall (103b), shall be understood as a geometrical boundary.

The melting section (101a) shall be understood as a geometrical body with a first bottom wall (102a) and a first wall (103a) which surround a first volume (104a). The first bottom wall (102a) has an opening (105), wherein the edge of the opening (105) may lie in a flat plane. The first wall is an enveloping side wall which confines the melting section in the lateral dimensions. The melting section (101a) has thus a further opening at the top, wherein the edge of said opening may lie in a flat plane. The first volume (104a) shall thus be understood as the inner volume of the melting section (101a) surrounded and confined by the first bottom wall (102a), the first wall (103a) and two fictitious flat planes, wherein the opening (105) in the bottom wall is the first fictitious flat plane, and wherein the opening at the top is the second fictitious flat plane. The melting section (101a) has a first height (106a) which refers to the distance between the two fictitious flat planes which are oriented parallel to each other.

The conditioning section (101b) has a second bottom wall (102b) and a second wall (103b) surrounding a second volume (104b), wherein the first volume (104a) is connected to the second volume (104b) via the opening (105).

The second wall is an enveloping side wall which confines the conditioning section in the lateral dimensions. The second volume shall thus be understood as the inner volume of the conditioning section surrounded and confined by the second bottom wall, the second wall and the first fictitious flat plane of the opening (105). The conditioning section has a second height (106b) which refers to the distance between the first fictitious flat plane and the deepest point located on the second bottom wall (102b). If an outlet (112) is present in the melting vessel (101), specifically in the conditioning section (101b), said outlet may be in the form of a curved or flat plane which is present in either the second bottom wall, or the second wall.

The first bottom wall (102a) may have a bottom wall mass center (108-1) and the opening (105) has an opening mass center (108-2). "Mass center" shall be understood in the context of geometrical figures, e.g., the mass center of a circle is the center of the circle, and the mass center of a square is the point of intersection of the two diagonals of the square.

The melting vessel (101) may comprise at least two melting temperature probes (119a-i, 119a-ii) located at opposite positions to each other on the first wall (103a) of the melting section (101a), and at least two conditioning temperature probes (119b-i, 119b-ii) located at opposite positions to each other on the second wall (103b) of the conditioning section (101b). The at least two melting temperature probes (119a-i, 119a-ii) and the at least two conditioning temperature probes (119b-i, 119b-ii) extend 5.0 cm into the melting vessel, and in case of the method they extend 5.0 cm into the glass melt. The at least two melting temperature probes (119a-i, 119a-ii) are arranged at a height which is equal to half of the first height (106a) with respect to the first bottom wall (102a). The at least two conditioning temperature probes (119b-i, 119b-ii) are arranged at a height which is equal to half of the second height (106b) with respect to the second bottom wall (102b). Under said constraints, opposite positions in each respective section shall be understood as a single position or a multitude of positions which provides for a maximum distance between the two temperature probes in each section. In the case of three or more temperature probes, opposite positions in each respective section shall be understood as a single position or a multitude of positions which provides for a maximum distance between the three or more temperature probes in each section, while the distance between any two neighboring probes shall be the same.

The melting vessel (101) may also comprise a bottom temperature probe (121) located on the second bottom wall (102b), and an outlet temperature probe (122) located on a wall of the outlet (112).

An "average temperature of the glass melt in the melting section (101a)" refers to the arithmetic mean of the temperature readings of temperature probes located on the first wall of the melting section (101a) which extend 5.0 cm into the glass melt, wherein said temperature probes are arranged at a height which is equal to half of the first height (106a) with respect to the first bottom wall (102a). Hence, at least two temperature readings will be used for calculating the arithmetic mean value. Optionally, three or more temperature probes may be used to increase the accuracy of the arithmetic mean value.

Likewise, an "average temperature of the glass melt in the conditioning section (101b)" refers to the arithmetic mean of the temperature readings of temperature probes located on the second wall of the conditioning section (101b) which extend 5.0 cm into the glass melt, wherein said temperature probes are arranged at a height which is equal to half of the second height (106b) with respect to the second bottom wall (102b). Hence, at least two temperature readings will be used for calculating the arithmetic mean value. Optionally, three or more temperature probes may be used to increase the accuracy of the arithmetic mean value.

Likewise, an "average temperature in a top layer of the glass melt (120) in the melting section (101a)" refers to the arithmetic mean of the temperature readings of temperature probes located on the first wall of the melting section (101a) which extend 5.0 cm into the glass melt, wherein said temperature probes are arranged at a height which is 5.0 cm below the surface of the glass melt.

A convectional flow may be established in the melting section (101a), optionally by regulating a heat flow of the batch and/or the glass melt (120) using the two or more heating circuits in the melting section (101a) of the melting vessel (101). In this disclosure, "convectional flow" refers to a fluid flow which is generated through thermal heating and expansion. A convectional flow thus carries heat from place to place by the bulk movement of a fluid.

An essentially uniform flow may be established in the conditioning section.

In one embodiment, this disclosure provides a melting vessel (101) for glass melting comprising

- two or more heating circuits (110),

- optionally an inlet (111) for a glass batch and/or an outlet (112) for a glass melt (120), and

- optionally a superstructure (109),

wherein the melting vessel (101) comprises a melting section (101a) and a conditioning section (101b), wherein the conditioning section (101b) is below the melting section (101a), wherein the melting section (101a) has a first bottom wall (102a) and a first wall (103a) surrounding a first volume (104a), the first bottom wall (102a) having an opening (105), wherein the conditioning section (101b) has a second bottom wall (102b) and a second wall (103b) surrounding a second volume (104b), wherein the first volume (104a) is connected to the second volume (104b) via the opening (105).

In one embodiment the melting vessel has an area ratio between a bottom area and the opening (105) between 1.2 and 3.0, or between 1.5 and 3.0, or between 1.75 and 2.75, or between 2.0 and 2.5, wherein the bottom area is the sum of the areas of the first bottom wall (102a) and the opening (105). In one embodiment the melting vessel has an area ratio between a bottom area and the opening (105) of 1.2 or more, or 1.5 or more, or 1.75 or more, or 2.0 or more. In one embodiment the melting vessel has an area ratio between a bottom area and the opening (105) of 3.0 or less, or 2.75 or less, or 2.5 or less. Without wishing to be bound to theory, said geometrical arrangement connecting the bottom area and the opening provides for a funneling effect of the glass melt upon transfer from the melting section (101a) into the conditioning section (101b) which aids and is beneficial for providing a homogenous glass melt in the conditioning section which is preferably free from "relicts" possibly originating the batch of raw materials. In the context of the method for making a glass melt (120) according to this disclosure, it has been further established that the separation of the circular flows generated in the melting section (101a) from the uniform flow generated in the conditioning section (101b) is assisted by the temperature difference of the glass melt between both sections, which manifests itself as an average temperature of the glass melt (120) in the melting section (101a) which is at least 10 K higher, or at least 30 K higher, or at least 50 K higher, than an average temperature of the glass melt (120) in the conditioning section (101b).

In one embodiment of the melting vessel, the melting section (101a) has a first height (106a) of at least 0.8 m, or at least 1.1 m, or at least 1.4 m, and/or the conditioning section (101b) has a second height (106b) of at least 1.0 m, or at least 1.3 m, or at least 1.6 m, and/or a ratio of the first height (106a) to the second height (106b) is 1.0 or less, or 0.95 or less, or 0.90 or less. In one embodiment of the melting vessel, the melting section (101a) has a first height (106a) of 0.8 to 2.0 m and the conditioning section (101b) has a second height (106b) of 1.0 to 2.5 m and a ratio of the first height (106a) to the second height (106b) of 0.7 to 1.0. In one embodiment of the melting vessel, the melting section (101a) has a first height (106a) of 0.8 to 2.0 m and the conditioning section (101b) has a second height (106b) of 1.0 to 2.5 m and a ratio of the first height (106a) to the second height (106b) of 0.7 to 0.9.

In one embodiment of the melting vessel, the melting section (101a) has a first height (106a) of at least 0.8 m, and the conditioning section (101b) has a second height (106b) of at least 1.0 m. In one embodiment of the melting vessel, the melting section (101a) has a first height (106a) of at least 1.1 m, and the conditioning section (101b) has a second height (106b) of at least 1.3 m. In one embodiment of the melting vessel, the melting section (101a) has a first height (106a) of at least 1.1 m, and the conditioning section (101b) has a second height (106b) of at least 1.6 m.

In one embodiment of the melting vessel, the melting section (101a) has a first height (106a) of 2.0 m or less, or 1.7 m or less. In one embodiment of the melting vessel, the melting section (101a) has a first height (106a) of 0.8 to 2.0 m, or 1.1 to 1.7 m.

In one embodiment of the melting vessel, the conditioning section (101b) has a second height (106b) of 2.5 m or less, or 2.2 m or less. In one embodiment of the melting vessel, the conditioning section (101b) has a second height (106b) of 1.0 to 2.5 m, or 1.6 to 2.2 m.

In one embodiment of the melting vessel, the conditioning section (101b) has a ratio of the first height (106a) to the second height (106b) of 0.7 or more, or 0.75 or more, or 0.80 or more. In one embodiment of the melting vessel, the conditioning section (101b) has a ratio of the first height (106a) to the second height (106b) of 0.7 to 1.0, or 0.75 to 0.95, or 0.80 to 0.90.

In one embodiment of the melting vessel, the first volume (104a) is at least 1.0 $m^3$, or at least 1.5 $m^3$, or at least 5.0 $m^3$, or at least 10.0 $m^3$, and/or the second volume (104b) is at least 0.8 $m^3$, or at least 1.1 $m^3$, or at least 3.0 $m^3$, or at least 5.0 $m^3$, wherein a ratio of the first volume (104a) to the second volume (104b) is 1.30 or more, or 1.50 or more, or 1.70 or more. In one embodiment of the melting vessel, the first volume (104a) is 1.0 to 40.0 $m^3$, and the second volume (104b) is 0.8 to 25.0 $m^3$, wherein a ratio of the first volume (104a) to the second volume (104b) is 1.30 to 2.50.

In one embodiment of the melting vessel, the first volume (104a) is 40.0 $m^3$ or less, or 35.0 $m^3$ or less, or 30.0 $m^3$ or less. In one embodiment of the melting vessel, the first volume (104a) is 1.0 to 40.0 $m^3$, or 1.5 to 35.0 $m^3$.

In one embodiment of the melting vessel, the second volume (104b) is 25.0 $m^3$ or less, or 20.0 $m^3$ or less. In one embodiment of the melting vessel, the second volume (104b) is 0.8 to 25.0 $m^3$, or 1.1 to 20.0 $m^3$, or 3.0 to 20.0 $m^3$, or 5.0 to 20.0 $m^3$.

In one embodiment of the melting vessel, a ratio of the first volume (104a) to the second volume (104b) is 2.50 or less, or 2.30 or less, or 2.10 or less. In one embodiment of the melting vessel, a ratio of the first volume (104a) to the second volume (104b) is 1.30 to 2.50, or 1.50 to 2.30, or 1.70 to 2.10.

In one embodiment of the melting vessel, the first bottom wall (102a) is oriented horizontally, i.e. at 90°, or in an oblique angle $\alpha$ of 120° or less, or 110° or less, or 100° or less, with respect to the first wall (103a). In one embodiment of the melting vessel, the first bottom wall (102a) is oriented in an oblique angle $\alpha$ of 90° or more, or 92° or more, or 94° or more. In one embodiment of the melting vessel, the first bottom wall (102a) is oriented in an oblique angle $\alpha$ of 90° to 120°, or 92° to 110°, or 94° to 100°.

In one embodiment of the melting vessel, the first bottom wall (102a) has a minimal width of at least 0.10 m, or at least 0.15 m, or at least 0.20 m, or at least 0.25 m, or at least 0.30 m, wherein the minimal width of the first bottom wall is defined as the shortest distance between the opening (105) and the first wall (103a). In one embodiment of the melting vessel, the first bottom wall (102a) has a minimal width of 1.4 m or less, or 1.2 m or less, or 1.0 m or less, or 0.8 m or less, or 0.6 m or less. In one embodiment of the melting vessel, the first bottom wall (102a) has a minimal width of 0.10 to 1.4 m, or 0.15 to 1.2 m, or 0.20 to 1.0 m, or 0.25 to 0.8 m, or 0.30 to 0.6 m.

In one embodiment of the melting vessel, the first bottom wall (102a) has a bottom wall mass center (108-1) and wherein the opening (105) has an opening mass center (108-2), wherein the bottom wall mass center (108-1) and the opening mass center (108-2) are both on a fictitious vertical axis. Under this requirement both the first bottom wall (102a) and the opening (105) are centered with respect to each other which may assist and/or provide for a continuous flow of the glass melt from the melting section into the conditioning section.

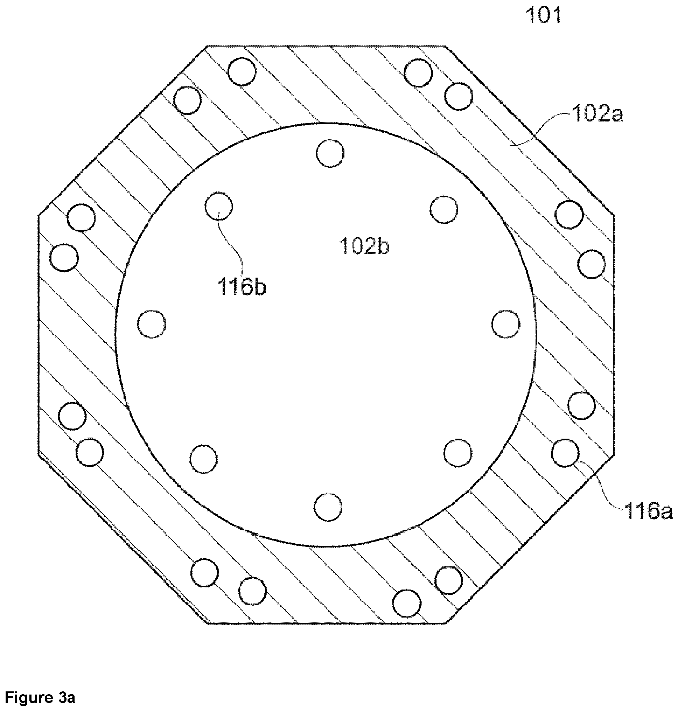

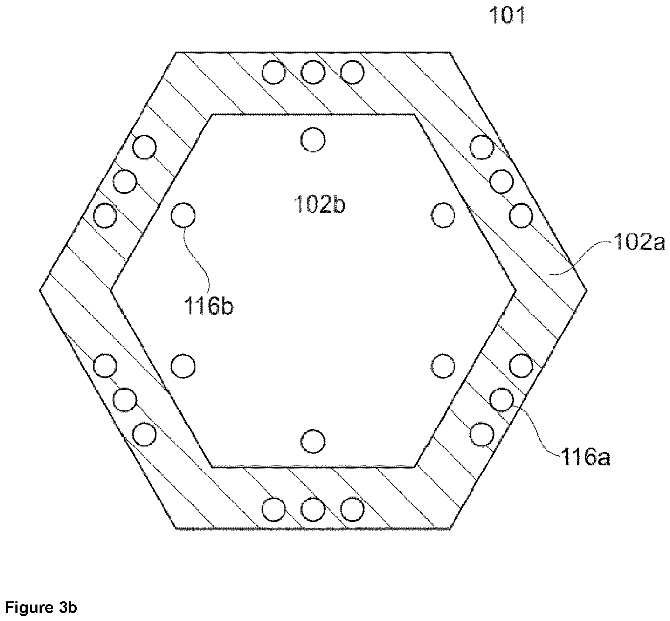

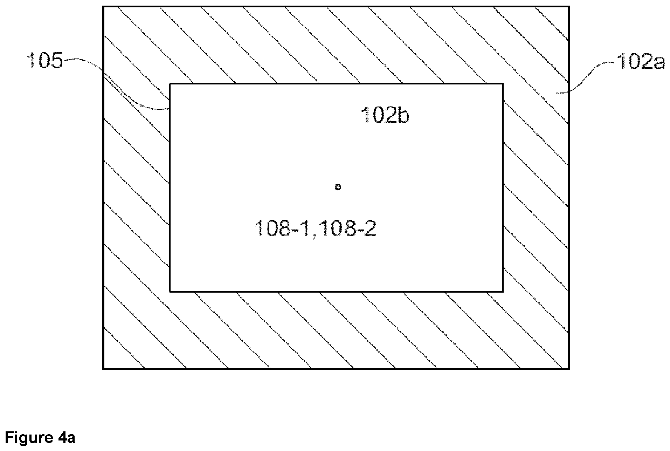

Advantageously, both the melting section (101a) and the conditioning section (101b) are rotationally symmetrical around one and the same fictitious vertical axis, and the first bottom wall (102a) and the opening (105) are rotationally symmetrical around one and the same fictitious vertical axis. A rotationally symmetrical design of the melting vessel may assist and/or provide for a continuous flow of the glass melt from the melting section into the conditioning section. In one embodiment, both the melting section (101a) and the conditioning section (101b) have an essentially rectangular shape when viewed in top view. Reference is made to Figure 4a; a rectangular shape implies a two-fold rotational axis. In one embodiment, both the melting section (101a) and the conditioning section (101b) have an essentially hexagonal shape when viewed in top view. Reference is made to Figure 3b; a hexagonal shape implies a six-fold rotational axis. In one embodiment, the melting section (101a) has an octagonal shape when viewed in top view and the conditioning section (101b) has a circular shape when viewed in top view. Reference is made to Figure 3a; an octagonal shape implies an eight-fold rotational axis.

The walls of the melting vessel, optionally also the inlet and/or the outlet, may be made of a variety of refractory materials. In an embodiment, the bottom walls and and/or the walls comprise or consist of refractory material. In one embodiment, the first bottom wall (102a), the second bottom wall (102b), the first wall (103a) and/or the second wall (103b) comprise or consist of refractory material. The refractory material may be a ceramic material. In embodiments, the refractory material does not comprise or consist of metals. In embodiments, the refractory material may be an oxidic ceramic, i.e., a material comprising or consisting of one or more oxides, such as metal oxides. Optionally, the refractory material may be temperature resistant up to at least 1,400 °C, at least 1,600 °C, or even at least 1,700 °C. "Temperature resistant" means in this disclosure that the refractory material has a melting point or melting range above the indicated temperature. In embodiments, the refractory material may be selected from $ZrO_2$, $Al_2O_3$, $SiO_2$, $Cr_2O_3$, MgO, and combinations thereof. In embodiments, the refractory material may further comprise $TiO_2$. In one embodiment, the refractory material may be high-zirconia fused cast comprising 90 wt.% or more ZrOz.

In one embodiment, the melting vessel further comprises a common controller (107) for controlling the two or more heating circuits (110), wherein the two or more heating circuits (110) each comprise a frequency changer (113) electrically connected via a power factor correction (114) and a transformer (115) to at least two electrodes (116) immersible into the glass melt (120).

In one embodiment, the melting vessel further comprises conductors (117) connecting the frequency changers (113), the power factor corrections (114), the transformers (115), and the electrodes (116), signal lines (118) connecting the frequency changers (113) with the common controller (107).

In one embodiment of the melting vessel, the one or more of the at least two electrodes (116) are located partially or completely in or on the first wall (103a) and/or the one or more of the at least two electrodes (116) constitute a part of the first wall (103a). In an alternative embodiment, the melting section (101a) comprises at least two electrodes (116) which are located partially in or on the first bottom wall (102a) and which have an oblique orientation (i.e. orientation of their longitudinal axes) within a range of 1 to 17°, preferably 2 to 8°, more preferably 4 to 6°, with respect to an essentially vertical position and a vertical rotational axis of the electrodes (116), and the conditioning section (101b) comprises at least two electrodes (116) which are located partially in or on the second bottom wall (102b) and which have an essentially vertical position with respect to a vertical rotational axis of the electrodes (116). An oblique orientation of the electrodes (116) is advantageous in terms of construction and maintenance of the melting vessel, e.g., construction and maintenance may be simplified compared to an essentially vertical position of the electrodes (116).

Advantageously, the melting vessel provides for melting a batch of raw materials to form a glass melt (120) in the melting section of the melting vessel via the at least two electrodes which may be flexibly located with respect to the first wall (103a). The location of the at least two electrodes partially or completely in or on the first wall provides for a more indirect heating and melting of the batch of raw materials because the first wall is heated first, and heat can spread within the first wall, before the heat is transferred to the glass melt. Alternatively, if the at least two electrodes are located only partially and to a small extent in or on the first wall, a more direct heating and melting of the batch of raw materials can be achieved which may in turn create strong convectional heat currents of the generated glass melt in the melting section. Convectional heat currents may assist and/or provide for forming a homogenous glass melt in the melting section.

In one embodiment of the melting vessel, the electrode material of one or more or all of the at least two electrodes is selected from Pt, Rh, Ir, Pd, alloys of these noble metals, Ta, Mo, $MoSi_2$, $MoZrO_2$, W, $SnO_2$, and combinations thereof. By using one of these materials, the operation of the apparatus can be optimized. Those electrodes provide an optimal combination of low corrosion and suitability for the operation at the claimed current frequencies.

In one embodiment of the melting vessel, one or more of the at least two electrodes (116) are rod-shaped or plate-shaped. In one embodiment, one or more of the at least two electrodes (116) are dome-shaped. While in some cases the electrodes may also be plate-shaped and then in particular be designed as a part of the walls or bottom of the melting vessel, in most cases rod-shaped electrodes are chosen. The rod-shaped electrodes are more versatile in arranging and easier to replace. Moreover, since the rod-shaped electrodes are spot-like sources of current, the zones of input of energy into the melt are easier to design to the desired layout.

In one embodiment, the melting vessel comprises at least six electrodes (116), optionally forming at least three heating circuits (110), wherein optionally at least two electrodes (116) form part of two independent heating circuits (110). The independent adjustment of the heating circuits allows the creation of optimized complex flow profiles of the melt, which may be achieved by using frequency changers before transformers in the single heating circuits which are jointly controlled by a common controller. The common controller allows coordination of the frequency changers. Thereby specific heating profiles for the single heating circuits can be generated independently from each other for the purpose of shaping the flow of the glass melt within the melting section of the melting vessel. The optimized flow may assist in minimizing or avoiding so-called dead zones and hence lead to a more homogeneously mixed glass melt which in turn improves the glass quality.

In one embodiment, the electrodes arranged in the melting section (101a) are essentially coextensive in height with respect to each other. In one embodiment, the electrodes arranged in the conditioning section (101b) are essentially coextensive in height with respect to each other.

In one embodiment, the electrodes arranged in the melting section (101a) are arranged rotationally symmetrical around one and the same fictitious vertical axis. A rotationally symmetrical design of the electrodes in the melting vessel, specifically in the melting section (101a), may assist and/or provide for a continuous flow of the glass melt from the melting section into the conditioning section. For example, if present, at least six electrodes may be arranged at the corners of a perfect hexagon, wherein each of the six electrodes has the same distance to its "left neighbor", its "right neighbor" and to the fictitious vertical axis.

In one general embodiment, pairs of two individual electrodes may form one heating circuit (110). In a more specific embodiment, pairs of double electrodes (116a) may form one heating circuit (110) (cf. Figure 3a). In a further specific embodiment, pairs of triple electrodes may form one heating circuit (110) (cf. Figure 3b).

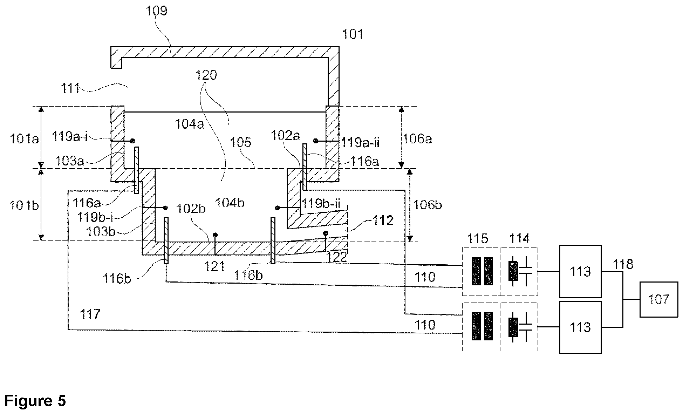

In one embodiment of the melting vessel, the melting section (101a) comprises six triples of electrodes (116) which form four heating circuits (110), and the conditioning section (101b) comprises six electrodes (116) which form four heating circuits (110). In this embodiment, the six triples of electrodes (116) in the melting section (101a) are arranged rotationally symmetrical around a six-fold vertical axis, wherein two oppositely located triples of electrodes (116) form one heating circuit (110). Additionally, two adjacent triples of electrodes (116) in the melting section (101a) form a further, i.e., fourth heating circuit (110). In this embodiment, the six electrodes (116) in the conditioning section (101b) are arranged rotationally symmetrical around a six-fold vertical axis, wherein two oppositely located electrodes (116) form one heating circuit (110). Additionally, two adjacent electrodes (116) in the conditioning section (101b) form a further, i.e., fourth heating circuit (110). This arrangement may be understood from Figure 3b, in further view of Figure 5. In this embodiment, the fourth heating circuit (110) of the two adjacent triples of electrodes (116) in the melting section (101a) is arranged vertically above an outlet (112) and the fourth heating circuit (110) of the two adjacent electrodes (116) in the conditioning section (101b) is arranged symmetrically and near an outlet (112). Advantageously, the fourth heating circuit (110) in the melting section (101a) and the fourth heating circuit (110) in the conditioning section (101b) allow creating an asymmetric heating profile with higher glass melt temperatures running towards the outlet.

In one embodiment, the melting vessel comprises at least two melting temperature probes (119a-i, 119a-ii) located at opposite positions to each other on the first wall (103a) of the melting section (101a), and at least two conditioning temperature probes (119b-i, 119b-ii) located at opposite positions to each other on the second wall (103b) of the conditioning section (101b), optionally comprising a bottom temperature probe (121) located on the second bottom wall (102b), optionally comprising an outlet temperature probe (122) located on a wall of the outlet (112), wherein the at least two temperature probes (119a-i, 119a-ii) and the at least two conditioning temperature probes (119b-i, 119b-ii) extend 5.0 cm into the melting vessel, wherein the at least two temperature probes (119a-i, 119a-ii) are arranged at a height which is equal to half of the first height (106a) with respect to the first bottom wall (102a), and wherein the at least two conditioning temperature probes (119b-i, 119b-ii) are arranged at a height which is equal to half of the second height (106b) with respect to the second bottom wall (102b).

In one embodiment of the melting vessel, the first bottom wall (102a) has an outer circumferential shape of a circle, an oval, or a polygon having 3 to 60 corners, and/or wherein the opening (105) has a cross-sectional shape of a circle, an oval, or a polygon having 3 to 60 corners. Advantageously, the first bottom wall and the opening have the same shape which provides for a more uniform transfer of the glass melt from the melting section into the conditioning section. It is of further advantage that both the first bottom wall and the opening have a same rotational symmetrical shape which further benefits the uniform transfer of the glass melt from the melting section into the conditioning section.

Riser duct

In one embodiment, the riser duct (201) comprises a lower electrode section (204) and an upper electrode section (205), a flow duct (206) connected to the lower electrode section (204) for feeding a glass melt (207) from the glass melting vessel (202,101) into the riser duct (201), and an outlet (208) arranged in the upper electrode section (205) for feeding the glass melt (207) from the riser duct (201) into the fining vessel (203).

Unless explicitly noted differently, a "horizontal cross-section" of a body, as used herein, refers in case of a body with differently sized horizontal cross-sections to the cross-section of the body having the maximal width. Moreover, the horizontal cross-section is referring to the inner dimensions of a body, such as the riser duct, without the walls, i.e., the free space which can be filled with the glass melt.

In the case of the riser duct, the width of a cross-section refers to the side of the cross-section which is oriented perpendicular to the flow duct and parallel to the upstream front end of the fining vessel which is to be connected with the riser duct.

Following the path of a glass melt in the riser duct, the "upstream" side of the riser duct or sections therein is referring to the lower side of it and the "downstream" side to the upper side of it, respectively.

An "average temperature" of the glass melt in the riser duct refers to the arithmetic mean of the temperature readings of temperature probes arranged in a distance of 5 cm from the wall or floor, wherein at least one temperature probe is installed in each case in the lower electrode section of the riser duct at the center of the floor where the flow duct enters, in the left and right walls at half of the height of the lower electrode section, and in the upper electrode section of the riser duct in the left and right walls at half of the height of the upper electrode section and in the middle of the front wall opposite the outlet. Hence, at least six temperature readings will be used for calculating the mean value. Optionally, there may be installed further probes along the height of the riser duct for increasing accuracy of the mean value.

Likewise, the "average temperature" of the glass melt in the fining vessel refers to the arithmetic mean of the temperature readings of temperature probes arranged in a distance of 5 cm from the wall or floor, wherein the glass melt in the fining vessel has a top layer and a bottom layer, each having a thickness extension of 1 cm, and the temperature of the glass melt in the top layer is measured using at least three top temperature probes and the temperature of the glass melt in the bottom layer is measured using at least three bottom temperature probes located at the same horizontal positions, viewed in a top view of the fining vessel. Hence, again at least six temperature readings will be used for calculating the mean value.

The "average temperature" of the glass melt on entry into the riser duct can be determined as the temperature of the melt on exit of the flow duct. It refers to the arithmetic mean of the temperature readings of temperature probes arranged in a distance of 5 cm from the wall or floor, wherein in the terminal 25 % of the length at the downstream side of the flow duct at least two temperature probes are installed in each case on the floor and in the left and right walls at half of the height of the flow duct. Hence, also in this case at least six temperature readings will be used for calculating the mean value. Optionally, there may be installed further probes within said section of the flow duct for increasing accuracy of the mean value, e.g., also at the ceiling.

The riser duct for connecting a glass melting vessel to a fining vessel may optionally form a part of the fining vessel and/or partially overlap with the fining vessel.

The riser duct comprises a lower electrode section and an upper electrode section, a flow duct connected to the lower electrode section for feeding the glass melt from the glass melting vessel into the riser duct, and an outlet arranged in the upper electrode section for feeding the glass melt from the riser duct into the fining vessel.

The flow duct is not required to have a certain minimum length. Its only purpose is the connection of the riser duct with the glass melting vessel. Hence, depending on the relative distance of this glass melting vessel to the riser duct, the length of the flow duct may in some embodiments be relatively short. In optional embodiments, the flow duct may even consist of an inlet between the glass melting vessel and the riser duct. A short flow duct may help to reduce the heat loss of the glass melt between the melting and fining section of a glass melting facility.

The lower electrode section is coextensive in height with the electrodes of the lowest heating circuit. Correspondingly, the upper electrode section is coextensive in height with the electrodes of the highest heating circuit. If the electrodes of a single heating circuit of such sections are not arranged at the same height or have a differing length, the "height of the electrodes" is meant to extend from the lowest end of the lowest electrode to the topmost end of the highest electrode. The same applies to two or more heating circuits which are not arranged at the same height but overlapping.

Optionally, the riser duct further comprises one or more non-electrode sections. These non-electrode sections may have the same or a different width of their horizontal cross-sections as a neighboring electrode section. They are characterized by the absence of electrodes within the respective height section of the riser duct.

The outlet in the upper electrode section of the riser duct may be constructed as a separate part, such as an aperture or duct, or simply consist of the top end of the wall on the downstream side of the riser duct where the glass melt will optionally flow from the riser duct into a middle part of the fining vessel.

The walls of the riser duct, the flow duct, and/or the outlet may be made of a variety of heat resistant materials. In an embodiment, the bottom plate and/or walls comprise or consist of refractory material. The refractory material may be a ceramic material, a metal material, or a combination thereof. A suitable metal may be platinum. In embodiments, the refractory material does not comprise or consist of platinum and/or other metals. In embodiments, the refractory material may be an oxidic ceramic, i.e., a material comprising or consisting of one or more oxides, such as metal oxides. Optionally, the refractory material may be temperature resistant up to at least 1,400 °C, at least 1,600 °C, or even at least 1,700 °C. "Temperature resistant" means in this context that the refractory material has a melting point or melting range above the indicated temperature. In embodiments, the refractory material may be selected from $ZrO_2$, $Al_2O_3$, $SiO_2$, $Cr_2O_3$, $MgO$, and combinations thereof. In embodiments, the refractory material may further comprise $TiO_2$.

By providing the lower electrode section and the upper electrode section each with one or more heating circuits each comprising at least one pair of electrodes, the riser duct is able to achieve several advantages, some of them more pronounced in combination with certain geometries of the lower electrode section and the upper electrode section. The electric heating at the bottom level and the top level of the riser duct may not only prevent the heat loss of the glass melt on its way from the melting vessel into the fining vessel, as encountered in prior art, but may also be used to heat the glass melt already close to the fining temperature. Hence, the fining process may use the whole length of the fining vessel for the fining process instead of first having to rise the temperature of the melt in a certain distance upon entry of the fining vessel to the required level. This will considerably improve the fining efficiency.

Ideally, the fining reaction should already begin at the end of the riser duct by a growing of the small bubbles contained in the melt. Hence, the temperature on exit of the riser duct may be chosen dependent on the volume flow through the outlet such that the bubble growth of the fining reaction starts already before the outlet into the fining vessel where the then active fining agents will further support bubble growth and escape from the melt. In other words, the faster the glass melt exits the riser duct, the higher the temperature may be chosen because there is a certain delay between reaching the required fining temperature and the growth of bubbles in the melt.

In embodiments, the glass melt may be heated in the riser duct such that an average temperature of the glass melt before exit of the riser duct already reaches the fining temperature and the fining reaction starts in an area between the upper electrode section and the outlet, and the outlet is formed as an integral part of the upstream part of the fining vessel. This temperature guidance is particularly advantageous if the outlet is formed as an integral part of the upstream part of the fining vessel. This means that the outlet in the upper electrode section of the riser duct is constructed as the top end of the wall on the downstream side of the riser duct where the glass melt will flow from the riser duct into a middle part of the fining vessel.

Moreover, the dwell time in the riser duct can be controlled and/or equalized by specifically influencing the flow behavior of the glass melt to avoid turbulences and dead zones.

In embodiments, the electrode pairs in the heating circuits may be formed with tuples of 2, 3, or 4 electrodes instead of single electrodes in the pairs. For example, a heating circuit may be formed with a pair of electrode triples. This may further help to reduce the current density on the single electrodes in the pairs while achieving the same heating efficiency and flow properties.

In embodiments, a horizontal cross-section of the lower electrode section may have a smaller width than a horizontal cross-section of the upper electrode section.

Particularly in combination with essentially T-shaped or widening geometries of the riser duct, the heating process may be further enhanced by using longer and/or larger electrodes in the wider upper electrode section for heating the glass melt close to the fining temperature. These will then require less current density to achieve the necessary power input and consequently have less electro-corrosion. It has also been found that this improves the volume-surface-ratio of the glass melt in the riser duct such that the heat loss is minimized.

In embodiments, the outlet may have a width of 80 % - 110 % of an initial width of the fining vessel. This initial width may in particular refer to the initial width of the actual fining tank section of the fining vessel whose horizontal cross-section may have a rectangular or trapezoid shape in the flow direction. The width may be 80 % - 110 % of the initial width of the fining vessel or 80 % - 105 % or 80 % - 100 % or 85 % - 100 % or 90 % - 100 % or 95 % - 100 %. Optionally, the width of the outlet is the same or essentially the same as the initial width of the fining vessel. Such a width of the riser duct outlet adapted to the width of the fining vessel is advantageous because the whole width of the fining vessel from start to finish can be used for fining without creating dead zones and the homogenized temperature level and flow properties can be carried on into the fining vessel. In particular, a plug flow profile can be created and a central short-circuit flow can be avoided.

In embodiments, the outlet may have a width of from 0.16 m to 6.05 m, or 0.16 m to 5.5 m, or 0.24 m to 4.95 m, or 0.32 m to 4.4 m, or 0.4 m to 3.85 m, or 0.48 m to 3.3 m, or 0.56 m to 2.75 m, or 0.64 m to 2.2 m, or 0.72 m to 1.65 m, or 0.8 m to 1.1 m. Optionally, the width of the outlet may be 0.16 m or more, or 0.24 m or more, or 0.32 m or more, or 0.4 m or more, or 0.48 m or more, or 0.56 m or more, or 0.64 m or more, or 0.72 m or more, or 0.8 m or more. Optionally, the width of the outlet may be 6.05 m or less, or 5.5 m or less, or 4.95 m or less, or 4.4 m or less, or 3.85 m or less, or 3.3 m or less, or 2.75 m or less, or 2.2 m or less, or 1.65 m or less, or 1.1 m or less.

In embodiments, there may be arranged one or more middle electrode sections between the lower electrode section and the upper electrode section, wherein each of the one or more middle electrode sections comprises one or more heating circuits each comprising at least one pair of electrodes and wherein a horizontal cross-section of each middle electrode section has a width which is larger than or equal to that of the section directly upstream of said section and a width smaller than or equal to that of the section directly downstream of said section.

This effectively means that in addition to the two heating circuits provided in the lower electrode section and the upper electrode section further heating circuits along the height of the riser duct may be installed. These may be advantageous for facilitating the fine-tuning of the heat input and the flow properties of the glass melt in the riser duct.

The middle electrode sections are coextensive in height with the height of the electrodes of each middle heating circuits. Regarding the extension of the "height of the electrodes", the same definitions as given above for the upper electrode section and the lower electrode section apply.

In embodiments, the width of the horizontal cross-sections of the lower electrode section, middle electrode sections, and/or upper electrode section may change continuously or discontinuously along a height of the riser duct or is essentially constant. The vertical cross-section of the riser duct resulting from this design of the middle electrode sections in combination with the upper and lower electrode section may, hence, be a rectangle, a T-shape, a stepwise widening form wherein the steps may have a different height, a continuously widening form (such as a trapezoid or triangle) or a curved form.

In embodiments, above the upper electrode section a gaseous phase may be provided above a surface of the glass melt in which optionally further heaters are installed and which optionally is in fluid communication with a gaseous phase of the fining vessel. Such an open space above the glass melt surface will allow for bubbles which have been carried over from the melting vessel or formed within the riser duct to escape the melt. Moreover, in this open space there may be installed further heaters for additional heating of the melt from above. These further heaters may, for example, be selected from microwave heaters, infrared heaters, or burners. The burners may be fuel burners or gas burners. The gas may be natural gas. In embodiments, the gas used for the burners comprises or consists of non-fossil gas, such as biofuel (e.g. biogas) and/or hydrogen, particularly hydrogen obtained from renewable sources. Optionally, the amount of thermal energy obtained from burning fossil fuels is less than 20.0 %, or less than 15.0 %, or less than 10.0 %, or less than 5.0 %, or less than 1.0 % relative to the total amount of thermal energy introduced into the melt. In one embodiment, no fossil fuel is used for the burners.

In one embodiment, the burners can be heated with a mixture of hydrogen and oxygen or with natural gas and oxygen or with a blend of natural gas and hydrogen with oxygen, or ammonia and oxygen, or biomethane or biofuel. In one embodiment, the burners can be heated with a mixture of hydrogen and air, or with natural gas and air, or with a blend of natural gas and hydrogen with air.

In one embodiment, the additional heaters do not comprise burners.

In embodiments, the heating circuits and any additional heaters provided in the gaseous phase above the upper electrode section may be configured such that a power density $P_{total, upper}$ providable to the glass melt comprising the sum of an electrical power density $P_{el, upper}$ providable by the heating circuits of the upper electrode section and a power density $P_{add}$ providable by the additional heaters is higher than an electrical power density $P_{el, lower}$ of the lower electrode section. The relationship may be expressed as $P_{total, upper} = (P_{el, upper} + P_{add}) > P_{el, lower}$. The inventors have found that it may be better to put more heating energy into the upper electrode section and the additional heaters above the melt than into the lower electrode section for rising the temperature close to the fining temperature. In doing so, there is created a temperature layering which in turn creates a density layering within the melt in the riser duct. Ideally, the temperature of the melt is constantly rising along the height of the riser duct. The resulting flow properties and dwell time spread may be improved this way.

In embodiments, a width $w_f$ of the horizontal cross-section of the flow duct and a width $w_l$ of the horizontal cross-section of the lower electrode section are dimensioned $w_f \leq w_l$. Here, the width $w_f$ is referring to the side of the horizontal cross-section of the flow duct which is oriented perpendicular to the direction of flow of the glass melt within the flow duct. Width $w_l$ is referring to the side of the of horizontal cross-section of the lower electrode section which is oriented parallel to width $w_f$. The flow duct may be smaller than or at most equally sized with the lower electrode section of the riser duct. As a result, the glass melt will flow faster in the flow duct than in the riser duct and lose less temperature.

In embodiments, the electrodes may be rod-shaped and/or tube-shaped and/or plate-shaped and/or block-shaped and/or dome-shaped, and/or arranged in vertical or horizontal or oblique orientation in or on a wall or a horizontal surface of an electrode section, and/or the electrode material may be selected from Pt, Rh, Ir, Pd, alloys of these noble metals, Ta, Mo, $MoSi_2$, $MoZrO_2$, W, $SnO_2$, and combinations thereof. There are several advantageous configurations of the electrodes. For example, when the riser duct has an essentially T-shaped vertical cross-section, the electrodes may be rod-shaped and arranged in vertical or slightly tilted orientation on the floor and the lower horizontal surfaces of the upper T-section. In another example, the electrodes may be rod-shaped and arranged in vertical or slightly tilted orientation on the floor and in horizontal orientation on the walls of the upper electrode section. This option is suitable for the essentially T-shaped vertical cross-sections as well as for the continuously or discontinuously widening vertical cross-sections including one or more middle electrode sections. In yet another example, the electrodes may be plate-shaped and arranged on the walls of the lower and upper electrode section. In yet another example, the electrodes may be in the lower electrode section rod-shaped and arranged in vertical or slightly tilted orientation on the floor and in the upper electrode section plate-shaped and arranged on the walls. In yet another example, the electrodes may be rod-shaped and arranged in horizontal orientation on the walls of the lower and upper electrode section. In the latter example, likewise horizontally oriented electrodes may be arranged on the walls of one or more middle electrode sections. As a final example, when the riser duct has a stepwise widening vertical cross-section including one or more middle electrode sections, the electrodes may be rod-shaped and arranged in vertical or slightly tilted orientation on the floor and the horizontal surfaces of the middle and upper electrode sections.

In embodiments, the flow duct may be inclined towards the riser duct and/or the outlet is inclined towards the fining vessel. An inclined orientation of the flow duct towards the riser duct may be beneficial for reducing the amount of bubbles trapped for extended amount of time in the flow duct. An inclined orientation of the outlet towards the fining vessel may reduce the wear of the refractory material of the outlet and improve the heating by radiation from burners installed in the walls above the glass melt surface.

Fining vessel

The fining vessel (301) according to this disclosure provides for flat-bed refining and may be advantageously used in vessel system according to this disclosure and a method according to this disclosure. Features described in the context of the fining vessel (301) are thus applicable to the vessel system and the method according to this disclosure as far as they concern the fining vessel (301).

In one embodiment, the fining vessel (301) has a first side wall (303-1), a second side wall (303-2), a bottom (304) and an optional ramp (315), the fining vessel (301) having a middle part (311), wherein the fining vessel (301) is connectable to an optional downstream part (310) for purging a refined glass melt optionally into a vertical duct (401), wherein the optional upstream part (309), the middle part (311), a part above the optional ramp (315) and the optional downstream part (310) are arrangeable in this consecutive order, wherein the middle part (311) has a width $w_m$, wherein the width $w_m$ is the shortest distance between the first side wall (303-1) and the second side wall (303-2) at a height of 30 cm above a deepest point of the bottom (304).

The fining vessel according to this disclosure may have a first side wall (303-1), a second side wall (303-2), and a bottom (304), all of which form geometrical planes which may be curved or flat.

The fining vessel may have an optional ramp (315) which is intended to let the glass melt flow downwards after fining of said glass melt is essentially finished. The fining vessel (301) has a middle part (311), where fining shall take place, i.e., the temperature of the glass melt in said middle part needs to be raised to a temperature which is sufficient to let fining take place as part of the method. The fining vessel (301) is connectable to an optional upstream part (309) for receiving the glass melt (302'). The fining vessel (301) is also connectable to an optional downstream part (310), i.e., a vertical duct (312), for purging a refined glass melt. It shall be understood that fining essentially takes place in the middle part (311) of the fining vessel.

The middle part (311) refers to a fictitious volume within the fining vessel (301), wherein the fictitious volume is characterised by a length $l_m$, a height $h_m$, and a width $w_m$. The middle part (311) of the fining vessel has a height $h_m$ which is at most 0.63 m with respect to the deepest point of the bottom (304). The middle part (311) has a width $w_m$, wherein the width $w_m$ is the shortest distance between the first side wall (303-1) and the second side wall (303-2) at a height of 30 cm above a deepest point of the bottom (304). Depending on the shape of the fining vessel, the width may vary at different heights. The middle part of the fining vessel has a length $l_m$ which extends in horizontal and orthogonal direction with respect to the width $w_m$, wherein the length $l_m$ extends from the upstream part (309) to the downstream part (310), not including the upstream part (309) and the downstream part (310). The length $l_m$ shall thus be understood as the shortest distance measured from the geometrical interface of the upstream part and the middle part until the downstream part begins.

The "middle part volume" is the volume of the glass melt which is required to fill the middle part until a certain working height $h_{melt}$. The working height of the glass melt, indicated by the triangle pointing on a horizontal line, shall be determined in relation to the deepest point of the bottom (304). The "middle part volume" thus excludes the volume of the barrier element (313) which is not accessible to the glass melt. In case a ramp is present, the "middle part volume" is the volume of the glass melt which is required to fill the middle part until a certain working height $h_{melt}$ as if the ramp was not present.

The optional upstream part (309), the middle part (311), the optional part above the optional ramp (315) and the optional downstream part (310) are arrangeable or arranged in this consecutive order. Likewise, if all optional parts are present, the upstream part (309), the middle part (311), the part above the ramp (315) and the downstream part (310) are arranged in this consecutive order. That means during the method, a glass melt will always be fed from the upstream part and proceed through the middle part, subsequently above the part above the ramp, and finally via the downstream part.

The middle part (311) has a width $w_m$, which is the shortest distance between the first side wall (303-1) and the second side wall (303-2) at a height of 30 cm above a deepest point of the bottom (304). As the bottom may be curved, there may be two or more 'deepest points'. Then, the width $w_m$ needs to be established for all of said two or more 'deepest points' at a height of 30 cm, and the shortest distance between the first side wall (303-1) and the second side wall (303-2) needs to be established out of all of said 'deepest points'.

The middle part (311) may comprise a barrier element (313) which is arranged on the bottom (304). The barrier element (313) extends from the first side wall to the second side wall such that it provides a barrier to a glass flow. The barrier element (313) thus covers a lower portion of a cross-section of the middle part (311). The barrier element may have a variable height between the first side wall and the second side wall. The barrier element has a characteristic height $h_w$ which is the vertical distance between the deepest point of the bottom (304) and the highest height of the barrier element (313), with the proviso that $h_w \geq 20$ cm.

The glass melt (302) has a fictitious top layer (318) and a fictitious bottom layer (319). The fictitious top layer (318) consists of the portion of the glass melt (302) in the middle part volume which extends from the surface of the glass melt (307) into the glass melt (302) with a thickness of 10 cm. The fictitious bottom layer (319) consists of the portion of the glass melt (302) in the middle part volume which extends from the bottom (304) into the glass melt (302) with a thickness of 10 cm. As defined before, the middle part volume is the volume of the glass melt (302) which is required to fill the middle part (311) up to the working height $h_{melt}$.

The average temperature of the glass melt in the fictitious top layer (318) refers to the arithmetic mean of the temperature readings using two or more top temperature probes (320) located at the same horizontal positions as the mid-height of the fictitious top layer (318), viewed in a side view of the fining vessel (301). The average temperature of the glass melt in the fictitious bottom layer (319) refers to the arithmetic mean of the temperature readings using two or more bottom temperature probes (321) located at the same horizontal positions as the mid-height of the fictitious bottom layer (319), viewed in a side view of the fining vessel (301). The two or more top temperature probes (320) and the two or more bottom temperature probes (321) are arranged in a section of the middle part (311) which belongs to a region between 0.4 and 0.6 $l_m$ (e.g. at 0.5 $l_m$) along the length $l_m$ of the middle part (311). The two or more top temperature probes (320), and the two or more bottom temperature probes (321), may be attached to the wall or the bottom of the fining vessel and are arranged in such a way that the actual temperature measurement happens at least 5 cm away from the wall and/or the bottom. In other words, the actual temperature measurement happens within the glass melt.

The average temperature of the glass melt refers to the arithmetic mean of the temperature readings using two or more top temperature probes (320) located at the same horizontal positions, viewed in a side view of the fining vessel (301).

Within this disclosure, the gas bubbles generated as a result of the fining process are assumed to be spherical and are thus geometrically defined in terms of the equivalent spherical diameter. The terminology 'diameter' in relation to the gas bubble size shall thus be understood as the equivalent spherical diameter.

The middle part (311) of the fining vessel may have a height $h_m$ which is at most 0.63 m. The height $h_m$ is the vertical distance between a deepest point of the bottom (304) and the lowest height of the first side wall (303-1) or the second side wall (303-2). By virtue of said constraints the middle part (311) cannot be filled with a glass melt which is deeper than 0.60 m in a height direction because it would lead to an overflow of the glass melt over the first side wall (303-1) or the second side wall (303-2).

The middle part of the fining vessel has a length $l_m$ which extends in horizontal and orthogonal direction with respect to the width $w_m$, wherein the length $l_m$ extends from the upstream part to the downstream part, not including the upstream part and the downstream part. The length $l_m$ shall thus be understood as the shortest distance measured from the geometrical interface of the upstream part and the middle part until the downstream part begins.

The barrier element (313) may be arranged in a section of the middle part (311) which belongs to a region between 0.8 and 1.0 $l_m$ along the length $l_m$ of the middle part (311). Alternatively, the barrier element (313) may be arranged in a section of the middle part (311) which belongs to a region between 0.0 and 0.2 $l_m$ along the length $l_m$ of the middle part (311). The position of 0.0 $l_m$ shall be understood as the geometrical interface of the upstream part to the middle part. The position of 1.0 $l_m$ shall be understood as the geometrical interface of the middle part and the downstream part. In case the ramp is present, the position of 1.0 $l_m$ shall be understood as the geometrical interface of the middle part and the downstream part.

The fining vessel (301) may comprise a ramp (315), the ramp having a height $h_r$ of 0.1 to 1.0 m with respect to the highest point of the ramp and the lowest point of the ramp. The ramp is arranged in downstream direction after the middle part and allows the refined glass melt to flow downwards. The ramp may either be shaped as a curved plane or as a flat plane. In the case of a flat plane, the ramp may have a constant slope.

The fining vessel (301) may have a superstructure (305) which covers the fining vessel. It shall be understood that the superstructure makes at least partial physical contact with both the upper edge of the first side wall (303-1) and the upper edge of the second side wall (303-2). It is preferred that the superstructure makes full or continuous physical contact with both the upper edge of the first side wall (303-1) and the upper edge of the second side wall (303-2) to thus provide a complete cover above the middle part. The temperature of the inner volume of the superstructure may be controlled with a temperature probe (322). It shall be understood that the temperature probe (322) thus monitors the temperature of the inner volume of the superstructure and also allows adjusting the temperature of the inner volume of the superstructure.

The working height $h_{melt}$ is the filling of the middle part with a glass melt in a height direction. According to this disclosure, the working height $h_{melt}$ is at least 0.35 m to provide for a reasonable amount of glass melt which is subjected to fining in the middle part. Related herewith the barrier element (313) has a height $h_w$ of at least 0.20 m, with the proviso that $h_{melt} \geq 1.2 \times h_w$, in order to guarantee that a sufficient amount of glass melt is provided which can pass and flow over the barrier element.

The fining vessel (301) may comprise one or more heating burners (314) arranged above the bottom (304) at a height of at least 0.9 m, or at least 1.5 m, above the deepest point of the bottom (304). It shall be understood that the one or more heating burners allow heating the glass melt to a temperature which is sufficient for fining under the constraint that the one or more heating burners do not touch or get in physical contact with the glass melt.

The glass melt (302) may be heated by means of electrodes which are placed in such a way that they are in direct physical contact with the glass melt and by means of one or more heating burners (314) arranged above the glass melt. The one or more heating burners may provide more thermal energy to the glass melt than the electrodes which leads to glass melt layers of different temperature. The glass melt (302) may have a fictitious top layer (318) at melt level, i.e., directly below the surface (307), and a fictitious bottom layer (319) above bottom (304). Each of the fictitious top layer (318) and the fictitious bottom layer (319) may have a thickness extension of, e.g., 10 cm in height. An average temperature of the glass melt in the fictitious top layer (318) may be at least 10 K higher than an average temperature of the glass melt in the fictitious bottom layer (319).

This disclosure provides a fining vessel (301) for refining a glass melt (302), the fining vessel having a first side wall (303-1), a second side wall (303-2), a bottom (304) and an optional ramp (315), the fining vessel (301) having a middle part (311), wherein the fining vessel (301) is connectable to an optional upstream part (309) for receiving the glass melt (302'), and wherein the fining vessel (301) is connectable to an optional downstream part (310) for purging a refined glass melt, wherein the optional upstream part (309), the middle part (311), an optional part above the optional ramp (315) and the optional downstream part (310) are arranged in this consecutive order, wherein the middle part (311) has a width $w_m$, wherein the width $w_m$ is the shortest distance between the first side wall (303-1) and the second side wall (303-2) at a height of 30 cm above a deepest point of the bottom (304), wherein the fining vessel (301) comprises a barrier element (313) arranged on the bottom (304), wherein the barrier element (313) extends from the first side wall to the second side wall and has a height $h_w$, wherein the height $h_w$ is the vertical distance between the deepest point of the bottom (304) and the highest height of the barrier element (313), wherein $h_w \geq 20$ cm.

The fining vessel (301) may be integrated into an apparatus which is suited to provide a glass melt from a batch of raw materials, transferring the glass melt through a riser duct (308) into the fining vessel (301) and purging the refined glass melt into a vertical duct (312) with downward flow. The fining vessel (301) receives the glass melt (302, 302') from an upstream part (309), where the glass melt may be heated to a refining temperature of at least T2 such that refining is initiated. In the middle part (311) of the fining vessel (301) fining of the glass melt takes place. The refined glass melt (302, 302") may be purged into a downstream part (310) for resorption of bubbles with a diameter of 50 $\mu$m or less. The middle part (311) may thus be arranged between an optional upstream part (309) and an optional downstream part (310).

A gaseous phase (306) is provided above a surface (307) of the glass melt (302) in the middle part (311) which optionally is in fluid communication with a gaseous phase (306') above a surface (307) of a glass melt (302') of the upper section of the riser duct (308).

The walls of the fining vessel, i.e., the first side wall (303-1), the second side wall (303-2), and the bottom (304), also the optional upstream part and the optional downstream part, may be made of a variety of refractory materials. In an embodiment, the bottom (304) and/or the first side wall (303-1) and the second side wall (303-2) comprise or consist of a refractory material, such as a ceramic material. In one embodiment, the bottom (304) and/or the first side wall (303-1) and the second side wall (303-2) comprise a ceramic material.

In one embodiment, the barrier element (313) comprises or consist of a ceramic material. In one embodiment, the barrier element (313) may comprise or consist of platinum, rhodium, molybdenum or iridium or alloys thereof or comprise a ceramic material which may be covered or shielded with platinum, rhodium, molybdenum or iridium or alloys thereof.

In embodiments, the refractory material may be an oxidic ceramic, i.e., a material comprising or consisting of one or more oxides, such as metal oxides. Optionally, the refractory material may be temperature resistant up to at least 1400 °C, or at least 1600 °C, or even at least 1700 °C. "Temperature resistant" means in this disclosure that the refractory material has a melting point or melting range above the indicated temperature. In embodiments, the refractory material may be selected from $ZrO_2$, $Al_2O_3$, $SiO_2$, $Cr_2O_3$, MgO, and combinations thereof. In embodiments, the refractory material may further comprise $TiO_2$. Optionally, as part of the method according to this disclosure, the refractory material may be cooled by air or water to avoid corrosion.

In one embodiment, the height $h_v$ of the fining vessel is from 0.1 to 3.0 m, or 0.2 to 2.75 m, or 0.3 to 2.5 m, or 0.4 to 2.0 m, or 0.5 to 1.5 m, or 0.6 to 1.0 m. In one embodiment, the height $h_v$ of the fining vessel is 0.1 m or more, or 0.2 m or more, or 0.3 m or more, or 0.4 m or more, or 0.5 m or more, or 0.6 m or more, or 0.7 m or more, or 0.8 m or more. In one embodiment, the height $h_v$ of the fining vessel is 3.0 m or less, or 2.75 m or less, or 2.5 m or less, or 2.0 m or less, or 1.5 m or less. The height $h_v$ of the fining vessel is the vertical distance between the deepest point of the bottom (304) and the highest point below the superstructure (305).

The middle part (311) of the fining vessel where fining takes place has a height $h_m$, wherein $h_m$ is at most 0.63 m, wherein the height $h_m$ is the vertical distance between a deepest point of the bottom (304) and the lowest height of the first side wall (303-1) or the second side wall (303-2). The working height $h_{melt}$ of the glass melt (302) is at most 0.6 m and must not be exceeded as part of the method according to this disclosure, to not overfill the middle part (311) in view of its height $h_m$.

In one embodiment, the middle part (311) has a length $l_m$ of 0.5 to 6.8 m, or 0.75 to 5.8 m, or 1.0 to 4.8 m, or 2.0 to 3.8 m. In one embodiment, the length $l_m$ is 0.5 m or more, or 0.75 m or more, or 1.0 m or more, or 2.0 m or more. In one embodiment, the length $l_m$ is 6.8 m or less, or 5.8 m or less, or 4.8 m or less, or 3.8 m or less.

In one embodiment, the middle part (311) has a width $w_m$ of 0.2 to 4.0 m, or 0.2 to 3.5 m, or 0.3 to 3.0 m, or 0.4 to 2.0 m, or 0.5 to 1.5 m, or 0.6 to 1.0 m. In one embodiment, the width $w_m$ is 0.2 m or more, or 0.3 m or more, or 0.4 m or more, or 0.5 m or more, or 0.6 m or more. In one embodiment, the width $w_m$ is 4.0 m or less, or 3.5 m or less, or 3.0 m or less, or 2.5 m or less, or 2.0 m or less, or 1.5 m or less, or 1.0 m or less. In alternative embodiments, the middle part (311) has a width $w_m$ of 0.2 to 8.0 m, or 0.2 to 7.0 m, or 0.3 to 6.0 m, or 0.4 to 5.0 m, or 0.5 to 4.0 m. In alternative embodiments, the width $w_m$ is 8.0 m or less, or 7.0 m or less, or 6.0 m or less, or 5.0 m or less, or 4.0 m or less.

The fining vessel (301) comprises a barrier element (313) arranged on the bottom (304), wherein the barrier element (313) has a length $l_w$, a width $w_w$ and a height $h_w$, wherein $l_m \geq 10 \times l_w$, wherein $w_m = w_w$, and $h_w \times w_w \geq 0.75 \times h_m \times w_m$, or $h_w \times w_w \geq 0.85 \times h_m \times w_m$, or $h_w \times w_w \geq 0.95 \times h_m \times w_m$. The barrier element (313) is arranged on the bottom (304) and has the same width as the middle part and a certain minimum but variable height. By virtue of said features - $h_w \times w_w \geq 0.75 \times h_m \times w_m$, or $h_w \times w_w \geq 0.85 \times h_m \times w_m$, or $h_w \times w_w \geq 0.95 \times h_m \times w_m$ - the barrier element (313) has a cross-section of 75% or more, or 85% or more, or 95% or more, with respect to the cross-section of the middle part before or after said barrier element (313). It has been surprisingly found that the presence of the barrier element has a beneficial effect on the fining of the glass melt because it creates a hindrance within the middle part of the fining vessel and thereby prevents and/or minimizes turbulent flows or backflows within the glass melt to be refined. The prevention and/or minimization of turbulent flows or backflows allows for an improvement in fining because emanating bubbles from the glass melt during the fining process can rise slowly and steadily without being mixed (back) into the glass melt. Additionally, it has been found by simulations that the glass melt volume vertically above the barrier element (313) is small enough in height so that small gas bubbles created through fining can efficiently leave the glass melt.

In one embodiment, the barrier element (313) has a length $l_w$ of 30 to 70 cm, or 40 to 60 cm, or 45 to 55 cm, or 4 to 10 cm or 6 to 8 cm. In one embodiment, the barrier element (313) has a width $w_w$ of 0.2 to 4.0 m, or 0.2 to 3.5 m, or 0.2 to 3.0 m, or 0.3 to 2.5 m, or 0.4 to 2.0 m, or 0.5 to 1.5 m, or 0.6 to 1.0 m. In one embodiment, the width $w_w$ is 0.2 m or more, or 0.3 m or more, or 0.4 m or more, or 0.5 m or more, or 0.6 m or more. In one embodiment, the width $w_w$ is 4.0 m or less, or 3.5 m or less, or 3.0 m or less, or 2.5 m or less, or 2.0 m or less, or 1.5 m or less, or 1.0 m or less. In one embodiment, the barrier element (313) has a height $h_w$ of 20 to 55 cm, or 25 to 50 cm, or 30 to 45 cm.

In one embodiment, the barrier element (313) has a length $l_w$ of 30 to 70 cm, and a height $h_w$ of 30 to 50 cm. In one embodiment, the barrier element (313) has a length $l_w$ of 45 to 55 cm, and a height $h_w$ of 20 to 50 cm. In one embodiment, the barrier element (313) has a length $l_w$ of 45 to 55 cm, and a height $h_w$ of 30 to 45 cm. In one embodiment, the barrier element (313) has a length $l_w$ of 30 to 70 cm, and a height $h_w$ of 20 to 55 cm. In one embodiment, the barrier element (313) has a length $l_w$ of 45 to 55 cm, and a height $h_w$ of 20 to 55 cm. In one embodiment, the barrier element (313) has a length $l_w$ of 45 to 55 cm, and a height $h_w$ of 30 to 45 cm.

In one embodiment, the barrier element (313) has a length $l_w$ of 4 to 10 cm or 6 to 8 cm, and a height $h_w$ of 20 to 50 cm, wherein the barrier element (313) comprises or consists of platinum, rhodium, molybdenum or iridium or alloys thereof. In one embodiment, the barrier element (313) has a length $l_w$ of 4 to 10 cm or 6 to 8 cm, and a height $h_w$ of 20 to 50 cm, wherein the barrier element (313) comprises a ceramic material which is covered with or shielded with platinum, rhodium, molybdenum or iridium or alloys thereof.

The optional barrier element (313) can be arranged in different sections within the middle part (311). As described here before the middle part (311) has a length $l_m$, which can be normalized to 0.0 to 1.0, with the understanding that the beginning, i.e., the point 0.0 is at the interface to the upstream part (309), and that the point 1.0 is at the interface to the downstream part (310).

Optionally the barrier element (313) is arranged in a section of the middle part (311) which belongs to a region between 0.8 and 1.0 $l_m$ along the length of the middle part (311), which has been found particularly advantageous because the barrier element provides a hindrance to the refined glass melt just before it flows over said barrier element and enters the downstream part (310) for further processing steps. This arrangement thus allows a steady fining process wherein bubbles can continuously rise to the surface of the glass melt and leave the glass melt without interfering flows. Said arrangement also provides that the emanating bubbles in the refined glass melt are given sufficient time to grow before they are forced out of the melt by virtue of the barrier element. Additionally, said arrangement allows cooling the glass as part of the method of this disclosure which is beneficial for the subsequent and final manufacturing steps of the glass melt and the glass.

In one embodiment, the barrier element (313) is arranged in a section of the middle part (311) which belongs to a region between 0.0 and 0.8 $l_m$ along the length of the middle part (311). In one embodiment, the barrier element (313) is arranged in a section of the middle part (311) which belongs to a region between 0.0 and 0.2 $l_m$ along the length of the middle part (311). The inventors have established that irrespective of the exact location of the barrier element within the middle part, the barrier element creates a hindrance within the glass flow of the fining vessel which thereby avoids turbulent flows or backflows which is beneficial for the fining process.

In one embodiment of the fining vessel, the barrier element (313) comprises means for air cooling or water cooling. The barrier element is exposed to hot glass melt at refining temperatures which constantly flows over the barrier element and makes it thus vulnerable to corrosion and mechanical degradation. The use of a refractory material minimises the potential corrosion of the barrier element. Means for air cooling or water cooling further provide that mechanical degradation of the barrier element is kept to a minimum.

In one embodiment, the fining vessel (301) comprises a ramp (315) arranged below a section of the middle part (311) which belongs to a region between 0.8 and 1.0 $l_m$ along the length of the middle part (311), wherein the ramp (315) has a constant slope, and/or wherein the ramp (315) has a height $h_r$ of 0.1 to 1.0 m with respect to the highest point of the ramp (315) and the lowest point of the ramp (315). The optional ramp helps establish and further contributes to a steady flow of the glass melt from the middle part into the downstream part which further improves the fining process. The constant slope of the ramp avoids trapping of parts of the glass melt and may also contribute to a laminar flow from the middle part into the downstream part.

In one embodiment, the ramp has a height $h_r$ of 0.1 to 1.0 m, or 0.2 to 0.9 m, or 0.3 to 0.8 m, or 0.4 to 0.7 m. In one embodiment, the ramp has a height $h_r$ of 0.1 m or more, or 0.2 m or more, or 0.3 m or more, or 0.4 m or more. In one embodiment, the ramp has a height $h_r$ of 1.0 m or less, or 0.9 m or less, or 0.8 m or less, or 0.7 m or less.

In one embodiment, the fining vessel (301) further has a superstructure (305), wherein the superstructure (305) covers the fining vessel (301).

In one embodiment, the fining vessel (301) is connected with an upper section from a riser duct (308) for feeding a glass melt into the middle part (311) and/or the fining vessel (301) is connected with a vertical duct (312) with downward flow for purging a refined glass melt from the middle part (311).

In one embodiment of the apparatus comprising the fining vessel (301), a riser duct (308) and a vertical duct (312), the riser duct (308) has a gaseous phase (306') above a surface (307') of a glass melt (302'), and the vertical duct (312) has a gaseous phase (306") above a surface (307") of the glass melt (302"), wherein the surface (307') of the glass melt (302') in the riser duct (308) is 20% or less than the combined surfaces (307, 307', 307") of the glass melt (302, 302', 302") in the middle part (311), the riser duct (308) and the vertical duct (312), or 10% or less. In one embodiment of the apparatus comprising the fining vessel (301), the riser duct (308) and the vertical duct (312), the surface (307") of the glass melt (302") in the vertical duct (312) is 20% or less than the combined surfaces (307, 307', 307") of the glass melt (302, 302', 302") in the middle part (311), the riser duct (308) and the vertical duct (312), or 10% or less. In one embodiment of the apparatus comprising the fining vessel (301), the riser duct (308) and the vertical duct (312), the surface (307) of the glass melt (302) in the middle part (311) is 60% or larger than the combined surfaces (307, 307', 307") of the glass melt (302, 302', 302") in the middle part (311), the riser duct (308) and the vertical duct (312), or 70% or larger, 80% or larger. It is of advantage that the surface of the glass melt (302) in the middle part (311) is larger than the surface (307') of the glass melt (302') in the riser duct (308). The surface (307') of the glass melt (302') in the riser duct (308) allows that gas bubbles larger than 500 $\mu$m may readily leave the glass melt. Equally, it is of advantage that the surface of the glass melt (302) in the middle part (311) is larger than the surface (307") of the glass melt (302") in the vertical duct (312). Said dimensional constraints provide for a sufficiently large surface (307) of the glass melt (302) in the middle part (311) from which gas bubbles with a diameter between 50 $\mu$m and 500 $\mu$m can emanate as a result of the fining process.

In one embodiment of the fining vessel (301), the riser duct (308) and the vertical duct (312), when in use, contribute to refining the glass melt (302', 302"). Whereas the glass melt has been (pre)heated in the riser duct (308), it is preferred to reach temperatures which provide for refining the glass melt (302') in the riser duct. The riser duct (308) does not have favorable spatial dimensions allowing smooth and short escape paths of the bubbles created through fining. It is advantageous to heat the glass melt to refining temperatures already in the riser duct (308) which effects that fining will take place in the fining vessel (301) across the entire middle part (311). Preheating the glass melt to refining temperatures also provides for a uniform temperature distribution within the glass melt once it has entered the middle part which effects homogenous and continuous bubble emanation from the glass melt. Whereas the refined glass melt (302) leaves the middle part (311) of the fining vessel (301) at elevated temperatures, it is preferred that the glass melt (302") temperature drops in the vertical duct (312) to terminate any fining processes. The decrease of the glass melt (302") temperature leads to a reduction of the partial pressure of gas species which result from fining. Gas bubbles smaller than 50 $\mu$m which have not left the glass melt (302") at that stage will be dissolved again in the vertical duct (312), so that the final glass melt (302") will be essentially bubble-free and may be fed into further downstream (conditioning) processes.

In one embodiment, the fining vessel (301) does not comprise a heating burner (314).

In one embodiment, the fining vessel (301) further comprises a heating burner (314) arranged above the bottom (304) at a height of at least 0.9 m above the deepest point of the bottom (304), wherein the heating burner (314) can optionally be heated with fuel gas. To reach sufficient temperatures for fining the glass melt (302), effective heating must be ensured which can optionally be effected in the gaseous phase (306).

In one embodiment, the heating burner (314) can be heated with a mixture of hydrogen and oxygen or with natural gas and oxygen or with a blend of natural gas and hydrogen with oxygen, or ammonia and oxygen, or biomethane or biofuel. In one embodiment, the heating burner (314) can be heated with a mixture of hydrogen and air, or with natural gas and air, or with a blend of natural gas and hydrogen with air.

In one embodiment, the heating burner (314) comprises six individual burners, or eight individual burners, or ten individual burners, which may be arranged in such a way to provide uniform heating within the fictitious top layer (318) of the glass melt (302) in the middle part of the fining vessel (301).

In one embodiment relating to the apparatus comprising the fining vessel (301) according to this disclosure and the riser duct (308), the apparatus comprises a heating burner (314), wherein the heating burner (314) comprises six individual burners, or eight individual burners, or ten individual burners, or twelve individual burners, wherein the individual burners are arranged in such a way that their areal density is higher above the riser duct (308) than above the middle part (311) of the fining vessel (301). The heating burner (314) comprising the individual burners is thus arranged in such a way to provide sufficient heating energy in the area above the riser duct (309) to support the rise of the temperature in the glass melt (302', 302) in preparation of fining.

In one embodiment, the fining vessel (301) comprises between 0.4 and 4.0 individual burners per square meter, or 0.7 and 3.5 individual burners per square meter, or 1.0 and 3.0 individual burners per square meter, or 1.5 and 2.5 individual burners per square meter, wherein the density of individual burners per square meter is calculated as the absolute number of individual burners divided by the area $A = l_m \times w_m$. In one embodiment, the fining vessel (301) comprises at least 0.4 individual burners per square meter, or at least 0.7 individual burners per square meter, or at least 1.0 individual burners per square meter, or at least 1.5 individual burners per square meter. In one embodiment, the fining vessel (301) comprises 4.0 or less individual burners per square meter, or 3.5 or less individual burners per square meter, or 3.0 or less individual burners per square meter, or 2.5 or less individual burners per square meter.

In one embodiment, the fining vessel (301) further comprises two or more heating circuits (316) each comprising at least one pair of electrodes (317). To reach sufficient temperatures for fining the glass melt (302), effective heating must be ensured which can optionally be created from within the glass melt by means of heating circuits (316). In one embodiment, one or more or all electrodes are rod-shaped, tube-shaped, block-shaped and/or plate-shaped.

In one embodiment, the electrodes are arranged in a vertical or a horizontal or an oblique orientation in or on the side walls (303) or arranged in a horizontal or a vertical or an oblique orientation in or on the bottom (304).

In one embodiment, the fining vessel (301) comprises four heating circuits (316) each comprising at least one pair of electrodes (317). In another embodiment, the fining vessel (301) comprises five or more heating circuits (316) each comprising at least one pair of electrodes (317). The heating circuits (316) may be arranged in such a way to provide uniform heating of the glass melt (302) in the middle part of the fining vessel (311). Advantageously, the two or more heating circuits (316) are arranged in a parallel manner in the middle part of the fining vessel having equal distance between the first heating circuit and the second heating circuit and the second heating circuit and, if present, the third heating circuit, and so forth.

Preferred embodiments of the vessel system

In one embodiment, the vessel system for producing and refining a glass melt comprises a melting vessel (101) for glass melting, a riser duct (201) and a fining vessel (301), wherein the melting vessel (101) has an area ratio between a bottom area and the opening (105) is between 1.2 and 3.0, wherein the bottom area is the sum of the areas of the first bottom wall (102a) and the opening (105), wherein the riser duct (201) has an outlet (208) having a width of 80 % - 110 % of an initial width of the fining vessel (203), wherein the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm.

In one embodiment, the vessel system for producing and refining a glass melt comprises a melting vessel (101) for glass melting, a riser duct (201) and a fining vessel (301), wherein the melting vessel (101) has an area ratio between a bottom area and the opening (105) is between 1.2 and 3.0, wherein the bottom area is the sum of the areas of the first bottom wall (102a) and the opening (105), wherein the riser duct (201) has an outlet (208) having a width of 80 % - 110 % of an initial width of the fining vessel (203), wherein the middle part (311) has a height $h_m$, wherein $h_m$ is at most 0.63 m, wherein the height $h_m$ refers to the vertical distance between a deepest point of the bottom (304) and the lowest height of the first side wall (303-1) or the second side wall (303-2).

In one embodiment, the vessel system for producing and refining a glass melt comprises a melting vessel (101) for glass melting, a riser duct (201) and a fining vessel (301), wherein the melting vessel (101) has an area ratio between a bottom area and the opening (105) is between 1.2 and 3.0, wherein the bottom area is the sum of the areas of the first bottom wall (102a) and the opening (105), wherein the riser duct (201) has an outlet (208) having a width of 80 % - 110 % of an initial width of the fining vessel (203), wherein the barrier element (313) is arranged in a section of the middle part (311) which belongs to a region between 0.8 and 1.0 $l_m$ along the length $l_m$ of the middle part (311), or the barrier element (313) is arranged in a section of the middle part (311) which belongs to a region between 0.0 and 0.2 $l_m$ along the length $l_m$ of the middle part (311).

In one embodiment, the vessel system for producing and refining a glass melt comprises a melting vessel (101) for glass melting, a riser duct (201) and a fining vessel (301), wherein the melting vessel (101) has an area ratio between a bottom area and the opening (105) is between 1.2 and 3.0, wherein the bottom area is the sum of the areas of the first bottom wall (102a) and the opening (105), wherein the riser duct (201) has an outlet (208) having a width of 80 % - 110 % of an initial width of the fining vessel (203), wherein the fining vessel (301) further comprising a ramp (315), wherein the ramp (315) has a height $h_r$ of 0.1 to 1.0 m with respect to the highest point of the ramp (315) and the lowest point of the ramp (315).

In one embodiment, the vessel system for producing and refining a glass melt comprises a riser duct (201) and a fining vessel (301), wherein the riser duct (201) has a lower electrode section (204) and an upper electrode section (205) which are each provided with one or more heating circuits (209) each comprising at least one pair of electrodes (210), wherein the fining vessel (301) is characterised by one or more of the following features:

- the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm,

- the middle part (311) has a height $h_m$, wherein $h_m$ is at most 0.63 m, wherein the height $h_m$ refers to the vertical distance between a deepest point of the bottom (304) and the lowest height of the first side wall (303-1) or the second side wall (303-2),

- the barrier element (313) is arranged in a section of the middle part (311) which belongs to a region between 0.8 and 1.0 $l_m$ along the length $l_m$ of the middle part (311), or the barrier element (313) is arranged in a section of the middle part (311) which belongs to a region between 0.0 and 0.2 $l_m$ along the length $l_m$ of the middle part (311),

- the fining vessel (301) further comprising a ramp (315), wherein the ramp (315) has a height $h_r$ of 0.1 to 1.0 m with respect to the highest point of the ramp (315) and the lowest point of the ramp (315).

In one embodiment, the vessel system for producing and refining a glass melt comprises a riser duct (201) and a fining vessel (301), wherein the riser duct (201) has a horizontal cross-section of the lower electrode section (204) has a smaller width than a horizontal cross-section of the upper electrode section (205), wherein the fining vessel (301) is characterised by one or more of the following features:

- the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm,

- the middle part (311) has a height $h_m$, wherein $h_m$ is at most 0.63 m, wherein the height $h_m$ refers to the vertical distance between a deepest point of the bottom (304) and the lowest height of the first side wall (303-1) or the second side wall (303-2),

- the barrier element (313) is arranged in a section of the middle part (311) which belongs to a region between 0.8 and 1.0 $l_m$ along the length $l_m$ of the middle part (311), or the barrier element (313) is arranged in a section of the middle part (311) which belongs to a region between 0.0 and 0.2 $l_m$ along the length $l_m$ of the middle part (311),

- the fining vessel (301) further comprising a ramp (315), wherein the ramp (315) has a height $h_r$ of 0.1 to 1.0 m with respect to the highest point of the ramp (315) and the lowest point of the ramp (315).

In one embodiment, the vessel system for producing and refining a glass melt comprises a riser duct (201) and a fining vessel (301), wherein the riser duct (201) has between the lower electrode section (204) and the upper electrode section (205) one or more middle electrode sections (211) are arranged, wherein each of the one or more middle electrode sections (211) comprises one or more heating circuits (209) each comprising at least one pair of electrodes (210) and wherein a horizontal cross-section of each middle electrode section (211) has a larger width than that of the section directly upstream of said section and a smaller width than that of the section directly downstream of said section, wherein the fining vessel (301) is characterised by one or more of the following features:

- the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm,

- the middle part (311) has a height $h_m$, wherein $h_m$ is at most 0.63 m, wherein the height $h_m$ refers to the vertical distance between a deepest point of the bottom (304) and the lowest height of the first side wall (303-1) or the second side wall (303-2),

- the barrier element (313) is arranged in a section of the middle part (311) which belongs to a region between 0.8 and 1.0 $l_m$ along the length $l_m$ of the middle part (311), or the barrier element (313) is arranged in a section of the middle part (311) which belongs to a region between 0.0 and 0.2 $l_m$ along the length $l_m$ of the middle part (311),

- the fining vessel (301) further comprising a ramp (315), wherein the ramp (315) has a height $h_r$ of 0.1 to 1.0 m with respect to the highest point of the ramp (315) and the lowest point of the ramp (315).

In one embodiment, the vessel system for producing and refining a glass melt comprises a riser duct (201) and a fining vessel (301), wherein the riser duct (201) has an outlet (208) having a width of 80 % - 110 % of an initial width of the fining vessel (203), wherein the fining vessel (301) is characterised by one or more of the following features:

- the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm,

- the middle part (311) has a height $h_m$, wherein $h_m$ is at most 0.63 m, wherein the height $h_m$ refers to the vertical distance between a deepest point of the bottom (304) and the lowest height of the first side wall (303-1) or the second side wall (303-2),

- the barrier element (313) is arranged in a section of the middle part (311) which belongs to a region between 0.8 and 1.0 $l_m$ along the length $l_m$ of the middle part (311), or the barrier element (313) is arranged in a section of the middle part (311) which belongs to a region between 0.0 and 0.2 $l_m$ along the length $l_m$ of the middle part (311),

- the fining vessel (301) further comprising a ramp (315), wherein the ramp (315) has a height $h_r$ of 0.1 to 1.0 m with respect to the highest point of the ramp (315) and the lowest point of the ramp (315).

In one embodiment, the vessel system for producing and refining a glass melt comprises a riser duct (201) and a fining vessel (301), wherein the riser duct (201) has a width of the horizontal cross-sections of the lower electrode section (204), middle electrode sections (211), and/or upper electrode section (205) which changes continuously or discontinuously along a height of the riser duct (201) or which is essentially constant, wherein the fining vessel (301) is characterised by one or more of the following features:

- the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm,

- the middle part (311) has a height $h_m$, wherein $h_m$ is at most 0.63 m, wherein the height $h_m$ refers to the vertical distance between a deepest point of the bottom (304) and the lowest height of the first side wall (303-1) or the second side wall (303-2),

- the barrier element (313) is arranged in a section of the middle part (311) which belongs to a region between 0.8 and 1.0 $l_m$ along the length $l_m$ of the middle part (311), or the barrier element (313) is arranged in a section of the middle part (311) which belongs to a region between 0.0 and 0.2 $l_m$ along the length $l_m$ of the middle part (311),

- the fining vessel (301) further comprising a ramp (315), wherein the ramp (315) has a height $h_r$ of 0.1 to 1.0 m with respect to the highest point of the ramp (315) and the lowest point of the ramp (315).

In one embodiment, the vessel system for producing and refining a glass melt comprises a riser duct (201) and a fining vessel (301), wherein the riser duct (201) has a width $w_f$ of the horizontal cross-section of the flow duct (206) and a width $w_l$ of the horizontal cross-section of the lower electrode section (204) are dimensioned $w_f \leq w_l$, wherein the fining vessel (301) is characterised by one or more of the following features:

- the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm,

- the middle part (311) has a height $h_m$, wherein $h_m$ is at most 0.63 m, wherein the height $h_m$ refers to the vertical distance between a deepest point of the bottom (304) and the lowest height of the first side wall (303-1) or the second side wall (303-2),

- the barrier element (313) is arranged in a section of the middle part (311) which belongs to a region between 0.8 and 1.0 $l_m$ along the length $l_m$ of the middle part (311), or the barrier element (313) is arranged in a section of the middle part (311) which belongs to a region between 0.0 and 0.2 $l_m$ along the length $l_m$ of the middle part (311),

- the fining vessel (301) further comprising a ramp (315), wherein the ramp (315) has a height $h_r$ of 0.1 to 1.0 m with respect to the highest point of the ramp (315) and the lowest point of the ramp (315).

**Method for making and refining a glass melt**

In one aspect, this disclosure relates to a method for producing and refining a glass melt, comprising the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt.

In one aspect, this disclosure relates to a method for producing and refining a glass melt, comprising the steps of

- feeding a glass melt (120, 207) from a melting vessel (101) to a flow duct (206) of a riser duct (201), and

- feeding the glass melt (120, 207) from an outlet (208) into a fining vessel (203), and

- obtaining a refined glass melt.

In one embodiment, the carbon dioxide footprint of the glass melt is less than 500 g $CO_2$ per kg of glass. In another embodiment, the carbon dioxide footprint of the refined glass melt is less than 400 g, less than 300 g, less than 200 g, less than 100 g or even 0 g of $CO_2$ per kg of glass. For example, a glass melt having a carbon dioxide footprint of zero can be made using energy from renewable sources only, e.g., biofuel, hydrogen, or electricity from renewable sources. The carbon dioxide footprint refers to the $CO_2$ emissions resulting from scope 1 emissions according to the GHG protocol. In this context, this refers to the amount of $CO_2$ emission caused by burning fossil fuels and released by carbon containing raw materials during manufacturing of the glass melt per kg of glass material.

Melting, heating and processing

In one embodiment, making a glass melt (120) comprises the steps of

- melting a batch of raw materials to form a glass melt (120) in a melting vessel (101),

- heating the batch and/or the glass melt (120) using two or more heating circuits in the melting vessel (101),

- optionally withdrawing the glass melt (120) from the melting vessel (101).

In one embodiment, making a glass melt (120) comprises the steps of

- melting a batch of raw materials to form a glass melt (120) in a melting section (101a) of a melting vessel (101), the melting section (101a) having a first height (106a),

- heating the batch and/or the glass melt (120) using two or more heating circuits in the melting section (101a) of the melting vessel (101), wherein the melting section (101a) has a first bottom wall (102a) and a first wall (103a) surrounding a first volume (104a), the first bottom wall (102a) having an opening (105),

- processing the glass melt (120) in a conditioning section (101b) of the melting vessel (101), wherein the conditioning section (101b) is below the melting section (101a), the conditioning section (101b) having a second height (106b), wherein the conditioning section (101b) has a second bottom wall (102b) and a second wall (103b) surrounding a second volume (104b),

- optionally withdrawing the glass melt (120) from the melting vessel (101),

wherein an average temperature of the glass melt (120) in the melting section (101a) is at least 10 K higher, or at least 30 K higher, or at least 50 K higher, than an average temperature of the glass melt (120) in the conditioning section (101b).
In one embodiment, the average temperature of the glass melt (120) in the melting section (101a) is measured using at least two melting temperature probes (119a-i, 119a-ii) located at opposite positions to each other on a first wall (103a) of the melting section (101a), and the average temperature of the glass melt (120) in the conditioning section (101b) is measured using at least two conditioning temperature probes (119b-i, 119b-ii) located at opposite positions to each other on a second wall (103b) of the conditioning section (101b), wherein the at least two melting temperature probes (119a-i, 119a-ii) and the at least two conditioning temperature probes (119b-i, 119b-ii) extend 5.0 cm into the glass melt, wherein the at least two melting temperature probes (119a-i, 119a-ii) are arranged at a height which is equal to half of the first height (106a) with respect to the first bottom wall (102a), and wherein the at least two conditioning temperature probes (119b-i, 119b-ii) are arranged at a height which is equal to half of the second height (106b) with respect to the second bottom wall (102b).
Making a glass melt may advantageously be carried out in the melting vessel according to this disclosure having a melting section (101a) and a conditioning section (101b). In line with the definition of a glass melt the batch of raw materials needs to be molten and heated to a temperature to achieve a viscosity of less than $10^{7.6}$ dPas, preferably less than $10^4$ dPas, which requirement applies to both the melting section (101a) and the conditioning section (101b). The two or more heating circuits in the melting section (101a) of the melting vessel (101) allow heating and melting the batch of raw materials and provide for forming an initial glass melt. The method is performed in a continuous manner. Whereas the batch of raw materials may be fed from a top part or a side part, the initial glass melt forms and gathers towards a lower or bottom part of the melting section (101a). In a subsequent step, the glass melt (120) is transferred to and processed in a conditioning section (101b) of the melting vessel (101), wherein the conditioning section (101b) is arranged below the melting section (101a).
An average temperature of the glass melt (120) in the melting section (101a) is at least 10 K higher, or at least 30 K higher, or at least 50 K higher, than an average temperature of the glass melt (120) in the conditioning section (101b). Said temperature difference allows forming a sufficiently uniform and homogeneous glass melt in the melting section (101a) out of the batch of raw materials. In a subsequent process in the conditioning section (101b) the initially generated glass melt is allowed to mature at a decreased temperature which leads to a more uniform and more homogeneous glass melt which may be already free of unwanted relicts. In a further process step, the glass melt (120) is withdrawn from the melting vessel (101) and may be further transferred, e.g., via a flow duct (206) of a riser duct (201), and treated, for example in a fining vessel.

The process temperature is measured in both the melting section (101a) and the conditioning section (101b) using at least two temperature probes in each section (119a-i, 119a-ii, 119b-i, 119b-ii). Optionally, the two melting temperature probes (119a-i, 119a-ii) in the melting section (101a) may be attached to the first bottom wall (102a). Optionally, the two conditioning temperature probes (119b-i, 119b-ii) in the conditioning section (101b) may be attached to the second bottom wall (102b). The two temperature probes in each section are arranged at such a height level to allow measurement of the glass melt temperature in a middle layer of the melting section (101a) and the conditioning section (101b), respectively, when viewed from a side. Using said arrangement of the at least two temperature probes in each section gives access to an average temperature of the glass melt by virtue of convectional flows and heat distribution under the constraint of typical process times.

In one embodiment of the method, an average temperature in a top layer of the glass melt (120) in the melting section (101a) is at least 10 K lower, or at least 20 K lower, or at least 30 K lower than an average temperature of the glass melt (120) in the melting section (101a), wherein the top layer refers to a glass melt portion with a height of 10 cm of the first volume (104a). In one embodiment, the average temperature of the top layer of the glass melt (120) in the melting section (101a) is measured using at least two temperature probes located at opposite positions to each other on the first wall (103a) of the melting section (101a) and at a height which is in the middle of the top layer.

The top layer of the glass melt (120) is thus partially colder than the entire glass melt (120) in the melting section (101a) which for example results from feeding the batch of raw materials into the melting section (101a). Although the batch of raw materials is preheated, naturally it does not yet have the process temperatures required for melting. The fact that the average temperature in the top layer of the glass melt (120) is lower than the average temperature of the entire glass melt (120) in the melting section (101a), is referred to as "cold top".

In one embodiment of the method, a convectional flow is established in the melting section (101a), optionally by regulating a heat flow of the batch and/or the glass melt (120) using the two or more heating circuits in the melting section (101a) of the melting vessel (101). Convectional flows help establish intermixing of the components of the batch of raw materials and may thus provide a sufficiently uniform and a sufficiently homogeneous glass melt.

In one embodiment of the method, a uniform flow is established in the conditioning section (101b), optionally by regulating a heat flow of the glass melt (120) using the two or more heating circuits in the melting section (101a) of the melting vessel (101). The glass melt (120) passes through the opening (105) from the melting section (101a) into the conditioning section (101b) which means that the glass flows in both sections are coupled and/or correlated with each other. Optionally, heat flow of the glass melt in the melting section (101a) can be regulated such that a uniform flow is established in the conditioning section (101b). It is advantageous to generate a uniform downward flow, which may take the form of a plug-flow or laminar flow, or any complex shaped flow, proceeding from the opening (105) towards the second bottom wall (102b). In the melting section (101a) strong convectional currents are created by sufficient heating power of the heating circuits to form a glass melt. These convectional currents may be visualized as a donut shape which rise upwards in the vicinity of the first wall (103a), where the electrodes are located, move to the central part of the top layer of the glass melt or conglomerate and fall downwards in the vicinity of the vertical axis which forms the rotational axis of the melting section (101a). The glass melt zone which falls downward may to some extent reach into the conditioning section (101b). The actual position and strength of the glass melt zone which falls downward may be controlled by the power supply to the heating circuits arranged in the melting section (101a). Advantageously, the said glass melt zone which falls downward, and which may reach into the conditioning section (101b) shall be created distant from the outlet.

It is advantageous to create a stratified and slow flow in the conditioning section (101b) towards the outlet by running the heating circuits in the conditioning section (101b) in such a way that no strong convection currents are generated. The glass melt may then be transferred to a riser duct via a flow channel. The minimization and/or avoidance of convection currents in the conditioning section (101b) also provides for an advantageous minimum residence time of the glass melt therein, which thus ensures that the glass melt is free of relics and has few remaining bubbles before further transfer and processing of the glass melt in the fining vessel.

In one embodiment of the method, the uniform flow in the conditioning section (101b), which proceeds from the opening (105) towards the second bottom wall (102b), has a maximal velocity of 100 mm/min or less, 50 mm/min or less, or 30 mm/min or less. In one embodiment of the method, the maximal velocity of the uniform flow in the conditioning section (101b) is 1 mm/min or more, or 5 mm/min or more, or 10 mm/min or more. In one embodiment, the maximal velocity of the uniform flow in the conditioning section (101b) is 1 to 100 mm/min, or 5 to 50 mm/min, or 10 to 30 mm/min. In this disclosure, a uniform downward flow may take the form of a plug-flow or a laminar flow which means that the velocity profile of the flow through any cross-section parallel to the opening may be, respectively, flat (plug-flow) or parabolic (laminar flow). Alternatively, a complex shaped flow may have an irregular velocity profile. In any case, the maximal velocity thus refers to the global maximum of the flow velocity across the velocity profile. The maximal velocity may be determined with suitable tracer compounds added to the glass melt.

In one embodiment of the method, there is essentially no back-feeding from the glass melt (120) in the conditioning section (101b) into the glass melt in the melting section (101a). Advantageously, the method avoids turbulent flow. After the glass melt is generated in the melting section (101a) the glass flow adopts a uniform flow profile when entering the conditioning section (101b) and proceeds downwards. While passing the conditioning section the glass melt matures. Intermixing with parts of the glass melt from the melting section is thus avoided by virtue of the uniform flow profile.

The heat flow of the glass melt (120) in the melting section (101a) can be regulated in such a way that a convectional flow is generated towards the opening (105) which then proceeds in the form of a plug-flow or laminar flow from the opening (105) towards the second bottom wall (102b). Both plug-flow and laminar flow are directional and inherently avoid any back-feeding from the glass melt in the conditioning section into the melting section. In contrast, the creation of turbulent flows would generate such unwanted back-feeding of the glass melt.

In one embodiment of the method, a ratio between the glass throughput and a bottom area is at least 1.5 $t/(d\cdot m^2)$, or at least 1.7 $t(d\cdot m^2)$, or at least 2.0 $t/(d\cdot m^2)$, wherein the bottom area is the sum of the areas of the first bottom wall (102a) and the opening (105). In one embodiment, a ratio between the glass throughput and a bottom area is 6.0 $t/(d\cdot m^2)$ or less, or 5.0 $t/(d\cdot m^2)$ or less, or 4.0 $t/(d\cdot m^2)$ or less. In one embodiment, a ratio between the glass throughput and a bottom area is 1.5 to 6.0 $t/(d\cdot m^2)$, or 1.7 to 5.0 $t/(d\cdot m^2)$, or 2.0 to 4.0 $t/(d\cdot m^2)$.

In one embodiment of the method, a ratio between the glass throughput $[m^3/d]$ and the second volume (104b) is at least 0.3 $d^{-1}$, or at least 0.5 $d^{-1}$. In one embodiment of the method, a ratio between the glass throughput $[m^3/d]$ and the second volume (104b) is 2.0 $d^{-1}$ or less, or 1.2 $d^{-1}$ or less. In one embodiment of the method, a ratio between the glass throughput $[m^3/d]$ and the second volume (104b) is 0.3 to 2.0 $d^{-1}$, or 0.5 to 1.2 $d^{-1}$.

Advantageously, the glass throughput is established and controlled in such a way that melting and heating of the batch of raw materials is provided to obtain a sufficiently uniform and sufficiently homogenous glass melt in the melting section which is then processed further in the conditioning section. By virtue of the geometric constraints of the melting section and the conditioning section with respect to each other, subsequent maturation steps of the glass melt in the conditioning section which provides for a lower average process temperature, compared to the average temperature in the melting section, can be steered. Depending on the glass type, it may be beneficial to adjust the ratio of the first volume (104a) to the second volume (104b).

In one embodiment of the method, an area ratio between the bottom area and the opening (105) is between 1.2 and 3.0, or between 1.5 and 3.0, or between 1.75 and 2.75, or between 2.0 and 2.5, wherein the bottom area is the sum of the areas of the first bottom wall (102a) and the opening (105). In one embodiment the area ratio between the bottom area and the opening (105) is 1.2 or more, or 1.5 or more, or 1.75 or more, or 2.0 or more. In one embodiment the area ratio between the bottom area and the opening (105) is 3.0 or less, or 2.75 or less, or 2.5 or less. Without wishing to be bound to theory, said geometrical arrangement connecting the bottom area and the opening provides for a funneling effect of the glass melt upon transfer from the melting section (101a) into the conditioning section (101b) which aids and is beneficial for providing a homogenous glass melt in the conditioning section which is preferably free from "relicts" possibly originating the batch of raw materials.

In one embodiment, the glass melt (120) has a minimum dwell time of at least 2.0 hours, or at least 3.0 hours, or at least 4.0 hours in the melting section (101a). In one embodiment, the glass melt (120) has a minimum dwell time of 10.0 hours or less, or 9.0 hours or less, or 8.0 hours or less in the melting section (101a). In one embodiment of the method, the glass melt (120) has a minimum dwell time of 2.0 to 10.0 hours, or 3.0 to 9.0 hours, or 4.0 to 8.0 hours in the melting section (101a).

In one embodiment of the method, the glass melt (120) has a minimum dwell time of at least 2.0 hours, or at least 3.0 hours, or at least 4.0 hours in the conditioning section (101b). In one embodiment, the glass melt (120) has a minimum dwell time of 9.0 hours or less, or 8.0 hours or less, or 7.0 hours or less in the conditioning section (101b). In one embodiment, the glass melt (120) has a minimum dwell time of 2.0 to 9.0 hours, or 3.0 to 8.0 hours, or 4.0 to 7.0 hours in the conditioning section (101b).

In one embodiment of the method, the glass melt (120) has a minimum dwell time of at least 4.0 hours, or at least 5.0 hours, or at least 6.0 hours in the melting vessel (101). In one embodiment, the glass melt (120) has a minimum dwell time of 19.0 hours or less, or 17.0 hours or less, or 15.0 hours or less in the melting vessel (101). In one embodiment, the glass melt (120) has a minimum dwell time of 4.0 to 19.0 hours, or 5.0 to 17.0 hours, or 6.0 to 15.0 hours in the melting vessel (101).

In one embodiment of the method, the glass melt (120) has an average dwell time of at least 20.0 hours, or at least 24.0 hours, or at least 28.0 hours in the melting section (101a). In one embodiment, the glass melt (120) has an average dwell time of 50.0 hours or less, or 45.0 hours or less, or 40.0 hours or less in the melting section (101a). In one embodiment, the glass melt (120) has an average dwell time of 20.0 to 50.0 hours, or 24.0 to 45.0 hours, or 28.0 to 40.0 hours in the melting section (101a).

In one embodiment of the method, the glass melt (120) has an average dwell time of at least 10.0 hours, or at least 12.0 hours, or at least 14.0 hours in the conditioning section (101b). In one embodiment, the glass melt (120) has an average dwell time of 40.0 hours or less, or 35.0 hours or less, or 30.0 hours or less in the conditioning section (101b). In one embodiment, the glass melt (120) has an average dwell time of 10.0 to 40.0 hours, or 12.0 to 35.0 hours, or 14.0 to 30.0 hours in the conditioning section (101b).

In one embodiment of the method, the glass melt (120) has an average dwell time of at least 30.0 hours, or at least 35.0 hours, or at least 45.0 hours, or at least 55.0 hours in the melting vessel (101). In one embodiment, the glass melt (120) has an average dwell time of 90.0 hours or less, or 80.0 hours or less, or 70.0 hours or less in the melting vessel (101). In one embodiment, the glass melt (120) has an average dwell time of 30.0 to 90.0 hours, or 35.0 to 80.0 hours, or 45.0 to 70.0 hours in the melting vessel (101).

In one embodiment of the method, melting a batch of raw materials to form a glass melt (120) and/or heating the batch and/or the glass melt relies exclusively, i.e., to more than 99% (v/v) relative to the total volume of hydrogen and oxygen, on hydrogen and oxygen generated through the electrolysis of $H_2O$. Electrolysis powered through renewable energy inherently provides for a reduction of the environmental burden and a reduction of the carbon dioxide footprint associated with methods of making a glass melt. Alternatively, electrolysis can be powered through nuclear energy which provides for a $CO_2$-neutral production of hydrogen. However, because of the radioactive waste this energy source is not sustainable.

Transferring the melt

In one embodiment, the method (for fining a glass melt) comprises feeding a glass melt from a melting vessel to a flow duct of a riser duct, and feeding the glass melt from an outlet into a fining vessel, wherein the glass melt is heated in the riser duct such that an average temperature of the glass melt on exit of the riser duct is < 50 °C or < 30 °C or < 10 °C below an average temperature of the glass melt in the fining vessel. As mentioned above, the average temperature of the glass melt on exit of the riser duct should be chosen such that the bubble growth of the fining action starts already within the riser duct. Optionally, the temperature increasing rate may be set low and continuous to avoid a sharp stepwise temperature increase which can cause an unwanted creation of new bubbles.

In embodiments, the glass melt may be heated in the riser duct such that a viscosity of the glass melt on exit of the riser duct is < $10^2$ dPas or < $10^{2.5}$ dPas or < $10^3$ dPas.

In embodiments, the glass melt may be heated in the riser duct in a lower electrode section and an upper electrode section by means of heating circuits and optionally by additional heaters provided in a gaseous phase above the upper electrode section such that a power density $P_{total, upper}$ provided by the heating circuits and any additional heaters comprising the sum of an electrical power density $P_{el, upper}$ provided by the heating circuits of the upper electrode section and a power density $P_{add}$ provided by the additional heaters is higher than an electrical power density $P_{el, lower}$ of the lower electrode section. The main part of the energy required to heat the glass melt close to the fining temperature is supplied to the upper part of the riser duct. Since any additional heaters, be it microwave heaters, infrared heaters, or burners, installed above the surface of the glass melt will only be able to heat to a quite limited depth of the melt, their provided power is considered in combination with the upper electrode section only.

The electrical power density provided in sum by the heating circuits of the upper electrode section may for example be 30 kW/m³ or 34 kW/m³ or 38 kW/m³ or 42 kW/m³ or 48 kW/m³ or 50 kW/m³, in particular in a range of from 30 kW/m³ to 50 kW/m³ or from 34 kW/m³ to 48 kW/m³ or from 38 kW/m³ to 42 kW/m³. The sum of the electrical power density provided by the heating circuits of the lower electrode section may for example be 70 kW/m³ or 70 kW/m³ or 80 kW/m³ or 90 kW/m³ or 100 kW/m³ or 110 kW/m³ or 120 kW/m³, in particular in a range of from 70 kW/m³ to 120 kW/m³ or from 80 kW/m³ to 110 kW/m³ or from 90 kW/m³ to 100 kW/m³. A ratio between the electrical power density provided by the heating circuits of the upper electrode section to the electrical power density provided by the heating circuits of the lower electrode section may for example be 1 : 1.9 or 1 : 2.0 or 1 : 2.1 or 1 : 2.2 or 1 : 2.3 or 1 : 2.4 or 1 : 2.5.

In embodiments, the power density providable or provided by all additional heaters to the riser duct may for example be 50 kW/m³ or 55 kW/m³ or 60 kW/m³ or 65 kW/m³ or 70 kW/m³ or 75 kW/m³ or 80 kW/m³, in particular in a range of from 50 kW/m³ to 80 kW/m³ or from 55 kW/m³ to 75 kW/m³ or from 60 kW/m³ to 70 kW/m³. In optional embodiments, the power density providable or provided by all additional heaters to the riser duct may for example be less than 50 kW/m³ or less than 40 kW/m³ or less than 30 kW/m³ or less than 20 kW/m³ or less than 10 kW/m³ or less than 5 kW/m³ or less than 1 kW/m³. In further optional embodiments, there are no additional heaters provided.

In embodiments, the total power density $P_{total, upper}$ providable or provided by the heating circuits of the upper electrode section and by all additional heaters to the riser duct may for example be 50 kW/m³ or 60 kW/m³ or 70 kW/m³ or 80 kW/m³ or 90 kW/m³ or 100 kW/m³ or 110 kW/m³ or 120 kW/m³ or 130 kW/m³, in particular in a range of from 50 kW/m³ to 130 kW/m³ or from 60 kW/m³ to 120 kW/m³ or from 70 kW/m³ to 110 kW/m³ or from 80 kW/m³ to 100 kW/m³.

In embodiments, the total electrical power density provided by all heating circuits to the riser duct may for example be 30 kW/m³ or 40 kW/m³ or 50 kW/m³ or 60 kW/m³ or 70 kW/m³ or 80 kW/m³, in particular in a range of from 30 kW/m³ to 80 kW/m³ or from 40 kW/m³ to 70 kW/m³ or from 50 kW/m³ to 60 kW/m³.

In embodiments, a ratio of the total power input [kW] of all heating circuits of the riser duct to the mass throughput per day [t/d] may for example be 120 kW/(t/d) or 140 kW/(t/d) or 160 kW/(t/d) or 180 kW/(t/d) or 200 kW/(t/d) or 220 kW/(t/d), in particular in a range of from 120 kW/(t/d) to 220 kW/(t/d) or 140 kW/(t/d) to 200 kW/(t/d) or 160 kW/(t/d) to 180 kW/(t/d).

In embodiments, a mean volumetric pass-through time through the riser duct may be > 3 h or > 5 h or > 7 h or > 8 h. The mean volumetric pass-through time may be < 50 h or < 40 h or < 30 h. The mean volumetric pass-through time through the riser duct should not be too short as this is an indicator for the time available for heating the glass melt close to the required temperature for fining. If the available time is very short, the power input into the melt by the electrodes has to be higher which will then cause a higher wear of the electrodes by electro-corrosion. And another risk would be that there is a creation of new bubbles which should be avoided.

In embodiments, an average temperature of the glass melt on entry into the riser duct may be < 50 °C or < 100 °C or < 150 °C below the average temperature of the glass melt in the fining vessel.

In embodiments, on entry into the riser duct, the glass melt may have a viscosity of < 10² dPas or < 10^{2.5} dPas or < 10³ dPas or < 10⁴ dPas.

In embodiments, a shortest dwell time of the glass melt in the riser duct may be > 2.0 h or > 3.0 h or > 4.0 h. The shortest dwell time may be < 40 h or < 30 h or < 20 h. The shortest dwell time should not be too short because it may be an indicator for a non-uniform flow comprising a fast core flow and larger dead zones.

In embodiments, the heating in the riser duct may be effected such that at least in the upper 50 % of its height or at least in the upper 75 % of its height or at least in the upper 90 % of its height essentially a plug flow of the glass melt is created. The term "plug flow" is used here in the sense of fluid mechanics as a flow in a pipe having a velocity profile which is constant across any cross-section of the pipe perpendicular to the axis of the pipe and having no back mixing. The term "essential" denotes that this theoretical velocity profile is approximated by a real laminar pipe flow with a parabolic velocity profile. A plug flow or laminar flow is beneficial for the throughput of the riser duct as well as for a uniform heating of the flowing melt. Turbulent flow in the glass melt may result in the creation of more dead zones or vortices trapping portions of the melt for prolonged periods.

In embodiments, the riser duct used in the method may be a riser duct as described above.

The disclosed riser duct may be particularly advantageous when used in a fining apparatus upstream of a fining vessel having a vertical duct on its downstream end for purging a refined glass melt. Typical configurations of such a fining apparatus may fine an amount of glass melt in a range of from 40 t/d to 55 t/d, or even 35 t/d to 70 t/d. Such a fining apparatus is perfectly suitable for melting special purpose glasses requiring high quality standards and an extremely low level of bubbles. In such a combination, the outlet of the riser duct may seamlessly continue into the fining section of the fining vessel. Fining apparatus of prior art will not be able to perform the fining action as described hereafter with the same efficiency due to the strong circular flow patterns in the fining tanks.

The glass melt entering from the glass melting vessel into the riser duct can be heated within the riser duct to an average temperature of the glass melt on exit of the riser duct which is < 50 °C or < 30 °C or < 10 °C below an average temperature of the glass melt in the fining vessel. For example, depending on the type of glass, the temperature of the glass melt in the outlet may be at least T2 - 150 °C or at least T2 - 50 °C or even T2. It may also be contemplated to set the temperature such that the growth of bubbles starts already in a layer close to the surface of the glass melt in the riser duct. Redox reaction based fining agents, such as As₂O₃, or evaporation based fining agents, such as chlorine, will increase the respective partial pressure within the glass melt and cause an increase of the bubble size. Bubbles with a size of more than 500 μm will then leave the glass melt through the surface already within the outlet.

Medium sized bubbles of a size in a range from 50 μm to 500 μm will require the geometry and temperature of the fining vessel which is preferably a so-called flat-bed refining vessel whose middle part where fining takes place has a maximal working height of the glass melt of at most 0.6 m. Important parameters for the efficient rise of these bubbles and exit through the surface of the glass melt are a sufficient dwell time and a sufficient temperature as well as the free surface area of the glass melt.

To facilitate removal of the bubbles from the glass melt, the fining vessel may be provided with a barrier element arranged on the bottom of its middle part which forces the smaller bubbles to rise closer to the surface. Most advantageously, such a barrier element is placed near the end of the fining vessel as this allows the bubbles the longest time to grow before they are forced to the surface. The fining vessel may also have an optional ramp which is intended to let the glass melt flow downwards to the vertical duct after fining of said glass melt.

In the vertical duct through which the glass melt exits the fining vessel, the melt is cooled which causes a decrease in the partial pressure in the melt. The temperature may, for example, be reduced here to T2 - 50 °C. Further, an increase in the total pressure of the melt will occur due to the rising glass level. The bubbles having a size of smaller than 50 μm which have not yet emanated from the glass melt will then be dissolved within the vertical duct. Hence, the glass melt will exit the fining apparatus free from bubbles.

As to the free surface area within the fining apparatus, it has been found that in the riser duct, a free surface area may be desirable only at the end of the heating process whereas in the middle part of the fining vessel a very large free surface area is required. Within the vertical duct, a free surface area will have no more effect. Hence, the following distribution of the total free surface area within the fining apparatus has been found to provide most favorable results.

- riser duct < 20 % optionally < 10 %

- middle part of the fining vessel > 60 % optionally > 70 % or > 80 %

- vertical duct < 20 % optionally < 10 %

Regarding the dwell times of the glass melt within the sections of the fining apparatus, the following times have been found to be advantageous.

- riser duct > 2.0 h optionally > 3.0 h or > 4.0 h

- middle part of the fining vessel > 2.5 h optionally > 3.0 h or > 3.5 h

- vertical duct > 2.0 h optionally > 3.0 h

The dwell times or the shortest dwell times, respectively, are a very important factor to watch because the volume fraction of the glass melt leaving the fining apparatus at first will be decisive for the quality of the produced glass. The growth of the bubbles is essential for the effective rise in the melt because larger bubbles will rise faster. This growth is limited by the kinetics and, hence, requires sufficient time. Consequently, the longer the shortest dwell time, the more efficient the fining action will be.

In one embodiment, heating the glass melt by means of a burner relies exclusively, i.e., to more than 99 % (v/v) relative to the total volume of hydrogen and oxygen, on hydrogen and oxygen generated through the electrolysis of $H_2O$. Electrolysis powered through renewable energy inherently provides for a reduction of the environmental burden and a reduction of the carbon dioxide footprint associated with methods of making a glass melt. Alternatively, electrolysis can be powered through nuclear energy which provides for a $CC_2$-neutral production of hydrogen. However, because of the radioactive waste this energy source is not sustainable.

Fining

In one embodiment, the method for refining a glass melt comprises the steps of

- providing a glass melt (302),

- feeding the glass melt into a fining vessel (301), optionally from an outlet (208) of a riser duct (201), and

- obtaining a refined glass melt.

In one embodiment of the method, the fining vessel (301) comprises a barrier element (313) arranged on the bottom (304), wherein the barrier element (313) extends from the first side wall to the second side wall and has a height $h_w$, wherein the height $h_w$ is the vertical distance between the deepest point of the bottom (304) and the highest height of the barrier element (313), wherein $h_w \geq 20$ cm.

In one embodiment of the method, the glass melt (302) in the fining vessel (301) has a working height $h_{melt}$ of at least 0.35 m, wherein $h_{melt}$ is at most 0.6 m.

In one embodiment, the method for refining a glass melt comprises the steps of

- providing a glass melt (302),

- feeding the glass melt into a fining vessel (301), optionally from an outlet (208) of a riser duct (201), and

- obtaining a refined glass melt,

  wherein the fining vessel (301) has a first side wall (303-1), a second side wall (303-2), a bottom (304) and an optional ramp (315), the fining vessel (301) having a middle part (311),

wherein the fining vessel (301) is connectable to an optional upstream part (309) for receiving the glass melt (302'), and wherein the fining vessel (301) is connectable to an optional downstream part (310) for purging a refined glass melt, wherein the optional upstream part (309), the middle part (311), the optional ramp (315) and the optional downstream part (310) are arrangeable or arranged in this consecutive order,

wherein the middle part (311) has a width $w_m$, wherein the width $w_m$ is the shortest distance between the first side wall (303-1) and the second side wall (303-2) at a height of 30 cm above a deepest point of the bottom (304),

wherein the fining vessel (301) comprises a barrier element (313) arranged on the bottom (304), wherein the barrier element (313) extends from the first side wall to the second side wall and has a height $h_w$, wherein the height $h_w$ is the vertical distance between the deepest point of the bottom (304) and the highest height of the barrier element (313), wherein $h_w \geq 20$ cm,

wherein the glass melt (302) in the fining vessel (301) has a working height $h_{melt}$ of at least 0.35 m, wherein $h_{melt}$ is at most 0.6 m.

In one embodiment, the step 'providing a glass melt (302)' comprises prior heating of the glass melt (302) to a temperature of at least T2 which corresponds to a viscosity of the glass melt (302) of $10^2$ dPa s. Said prior heating thus establishes fining conditions. For very high-melting glasses it may also be possible to work at fining temperatures which are below the T2 temperature which is characteristic for each glass composition. In one embodiment, the step 'providing a glass melt (302)' comprises prior heating of the glass melt (302) to a temperature of at least T2.5 which corresponds to a viscosity of the glass melt (302) of $10^{2.5}$ dPa s. In one embodiment, the step 'providing a glass melt (302)' comprises prior heating of the glass melt (302) to a temperature of at least T3 which corresponds to a viscosity of the glass melt (302) of $10^3$ dPa s.

In one embodiment, the step 'feeding the glass melt into a fining vessel (301)' is realized via a riser duct as the upstream part (309). Said means allows a continuous filling of the glass melt into the fining vessel (301) and maintaining a desirable glass melt level which thus enables flat-bed refining. The riser duct and the fining vessel act as communicating sections, wherein the flow conditions of the glass melt in the riser duct directly influence and control the flow conditions of the glass melt in the fining vessel.

In one embodiment, the method comprises the step of heating the glass melt by means of a heating burner (314) arranged within a gaseous phase (306), wherein the heating burner (314) can optionally be heated with fuel gas and oxygen, or fuel gas and air, or a mixture of hydrogen and oxygen, or with natural gas and oxygen, or with a mixture of natural gas, hydrogen and oxygen, or ammonia and oxygen, or biomethane, or biofuel. In one embodiment, the heating burner (314) can be heated with a mixture of hydrogen and air, or with natural gas and air, or with a blend of natural gas and hydrogen with air. In a further embodiment, the heating burner (314) may be heated with a combustion mixture which is free of fossil fuel. The terminology "free of fossil fuel" means that the combustion mixture comprises less 1.0 wt.% of fossil fuel, or less than 0.1 wt.% of fossil fuel.

In one embodiment, the method comprises the step of heating the glass melt (302) by means of two or more heating circuits (316) each comprising at least one pair of electrodes (317), wherein one or more or all electrodes are rod-shaped, plate-shaped, block-shaped and/or tube-shaped. In a related embodiment, the electrodes are arranged in a vertical or a horizontal or an oblique orientation in or on the side walls (303) or arranged in a horizontal or a vertical or an oblique orientation in or on the bottom (304).

In one embodiment, the electrodes comprise a platinum-rhodium alloy. In one embodiment, the electrodes comprise a molybdenum-tungsten alloy. In one embodiment, the electrodes comprise molybdenum and ZrOz dispersed therein. Advantageously, the electrode material is chosen such that corrosion at the high process temperatures is kept to a minimum.

In one embodiment, the method comprises the step of cooling the first side wall (303-1), the second side wall (303-2) and/or the bottom (304). In one embodiment, the method comprises the step of cooling the barrier element (313). In one embodiment, the method comprises the step of cooling the first side wall (303-1), the second side wall (303-2), the bottom (304) and the barrier element (313). Said measure avoids corrosion of the refractory materials comprised in the walls and/or the barrier element. In one embodiment cooling the first side wall (303-1), the second side wall (303-2) and/or the bottom (304) is realized by water cooling and/or air cooling. Air cooling is more advantageous because it allows a better balance between the need for cooling to minimize corrosion while retaining sufficiently high temperatures which are a requirement for the fining process.

In one embodiment cooling the barrier element (313) is realized by water cooling and/or air cooling, wherein the barrier element (313) optionally comprises or consists of platinum, rhodium, molybdenum or iridium or alloys thereof.

In one embodiment cooling the barrier element (313) is realized by water cooling and/or air cooling, wherein the barrier element (313) comprises a ceramic material which may optionally be covered or shielded with platinum, rhodium, molybdenum or iridium or alloys thereof. In the absence of cooling, the barrier element (313) advantageously comprises a ceramic material which may be covered or shielded with platinum, rhodium, molybdenum or iridium or alloys thereof to minimize corrosion. In an embodiment of the method which employs cooling of the barrier element (313), e.g., by water cooling and/or air cooling, the barrier element (313) may comprise or consist of a ceramic material which provides sufficient protection against corrosion during the lifetime of the fining vessel.

In one embodiment of the method, one or more of the following conditions apply:

- $h_{melt} > h_w + 0.05$ m, or $h_{melt} > h_w + 0.10$ m, or $h_{melt} > h_w + 0.15$ m,

- the glass melt (302) has a minimum dwell time of at least 2.5 hours, or at least 3.0 hours, or at least 3.5 hours in the middle part (311),

- the glass melt (302) has an average dwell time of at least 6.0 hours, or at least 8.0 hours, or at least 10.0 hours in the middle part (311),

- a ratio between a glass throughput and an area A in the middle part (311) is at least 1.5 $t/(d \cdot m^2)$, or at least 2.0 $t/(d \cdot m^2)$, or at least 2.3 $t/(d \cdot m^2)$, or at least 2.6 $t/(d \cdot m^2)$, wherein A = $l_m \times w_m$,

- a ratio between a glass throughput and a middle part volume V in the middle part (311) is at least 1.0 $d^{-1}$, or at least 2.0 $d^{-1}$, or at least 4.0 $d^{-1}$.

In one embodiment of the method, the working height $h_{melt}$ of the glass melt (302) and the height $h_w$ of the barrier element (313) are related by $h_{melt} > h_w + 0.05$ m, or $h_{melt} > h_w + 0.10$ m, or $h_{melt} > h_w + 0.15$ m. In view of the working height $h_{melt}$ of the glass melt (302) which is at most 0.6 m, it is advantageous to adjust the height $h_w$ of the barrier element (313) in such a way that it provides a hindrance for the glass melt which benefits fining because above the barrier element the glass melt becomes thinner so that gas bubbles are forced to leave the glass melt.

In one embodiment of the method, the glass melt (302) has a minimum dwell time of at least 2.5 hours, or at least 3.0 hours, or at least 3.5 hours in the middle part (311). In one embodiment of the method, the glass melt (302) has a minimum dwell time of 2.5 to 10.0 hours, or 3.0 to 9.0 hours, or 3.5 to 8.0 hours in the middle part (311). In one embodiment of the method, the glass melt (302) has a minimum dwell time of 10.0 hours or less, or 9.0 hours or less, or 8.0 hours or less in the middle part (311).

In one embodiment of the method, the glass melt (302) has an average dwell time of at least 6.0 hours, or at least 8.0 hours, or at least 10.0 hours in the middle part (311). In one embodiment of the method, the glass melt (302) has an average dwell time of 6.0 to 25.0 hours, or 8.0 to 20.0 hours, or 10.0 to 15.0 hours in the middle part (311). In one embodiment of the method, the glass melt (302) has an average dwell time of 25.0 hours or less, or 20.0 hours or less, or 15.0 hours or less in the middle part (311).

In one embodiment of the method, a ratio between a glass throughput and an area A in the middle part (311) is at least 1.5 $t/(d \cdot m^2)$, or at least 2.0 $t/(d \cdot m^2)$, or at least 2.3 $t/(d \cdot m^2)$, or at least 2.6 $t/(d \cdot m^2)$, wherein A = $l_m \times w_m$. In one embodiment, a ratio between a glass throughput and an area A in the middle part (311) is 1.5 to 5.0 $t/(d \cdot m^2)$, or 2.0 to 5.0 $t/(d \cdot m^2)$, or 2.3 to 4.5 $t/(d \cdot m^2)$, or 2.6 to 4.0 $t/(d \cdot m^2)$. In one embodiment, a ratio between a glass throughput and an area A in the middle part (311) is 5.0 $t/(d \cdot m^2)$ or less, or 4.5 $t/(d \cdot m^2)$ or less, or 4.0 $t/(d \cdot m^2)$ or less.

In one embodiment of the method, a ratio between a glass throughput and a middle part volume V in the middle part (311) is at least 1.0 $d^{-1}$, or at least 2.0 $d^{-1}$, or at least 4.0 $d^{-1}$. In one embodiment, a ratio between a glass throughput and a middle part volume V in the middle part (311) is 1.0 to 10.0 $d^{-1}$, or 2.0 to 9.0 $d^{-1}$, or 4.0 to 8.0 $d^{-1}$. In one embodiment, a ratio between a glass throughput and a middle part volume V in the middle part (311) is 10.0 $d^{-1}$ or less, or 9.0 $d^{-1}$ or less, or 8.0 $d^{-1}$ or less.

In one embodiment of the method, the glass melt (302) in the middle part (311) is heated at least partially to a temperature of at least T2 which corresponds to a viscosity of the glass melt (302) of $10^2$ dPa·s. It is generally accepted that fining may be carried out at a temperature of T2 which is sufficient to drive out emanating bubbles from the glass melt and to thus achieve efficient fining. Higher temperatures than T2 are typically not required for fining. The skilled person knows which fining agent or agents to choose based on the glass characteristics, specifically the characteristic T2 temperature. At a temperature of T2 a glass melt is generally considered to be fluid enough so that emanating gas bubbles can leave the glass melt in relation to the dwell time described in this disclosure. For very high-melting glasses it may also be possible to work at fining temperatures which are below the T2 temperature which is characteristic for each glass composition. In one embodiment of the method, the glass melt (302) in the middle part (311) is heated at least partially to a temperature of at least T2.5 which corresponds to a viscosity of the glass melt (302) of $10^{2.5}$ dPa·s.

In one embodiment of the method, the glass melt (302) in the middle part (311) is heated at least partially to a temperature of at least T3 which corresponds to a viscosity of the glass melt (302) of $10^3$ dPa·s.

In one embodiment of the method, at least 60%, or at least 70%, or at least 80% of a volume of the glass melt (302) in the middle part (311) is maintained at and/or heated to a temperature of at least T2. In one embodiment of the method, at least 60%, or at least 70%, or at least 80% of a volume of the glass melt (302) in the middle part (311) is maintained at and/or heated to a temperature of at least T2.5. In one embodiment of the method, at least 60%, or at least 70%, or at least 80% of a volume of the glass melt (302) in the middle part (311) is maintained at and/or heated to a temperature of at least T3. As described within this disclosure, the glass melt (302) in the middle part (311) may be heated by different means, i.e., a heating burner (314) within a gaseous phase (306), and/or two or more heating circuits (316) within the glass melt (302). The two or more heating circuits (316) within the glass melt (302) allow for uniform heating of the glass melt. By way of the heating burner (314) arranged within the gaseous phase (306), a temperature gradient may be established which drops from a fictitious top layer (318) to a fictitious bottom layer (319).

The inventors have established that excellent fining can be achieved, provided that at least 60% of a volume of the glass melt (302) in the middle part (311) is heated to a temperature of at least T2, or - for high-melting glass compositions - at least T2.5, or at least T3.

In one embodiment of the method, the glass melt (302) has a fictitious top layer (318) and a fictitious bottom layer (319), wherein the fictitious top layer (318) consists of a portion of the glass melt (302) in a middle part volume which extends from a surface of the glass melt (307) into the glass melt (302) with a thickness of 10 cm, wherein the fictitious bottom layer (319) consists of a portion of the glass melt (302) in a middle part volume which extends from the bottom (304) into the glass melt (302) with a thickness of 10 cm, wherein the middle part volume is the volume of the glass melt (302) which is required to fill the middle part (311) up to the working height $h_{melt}$, wherein an average temperature of the glass melt in the fictitious top layer (318) is at least 10 K higher, or at least 30 K higher, or at least 50 K higher, than an average temperature of the glass melt in the fictitious bottom layer (319). Without wishing to be bound to theory, establishing a temperature gradient between the fictitious bottom layer (319) and the fictitious top layer (318) is believed to assist and benefit the fining process because the tendency that gas bubbles are driven out of the glass melt is enhanced in the fictitious top layer (318), where temperatures are higher.

In one embodiment, the two or more top temperature probes (320) are arranged in a cross-sectional plane of the middle part (311) at a position of 0.5 $l_m$ along the length $l_m$ of the middle part (311), wherein the two or more top temperature probes (320) are located at the same horizontal positions, viewed in a side view of the fining vessel (301), wherein the two or more top temperature probes (320) are located 5 cm below the surface of the glass melt (307), wherein a first top temperature probe (320) is located 5 cm away from the first side wall (303-1), wherein a second top temperature probe (320) is located 5 cm away from the second side wall (303-2).

In one embodiment, the two or more bottom temperature probes (321) are arranged in a crosssectional plane of the middle part (311) at a position of 0.5 $l_m$ along the length $l_m$ of the middle part (311), wherein the two or more bottom temperature probes (321) are located at the same horizontal positions, viewed in a side view of the fining vessel (301), wherein the two or more bottom temperature probes (321) are located 5 cm above the bottom (304), wherein a first bottom temperature probe (321) is located 5 cm away from the first side wall (303-1), wherein a second bottom temperature probe (321) is located 5 cm away from the second side wall (303-2).

The average temperature of the glass melt in the fictitious top layer (318) may be measured and averaged using two or more top temperature probes (320) located at the same horizontal positions as the mid-height of the fictitious top layer (318), viewed in a side view of the fining vessel (301), and the average temperature of the glass melt in the fictitious bottom layer (319) is measured and averaged using two or more bottom temperature probes (321) located at the same horizontal positions as the mid-height of the fictitious bottom layer (319), viewed in a side view of the fining vessel (301), wherein the two or more top temperature probes (320) and the two or more bottom temperature probes (321) are arranged in a section of the middle part (311) which belongs to a region between 0.4 and 0.6 $l_m$ along the length $l_m$ of the middle part (311).

In one embodiment of the method, an average temperature of the glass melt in the fictitious top layer (318) is 10 to 60 K, or 30 to 60 K, or 50 to 60 K, higher than an average temperature of the glass melt in the fictitious bottom layer (319).

In one embodiment of the method, heating the glass melt by means of a heating burner (314) relies exclusively, i.e., to more than 99% (v/v) relative to the total volume of hydrogen and oxygen, on hydrogen and oxygen generated through the electrolysis of $H_2O$. Electrolysis powered through renewable energy inherently provides for a reduction of the environmental burden and a reduction of the carbon dioxide footprint associated with methods of making a refined glass melt. Alternatively, electrolysis can be powered through nuclear energy which provides for a $CO_2$-neutral production of hydrogen. However, because of the radioactive waste this energy source is not sustainable.

In one embodiment, the method comprises feeding the refined glass melt into a vertical duct, wherein the refined glass melt is allowed a temperature to decrease such that an average temperature of the refined glass melt in the vertical duct is less than 50 K, or less than 30 K, or less than 10 K compared to an average temperature of the glass melt in the fining vessel. The average temperature of the glass melt in the vertical duct should be chosen such that remaining gas bubbles, typically smaller than 50 μm, can redissolve into the glass melt.

Average dwell time of the glass melt in the vessel system

In one embodiment of the method, the glass melt (120) has an average dwell time of at least 39.0 hours, or at least 45.0 hours, or at least 50.0 hours, or at least 55.0 hours in the vessel system comprising the melting vessel (101), the riser duct (201) and the fining vessel (301). In one embodiment, the glass melt (120) has an average dwell time of 150.0 hours or less, or 140.0 hours or less, or 130.0 hours or less in the vessel system. In one embodiment, the glass melt (120) has an average dwell time of 39.0 to 150.0 hours, or 55.0 to 140.0 hours, or 50.0 to 130.0 hours in the vessel system.

Preferred embodiments of the method for making and refining a glass melt

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein the glass melt (302) in the fining vessel (301) has a working height $h_{melt}$ of at least 0.35 m, wherein $h_{melt}$ is at most 0.6 m, wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total,\ upper}$ provided by the heating circuits (209) and any additional heaters comprising the sum of an electrical power density $P_{el,\ upper}$ provided by the heating circuits (209) of the upper electrode section (205) and a power density $P_{add}$ provided by the additional heaters is higher than an electrical power density $P_{el,\ lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein fining further comprises the step of heating the glass melt by means of a heating burner (314) arranged within a gaseous phase (306), wherein the heating burner (314) can optionally be heated with fuel gas and oxygen, or fuel gas and air, or a mixture of hydrogen and oxygen, or with natural gas and oxygen, or with a mixture of natural gas, hydrogen and oxygen, or ammonia and oxygen, or biomethane, or biofuel, wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein $h_{melt} > h_w + 0.05$ m, or $h_{melt} > h_w + 0.10$ m, or $h_{melt} > h_w + 0.15$ m, wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein the glass melt (302) has a minimum dwell time of at least 2.5 hours, or at least 3.0 hours, or at least 3.5 hours in the middle part (311) , wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein the glass melt (302) has an average dwell time of at least 6.0 hours, or at least 8.0 hours, or at least 10.0 hours in the middle part (311) , wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein a ratio between a glass throughput and an area A in the middle part (311) is at least 1.5 t/(d·m²), or at least 2.0 t/(d·m²), or at least 2.3 t/(d·m²), or at least 2.6 t/(d·m²), wherein A = $l_m \times w_m$, wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein a ratio between a glass throughput and a middle part volume V in the middle part (311) is at least $1.0$ $d^{-1}$, or at least $2.0$ $d^{-1}$, or at least $4.0$ $d^{-1}$, wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein the glass melt (302) in the middle part (311) is heated at least partially to a temperature of at least T2 which corresponds to a viscosity of the glass melt (302) of $10^2$ dPa·s, wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212)

EP 4 345 069 A1

above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein at least 60%, or at least 70%, or at least 80%, of a volume of the glass melt (302) in the middle part (311) is heated to a temperature of at least T2, wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

In one embodiment, the method for producing and refining a glass melt comprises the steps of

- melting a batch of raw materials to form a glass melt (120) in a melting vessel (101),

- heating the batch and/or the glass melt (120) in the melting vessel (101),

38

- feeding the glass melt (120, 207) from the melting vessel (101) to a flow duct (206) of a riser duct (201), and

- feeding the glass melt (120, 207) from an outlet (208) into a fining vessel (203), and

- obtaining a refined glass melt,

wherein the glass melt (302) has a fictitious top layer (318) and a fictitious bottom layer (319), wherein the fictitious top layer (318) consists of a portion of the glass melt (302) in a middle part volume which extends from a surface of the glass melt (307) into the glass melt (302) with a thickness of 10 cm, wherein the fictitious bottom layer (319) consists of a portion of the glass melt (302) in a middle part volume which extends from the bottom (304) into the glass melt (302) with a thickness of 10 cm, wherein the middle part volume is the volume of the glass melt (302) which is required to fill the middle part (311) up to the working height $h_{melt}$, wherein an average temperature of the glass melt in the fictitious top layer (318) is at least 10 K higher, or at least 30 K higher, or at least 50 K higher, than an average temperature of the glass melt in the fictitious bottom layer (319), wherein the method is characterised by one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),

- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),

- a mean volumetric pass-through time through the riser duct (201) is > 3 h or > 5 h or > 7 h or > 8 h,

- an average temperature of the glass melt (207) on entry into the riser duct (201) is < 50 °C or < 100 °C or < 150 °C below the average temperature of the glass melt (207) in the fining vessel (203),

- a shortest dwell time of the glass melt (207) in the riser duct (201) is > 2.0 h or > 3.0 h or > 4.0 h,

- the heating in the riser duct (201) is effected such that at least in the upper 50 % of its height or at least in the upper 75 % of its height or at least in the upper 90 % of its height essentially a plug flow of the glass melt (207) is created.

**Glass tube**

The vessel system and/or the method according to this disclosure with an additional step of a tube drawing method, in particular the Danner method or the Vello method or the A-draw method, may be used to produce glass tubes. These glass tubes can serve as an intermediate product for the production of pharmaceutical containers.

The glass tubes of this disclosure have (i) an aggregated airline length of 0.25 m or 0.15 m or 0.10 m or 0.05 m per 1 m tube length, wherein the aggregated airline length is defined as the sum of the lengths of closed airlines having a length > 15 mm and open airlines having a length > 2 mm, and/or (ii) no knots and stones with a diameter of > 0.8 mm per kg glass and/or at most 1 knot and/or stone with a diameter of > 0.5 per kg glass, and a Scope 1-PCF of less than 400 g $CO_2$ / kg glass.

The Scope 1-PCF may in particular be of less than 300 g $CO_2$ / kg glass or less than 30 g $CO_2$ / kg glass. In the context of this disclosure, for better comparability of the different production processes, this refers to the amount of $CO_2$ emission caused by burning fossil fuels and released by carbon containing raw materials during manufacturing of the glass product per kg of glass material. The unit "g $CO_2$ / kg glass" does not mean that the glass tubes have a weight of 1 kg or above. They may have any desired weight. The amount of carbon dioxide per kilogram glass can be calculated from the actual weight of the tube and the amount of carbon dioxide emissions during its production.

The Scope 1-PCF refers to the product carbon footprint in Scope 1 as defined by the GHG protocol according to the Paris Agreement on climate change of the 2015 United Nations Climate Change Conference. The GHG protocol defines the product carbon footprint of a certain product as the sum of the carbon footprint in three scopes, Scope 1 to Scope 3. Scope 1 relates to the direct emissions of carbon dioxide from the plant during production of the product including, for example, fuel use onsite, vehicle fleets, and fumes from paints or other chemicals. For the production of special glass products, these can be caused by the burning of fossil fuels, such as natural gas, and the decomposing of carbonate raw materials. Scope 2 relates to the indirect emissions associated with the plant but occurring offsite, such as electricity and heat purchases. Scope 3 relates to all other indirect emissions associated with external sources in the upstream and downstream process, such as purchased goods, travel, transport, use of the product, and end of life treatment of the product.

Conventional plants for the production of special glass products using burners for heating the glass melt typically have a Scope 1-PCF of about 1,500 g $CO_2$ / kg glass when using airfuel for the burners and of about 1,000 g $CO_2$ / kg glass when using oxyfuel. The disclosed vessel system and method allow for a considerable reduction of these values. Still using natural gas burners during the fining process for a heating of the glass melt above the melt surface, i.e. in the gaseous phase, and electric heating within the melt, the Scope 1-PCF comprising the heating and the decomposing of the raw materials can be kept below 400 g $CO_2$ / kg glass. With different energetic optimizations, the production can be achieved with a Scope 1-PCF of below 300 g $CO_2$ / kg glass. When using hydrogen, bio methane, ammonia, or other climate neutral fuels for the burners, the value can further be reduced to below 30 g $CO_2$ / kg glass.

In embodiments of this disclosure, the glass tube has

- an aggregated airline length of 0.25 m or 0.15 m or 0.10 m or 0.05 m per 1 m tube length, wherein the aggregated airline length is defined as the sum of the lengths of closed airlines having a length > 15 mm and open airlines having a length > 2 mm, and/or

- no knots and stones with a diameter of > 0.8 mm per kg glass and/or at most 1 knot and/or stone with a diameter of > 0.5 per kg glass.

The unit "m per 1 m tube length" of the aggregated airline length does not mean that the glass tubes have a length of 1 m or above. They may have any desired length. The aggregated airline length can be determined for a tube of a given length and then be recalculated to a length of 1 m.

While the fining process tries to remove all of the bubbles from the melt, a small volume of bubbles may still remain in the glass and finally end up in the glass tubes. During the drawing process, these bubbles are stretched and form open or closed airlines. Bubbles and airlines can be detected in the glass by visual inspection, in particular automated visual inspection. The aggregated airline length is the total length of all the airlines within a certain length of the tube meeting certain dimensional criteria. Within this disclosure, all closed airlines having a length > 15 mm and all open airlines having a length > 2 mm are counted for the aggregated airline length. When working according to this disclosure, a particularly low value of the aggregated airline length can be achieved which is a sign of a high-quality glass product.

Further, the number of the knots and stones which can be found in the glass tube can be very low. Stones generally refer to all solid inclusions in the glass independent of their origin. They may, for example, be unmelted batch material, crystalline devitrification products, or particles of the refractory material of the melting tanks. Knots generally refer to glassy inclusions in the glass which have a viscosity which is so high that they are almost not deformed during the production process. Both of them may be determined by optical inspection and counting of the number of detected occurrences meeting the size criteria. When working according to this disclosure, no knots and stones with a diameter of > 0.8 mm per kg glass will occur and/or at most 1 knot and/or stone with a diameter of > 0.5 per kg glass. In optional embodiments, there may be no stone with a diameter of > 0.5 per kg glass and at most 1 knot with a diameter of > 0.5 per kg glass.

This is also a sign of a high-quality glass product. When referring to the diameter of the stones and knots, this is to be understood as referring to their largest diameter. By stating the number of knots and/or stones with a reference to "per kg glass" does not mean that the glass tubes have a weight of 1 kg or above. They may have any desired weight. The number of knots and/or stones can be determined for a tube of a given weight and then be recalculated to a kilogram of glass.

Within the present disclosure, the glass tube has an inner surface and an outer surface, and is characterized by an inner diameter $d_i$, an outer diameter $d_o$ and a length $l_a$ along its longitudinal axis.

In embodiments, the glass tube may have an inner diameter from 5.0 mm to 49.0 mm, optionally 9.0 mm to 26 mm, and/or an outer diameter from 6.0 mm to 50 mm, optionally 8.0 mm to 30 mm, and/or a glass wall thickness of 0.5 mm to 2.0 mm, optionally 0.6 mm to 1.5 mm, and/or a length $l_a$ from 125 mm to 5,000 mm, optionally 500 mm to 3,000 mm or 1,000 mm to 2,000 mm.

In embodiments, the glass tube may have an inner diameter from 5.0 mm to 49.0 mm, 6.0 mm to 45.0 mm, 7.0 mm to 40.0 mm, 8.0 mm to 35.0 mm, or 9.0 mm to 26 mm.

In embodiments, the glass tube may have an outer diameter from 6.0 mm to 50 mm, 7.0 mm to 40 mm, or 8.0 mm to 30 mm.

In embodiments, the glass tube may have a glass wall thickness of 0.5 mm to 2.0 mm, 0.6 mm to 1.5 mm, 0.7 mm to 1.3 mm, or 0.8 mm to 1.2 mm.

In embodiments, the glass tube may have a length $l_a$ from 125 mm to 5,000 mm, 300 mm to 4,000 mm, 500 mm to 3,000 mm, or 1,000 mm to 2,000 mm.

**Glass composition**

The viscosity behavior of the glass composition used in the method may be of relevance. As mentioned above, the temperature dependence of glass melt viscosity may be described using the VFT equation. Optionally, the glass melt has a VFT constant B in the range of from 5,000 K to 9,000 K and/or to in the range of from 75 °C to 240 °C. Optionally, VFT constant A is from -5.0 to 0.0. In an embodiment, A is -1,0 or less, such as -4.0 to -1.0. In embodiments, VFT constant B is from 5,000 K to 9,000 K, such as from 4,500 K to 8,500 K. Optionally, $t_0$ may be at least 75 °C and up to 240 °C; $t_0$ may be at least 200 °C.

The glass composition may be borosilicate, alumino-borosilicate or aluminosilicate glass. The glass composition may contain alkali metal oxides in amounts of less than 20 % by weight, less than 15 % by weight, less than 12 % by weight, less than 10 % by weight or less than 5 % by weight. Optionally, the glass composition may be free of alkali metal oxides. In alternative embodiments, the amount of alkali metal oxides in the glass composition may be at least 1% by weight.

The glass composition may contain alkaline earth metal oxides in amounts of less than 20 % by weight, less than 15 % by weight, less than 12 % by weight, less than 10 % by weight, or less than 5 % by weight. Optionally, the glass composition may be free of alkaline earth metal oxides. In alternative embodiments, the amount of alkaline earth metal oxides in the glass composition may be at least 1 % by weight.

The glass composition may contain $SiO_2$ in an amount of at least 48 % by weight, at least 55 % by weight, at least 65 % by weight, at least 70 % by weight or at least 75 % by weight.

Optionally, the amount of $SiO_2$ may range up to 85 % by weight, up to 82.5 % by weight or up to 80 % by weight.

Optionally, the glass composition may be that of a glass ceramic, i.e., a glass composition that can be further processed into a glass ceramic by appropriate heat treatment. In case that the glass composition is that of a glass ceramic, the composition may contain nucleating agents such as $TiO_2$ and/or $ZrO_2$. Optionally, the total amount of $TiO_2$ and/or $ZrO_2$ may be at least 2.0 % by weight, such as at least 2.5 % by weight. The glass composition may for example be a lithium aluminosilicate glass composition, e.g., containing at least 2.0 % by weight of $Li_2O$.

The glass composition may include one or more fining agents. The fining agent may be selected from multivalent metal oxides, halides, sulfates and combinations thereof. In an embodiment, the fining agent is selected from tin oxide, cerium oxide, chloride, fluoride, sulfate, antimony oxide, arsenic oxide, iron oxide and combinations thereof.

Optional glass compositions include $Al_2O_3$ in an amount of at least 1.5% by weight or at least 5.0% by weight or even at least 10.0% by weight. The amount of $Al_2O_3$ may be up to 23.0% by weight, up to 20.0% by weight or up to 18.0% by weight. In certain embodiments, the amount of $Al_2O_3$ may range from 1.5% to 23.0% by weight, from 5.0% to 20.0% by weight or from 10.0% to 18.0% by weight.

Additionally, or alternatively, the glass composition may include $B_2O_3$ in an amount of at least 0.0% by weight or at least 8.0% by weight or even at least 10.0% by weight. The amount of $B_2O_3$ may be up to 20.0% by weight, up to 16.0% by weight or up to 14.0% by weight. In certain embodiments, the amount of $B_2O_3$ may range from 0.0% to 20.0% by weight, from 8.0% to 16.0% by weight or from 10.0% to 14.0% by weight.

Many highly viscous glass compositions contain significant amounts of $SiO_2$, $Al_2O_3$ and $B_2O_3$. Optionally, the glass compositions used in this invention have a total content of $SiO_2$, $Al_2O_3$ and $B_2O_3$ of at least 75.0% by weight, at least 78.0% by weight or even at least 85.0% by weight. The total amount of $SiO_2$, $Al_2O_3$ and $B_2O_3$ may be limited to not more than 97.0% by weight, up to 93.5% by weight or up to 90.0% by weight. Optionally, the amount of $SiO_2$, $Al_2O_3$ and $B_2O_3$ may range from 75.0% to 95.0% by weight, from 78.0% to 92.5% by weight or from 85.0% to 90.0% by weight.

Description of the Figures

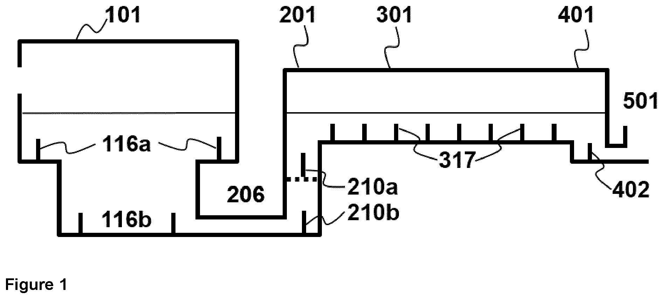

**Figure 1** depicts a vessel system for producing and refining a glass melt according to this disclosure, wherein the vessel system comprises a melting vessel (101), a riser duct (201), a fining vessel (301), a vertical duct (401) and a storage vessel (501). **Figure 1** indicates the inner volumes of the said parts which during operation are at least partially filled with glass melt. A flow duct (206) connects the melting vessel (101) and the riser duct (201). In the melting vessel (101) six triples of electrodes (116a) are arranged in an upper part which is the melting section, and six single electrodes (116b) are arranged in a lower part which is the conditioning section. In the riser duct (201) pairs of electrodes are arranged in an upper part (210a) and pairs of electrodes are arranged in a bottom part (210b). In the fining vessel (301) electrodes (317) are arranged. In the vertical duct (401) electrodes (402) are arranged.

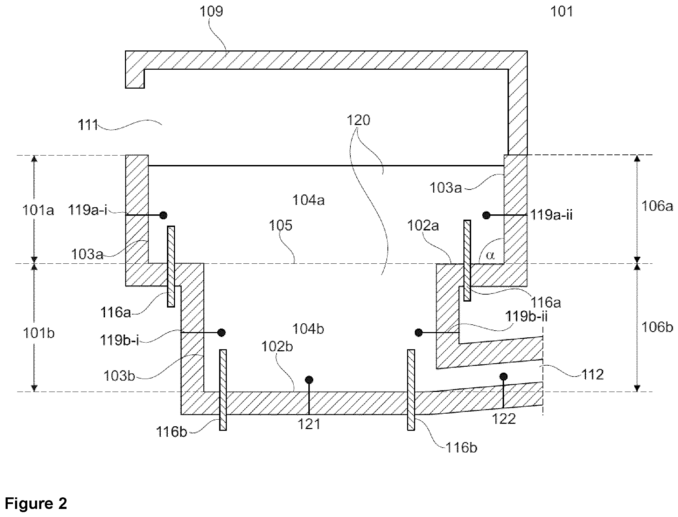

**Figure 2** shows a side view of a melting vessel (101) according to this disclosure. The melting vessel (101) has two or more heating circuits (110), an inlet (111) for a glass batch and an outlet (112) for the glass melt (120), and a superstructure (109) which acts as a top cover. The melting vessel (101) is divided into a melting section (101a) and a conditioning section (101b) which is arranged below the melting section (101a). The melting section (101a) has a first bottom wall (102a) and a first wall (103a) which surround a first volume (104a). The first bottom wall (102a) has an opening (105). The conditioning section (101b) has a second bottom wall (102b) and a second wall (103b) surrounding a second volume (104b). The first volume (104a) is connected to the second volume (104b) via the opening (105). In the context of the melting vessel (101), the first volume (104a) and the second volume (104b) shall be understood as geometrical spaces which are adjacent to each other and have a common interface which is the area of the opening (105). In the context of the method, the second volume (104b) is filled with the glass melt (120), whereas the first volume (104a) is filled with the glass melt maximally until the glass level reaches a height distance of 5 cm with respect to the top of the first wall (103a) to avoid any overflow. Two electrodes (116, 116a) are located partially in the first bottom wall (102a) of the melting section (101a). Two electrodes (116, 116b) are located partially in the second bottom wall (102b) of the conditioning section (101b). Two melting temperature probes (119a-i, 119a-ii) are located at opposite positions to each other on the first wall (103a) of the melting section (101a). Two conditioning temperature probes (119b-i, 119b-ii) are located at opposite positions to each other on the second wall (103b) of the conditioning section (101b). A bottom temperature probe (121) is located on the second bottom wall (102b). An outlet temperature probe (122) is located on a wall of the outlet (112).

**Figure 3a** shows a top view of a melting vessel (101) according to this disclosure, wherein the melting section (101a) has a symmetrical octagonal shape and wherein the opening (105) has a circular rim.

**Figure 3b** shows a top view of another melting vessel (101) according to this disclosure, wherein the melting section (101a) and the conditioning section (101b) have a symmetrical hexagonal shape.

**Figures 3a and 3b** also show optional arrangements for the electrodes (116a, 116b) in the melting section (101a) and the conditioning section (101b).

**Figure 4a** shows a top view of a melting vessel (101) according to this disclosure, indicating a bottom wall mass center (108-1) with an opening (105) having an opening mass center (108-2).

**Figure 4a** shows a top view of the melting vessel (101), wherein the melting section (101a) and the conditioning section (101b) have a rectangular shape.

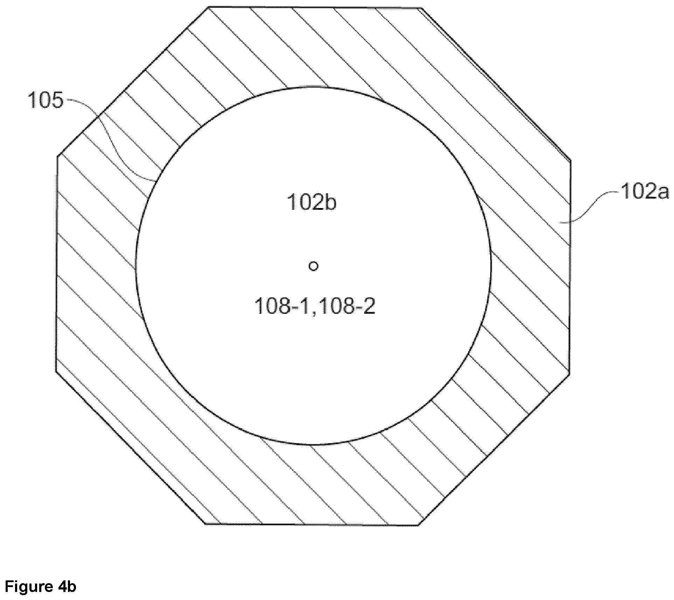

**Figure 4b** shows a top view of another melting vessel (101) according to this disclosure, indicating a bottom wall mass center (108-1) with an opening (105) having an opening mass center (108-2). **Figure 4b** shows a top view of the melting vessel (101), wherein the melting section (101a) has a symmetrical octagonal shape and wherein the opening (105) has a circular rim.

**Figures 4a and 4b** show a first bottom wall (102a, hatched) with a bottom wall mass center (108-1) with an opening (105) having an opening mass center (108-2), wherein the bottom wall mass center (108-1) and the opening mass center (108-2) are both on a fictitious vertical axis.

**Figure 5** shows a melting vessel (101) according to this disclosure with a common controller (107) for controlling two or more heating circuits (110). The common controller (107) can control an electrical current of each heating circuit (110) independently of the other heating circuit(s). The heating circuits (110) each comprise a frequency changer (113) which is electrically connected via a power factor correction (114) and a transformer (115) to at least two electrodes (116) immersible into the glass melt (120). Conductors (117) connect the frequency changers (113), the power factor corrections (114), the transformers (115), and the electrodes (116). Signal lines (118) connect the frequency changers (113) with the common controller (107).

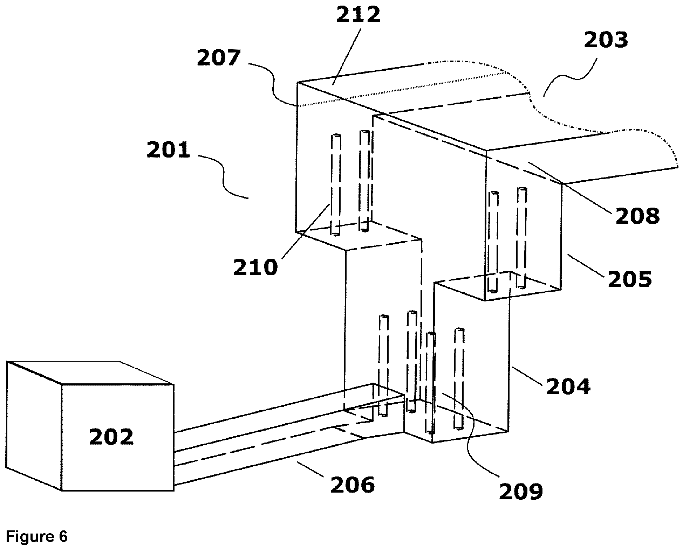

**Figure 6** shows an embodiment of a riser duct (201) for connecting a glass melting vessel (202) with a fining vessel (203) both of which are only indicated in the figure. The riser duct (201) has a lower electrode section (204) and an upper electrode section (205) which differ in the width of their horizontal cross-sections in this example such that the shape of the riser duct (201) is essentially a T-shape. A flow duct (206) connects the lower electrode section (204) with the glass melting vessel (202) for feeding the glass melt (207) into the riser duct (201). Its width is smaller than the width of the lower electrode section (204) and it is arranged centrally at the bottom level of the lower electrode section (204).

The outlet (208) of the upper electrode section (205) for feeding the glass melt (207) from the riser duct (201) into the fining vessel (203) is in this example designed as an aperture in the downstream wall of the riser duct (201) which extends over the whole width of the upper electrode section (205). That is, the outlet (208) has a width of 100 % of the initial width of the fining vessel (203). The upper end of the wall is at level with the floor level of the fining vessel (203). Hence, the rising glass melt (207) seamlessly continues to flow into the fining vessel (203), i.e., its middle part where the fining action of bubble growth from the fining agents and escape of the bubbles from the glass melt (207) occurs.

In each of the lower electrode section (204) and the upper electrode section (205) of this example is installed a heating circuit (209) each comprising two pairs of electrodes (210). The electrodes (210) are rod-shaped and extend vertically from the bottom of the lower electrode section (204) of the riser duct (201) and the horizontal wall section of the upper electrode section (205). The two electrodes (210) on the left side of the riser duct (201) form together with the two electrodes (210) on the right side of the riser duct (201) the respective heating circuits (209) of the lower electrode section (204) and the upper electrode section (205).

Above the surface of the glass melt (207) in the upper electrode section (205) there is provided a gaseous phase (212), i.e., a free space under the superstructure of the riser duct. The bubbles within the glass melt (207) which may have been carried over from the melting vessel (202) via the flow duct (206) may escape into this gaseous phase (212). There may also be installed additional burners (not shown in the figure) in this space above the melt surface for providing extra heating of the top layer of the melt. As is indicated in the figure, the gaseous phase (212) above the surface of the glass melt (207) is in this example in fluid communication with the gaseous phase (212) of the fining vessel (203) and the surface of the glass melt (207) extends into the fining vessel (203).

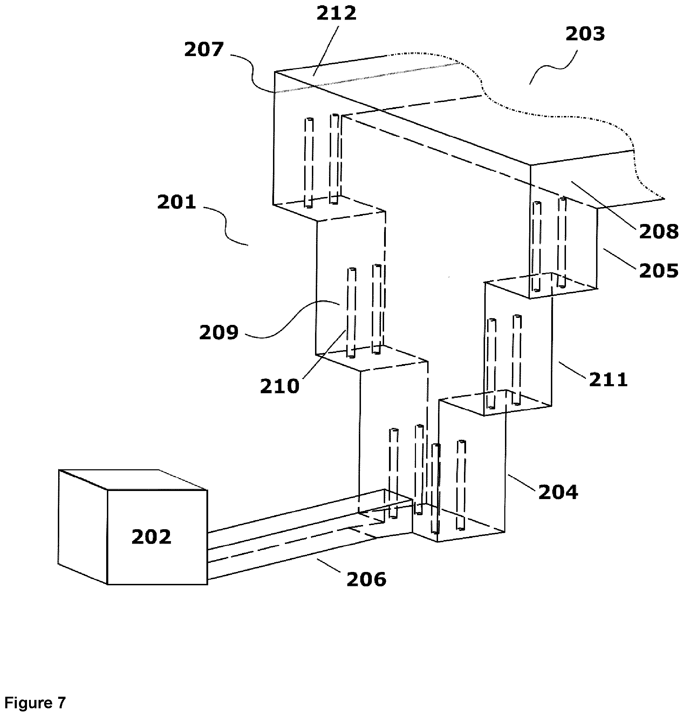

**Figure 7** shows an example of a riser duct (201) having an additional middle electrode section (211). To this end, the example of Figure 6 is modified with a further step in the T-shape, resulting in a stepwise widening of the riser duct (201) over its height. In this example of Figure 7, also there is installed a heating circuit (209) comprising two pairs of electrodes (210) in this middle electrode section (211).

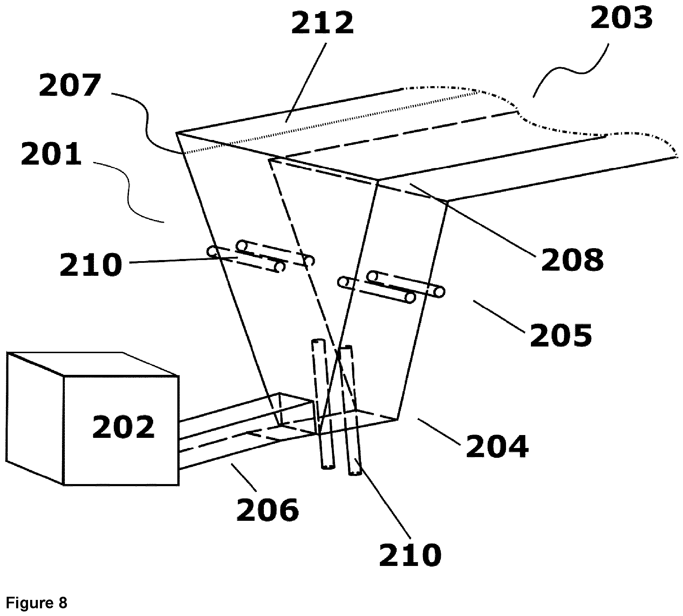

**Figure 8** shows another example of a riser duct (201) having a lower electrode section (204) and an upper electrode section (205). This example differs from the example of Figure 6 in that the electrodes (210) of the upper electrode section (205) are aligned horizontally instead of vertically and in that the shape has a continuously increasing width from bottom to top. Moreover, the heating circuit in the lower electrode section (204) comprises only a single pair of electrodes (210) whereas the upper electrode section (205) has two pairs of electrodes (210) like the example of Figure 6. For certain types of glass melts, it has been found that with this design of the widening shape it is easier to achieve the desired flow pattern and/or a homogenous start of the fining action in the fining tank over the whole width of the tank.

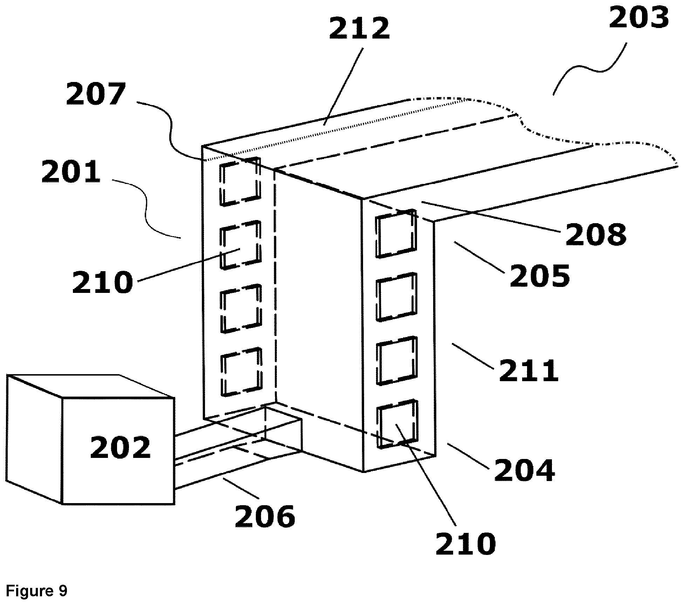

**Figure 9** shows yet another example of a riser duct (201) similar to the one of Figure 7 but having two additional middle electrode sections (211) instead of one. The electrodes (210) are in all sections plate-shaped, and the heating circuits in each of the lower electrode section (204), the two middle electrode sections (211), and the upper electrode section (205) are formed by a pair of single electrodes (210). Moreover, the riser duct (201) has a constant width over its height, i.e., the different sections of the riser duct (201) are correlated only with the placement of the electrodes (210) but not also with a dimensional difference of the riser duct (201). This design is easier to construct than the T-shaped counterparts and can be advantageous for certain types of glass melts since the larger volume may make it easier to create a uniform temperature over the whole width of the riser duct (201) at the outlet (208).

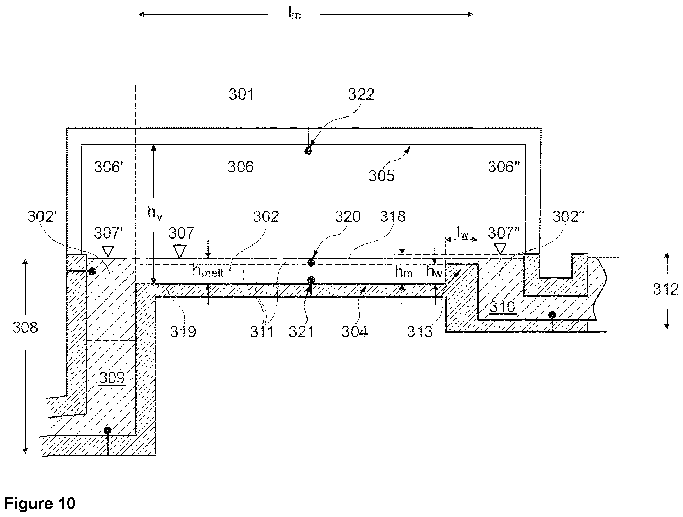

**Figure 10** shows a longitudinal section of an apparatus according to this disclosure comprising a fining vessel (301) with a middle part (311), a riser duct (308) with an upstream part (309) and a vertical duct (312) with a downstream part (310), wherein the fining vessel (301) comprises a barrier element (313) arranged on the bottom (304) of the middle part (311) located adjacent to the downstream part (310). The fining vessel (301) is suitable for refining a glass melt (302). The fining vessel has side walls (not indicated), a bottom (304), and a superstructure (305) covering the apparatus. The apparatus has an upstream part (309) for receiving the glass melt (302, 302') from a riser duct (308), and a downstream part (310) for purging a refined glass melt into a vertical duct (312) with downward flow. The apparatus is functionally divided into a middle part (311) arranged between the upstream part (309) and the downstream part (310). A gaseous phase (306) is provided above a surface (307) of the glass melt (302) filling the middle part (311). A gaseous phase (306') is above a surface (307') of a glass melt (302') in the upper section of the riser duct (308). The middle part (311) has a working height $h_{melt}$ of the glass melt (302) filling the middle part (311), a length $l_m$, a width $w_m$ (not indicated) and a height $h_m$. The fining vessel (301) comprises a barrier element (313) arranged on the bottom (304). The barrier element (313) has a length $l_w$, a width $w_w$ (not indicated) and a height $h_w$.

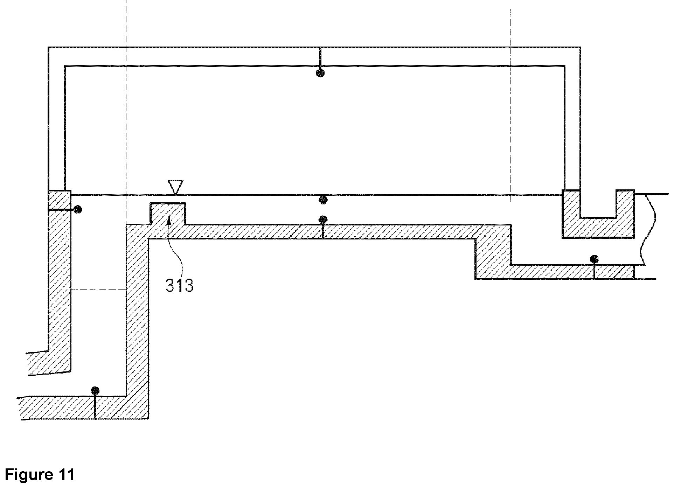

For sake of clarity and simplicity, Figures 11, 12 and 13 only indicate the difference(s) with respect to the apparatus according to Figure 10. All elements shown in Figure 10 are thus also present in Figures 11, 12 and 13.

**Figure 11** shows a longitudinal section of an apparatus according to this disclosure, wherein the fining vessel (301) comprises a barrier element (313) arranged on the bottom (304) of the middle part (311) which is located near the upstream part (309).

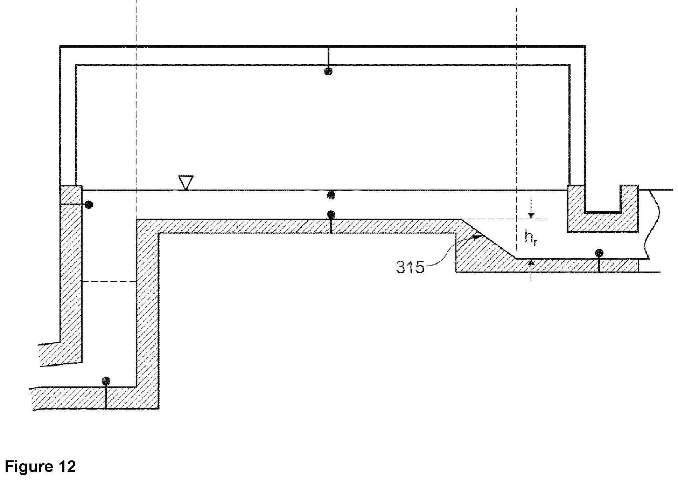

**Figure 12** shows a longitudinal section of an apparatus according to this disclosure, wherein the fining vessel (301) comprises a ramp (315) which is located below the middle part (311) and before the downstream part (310).

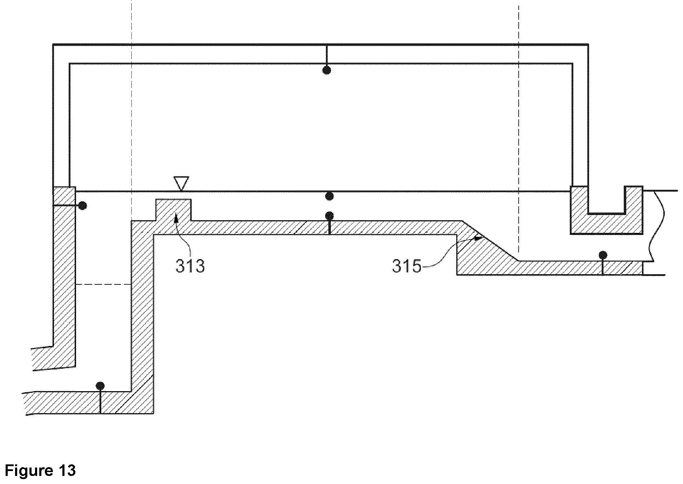

**Figure 13** shows a longitudinal section of an apparatus according to this disclosure, wherein the fining vessel (301) comprises a barrier element (313) arranged on the bottom (304) of the middle part (311) which is located near the upstream part (309), wherein the fining vessel (301) comprises a ramp (315) which is located below the middle part (311) and before the downstream part (310).

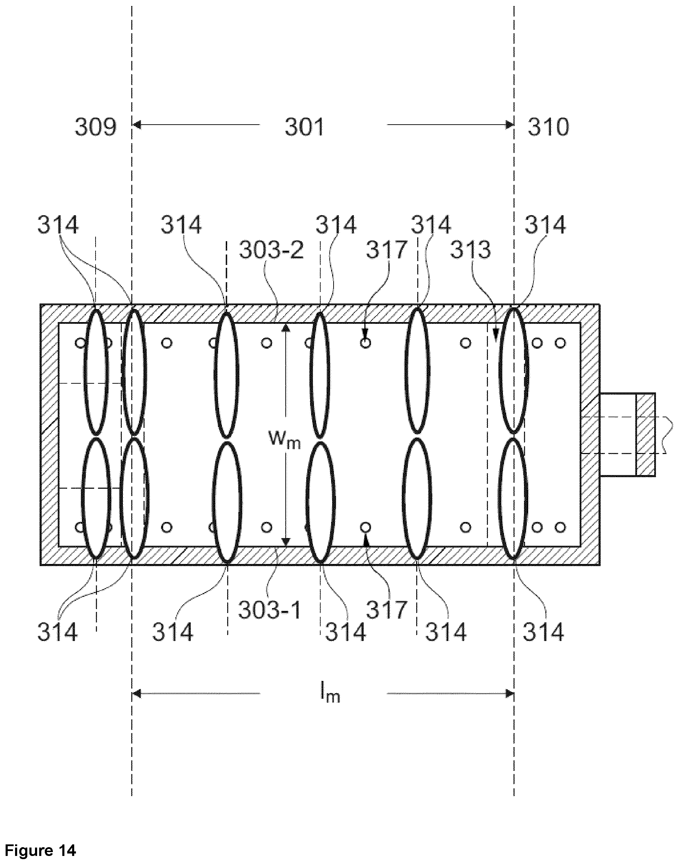

**Figure 14** shows a top view of an apparatus according to this disclosure, wherein the apparatus is equipped with a heating burner (314) arranged within the gaseous phase (306, 306', 306"). The heating burner (314) comprises twelve individual burners. The apparatus comprises electrodes, of which a pair of electrodes (317) is indicated. A first side wall (303-1) and a second side wall (303-2) are indicated. A barrier element (313) is indicated.

Examples

**Melting vessel**

Simulations were carried out to assess the melting efficiency of the melting vessel according to this disclosure. The efficiency of a melting vessel was assessed based on the minimum dwell time of the glass melt in the melting vessel. To this end, the relative minimum dwell time $t_{dwell\_min\_rel}$ of the glass melt was calculated as the ratio between the "minimum dwell time" $t_{dwell\_min}$ and the "average dwell time" $t_{dwell\_average}$:

$$t_{dwell\_min\_rel} = \frac{t_{dwell\_min}}{t_{dwell\_average}}.$$

The glass throughput in the melting vessel was kept constant at 42 t/d in all simulations. The following parameters were assessed with respect to the relative minimum dwell time.

**Table 1:** Influence of the depth of the conditioning section ($d_{cond\_sec}$).

| Arrangement | $d_{cond\_sec}$ [m] | $\Delta T_{ms\text{-}cs}$ (K) | $t_{dwell\_min}$ [h] | $t_{dwell\_min\_rel}$ [%] |
|---|---|---|---|---|
| rectangular configuration of the melting vessel, | 1.3 | 20 | 4.7 | 10 |
| with plate shaped electrodes in both the melting section and the conditioning section the depth of the melting section is 1.3 m | 1.6 | 20 | 6 | 12 |

The average temperature difference between the glass melt in the melting section and the glass melt in the conditioning section was kept constant at 20 K. The relative minimum dwell time is increased for a melting vessel arrangement with a larger depth of the conditioning section with respect to the depth of the melting section. An increase of the relative minimum dwell time $t_{dwell\_min\_rel}$ benefits the quality of the obtained glass melt.

**Table 2:** Influence of the average temperature difference between the glass melt in the melting section and the glass melt in the conditioning section.

| Arrangement | $\Delta T_{ms\text{-}cs}$ (K) | $t_{dwell\_min}$ [h] | $t_{dwell\_min\_rel}$ [%] |
|---|---|---|---|
| rectangular configuration of the melting vessel, | 42 | 6.6 | 13 |
| with plate shaped electrodes, depth of the melting section: 1.3 m depth of the conditioning section: 1.6 m | 20 | 6 | 12 |

The relative minimum dwell time is increased for a melting vessel arrangement with a larger average temperature difference between the glass melt in the melting section and the glass melt in the conditioning section. An increase of the relative minimum dwell time $t_{dwell\_min\_rel}$ benefits the quality of the obtained glass melt.

**Table 3:** Influence of the minimal width of the first bottom wall.

| Arrangement | Minimal width [mm] | $\Delta T_{ms\text{-}cs}$ (K) | $t_{dwell\_min}$ [h] | $t_{dwell\_min\_rel}$ [%] |
|---|---|---|---|---|
| rectangular configuration of the melting vessel, plate-shaped bottom electrodes in both the melting section and the conditioning section depth of the melting section: 1.3 m depth of the conditioning section: 1.6 m | 500 | 20 | 6 | 12 |
| | 800 | 20 | 5.3 | 11.1 |
| | 1000 | 20 | 4.8 | 10.7 |

A smaller minimal width of the first bottom wall leads to an increase of the relative minimum dwell time $t_{dwell\_min\_rel}$

which benefits the quality of the obtained glass melt. However, the absence of a first bottom wall results in very short minimum dwell times of 2.1 h.

Table 4: Influence of the relationship between the first volume $V_{melt}$ of the melting section and the second volume $V_{cond}$ of the conditioning section.

| Arrangement | $V_{melt}$ [m3] | $V_{cond}$ [m3] | $V_{melt}$ / $V_{cond}$ | $\Delta T_{ms-cs}$ (K) | $t_{dwell\_min}$ [h] | $t_{dwell\_min\_rel}$ [%] |
|---|---|---|---|---|---|---|
| rectangular configuration of the melting vessel, | 25,2 | 15,2 | 1,66 | 20 | 6 | 12 |
| plate-shaped bottom electrodes in both the melting section and the conditioning section | 25,20 | 12,5 | 2,02 | 20 | 5.3 | 11.1 |
| | 25,2 | 10,8 | 2,33 | 20 | 4.8 | 10.7 |
| depth of the melting section: 1.3 m depth of the conditioning section: 1.6 m | | | | | | |

Table 5: Influence of the relationship between the area $A_{melt}$ of the melting section (also denoted 'bottom area' within this disclosure) and the area $A_{cond}$ of the conditioning section (also denoted 'the opening' within this disclosure).

| Arrangement | $A_{melt}$ [m2] | $A_{cond}$ [M2] | $A_{melt}$ / $A_{cond}$ | $\Delta T_{ms-cs}$ (K) | $t_{dwell\_min}$ [h] | $t_{dwell\_min\_rel}$ [%] |
|---|---|---|---|---|---|---|
| rectangular configuration of the melting vessel, | 19.4 | 9.5 | 2.04 | 20 | 6 | 12 |
| plate-shaped bottom electrodes in both the melting section and the conditioning section | 19.4 | 7.8 | 2.49 | 20 | 5.3 | 11.1 |
| | 19.4 | 6.7 | 2.90 | 20 | 4.8 | 10.7 |
| depth of the melting section: 1.3 m depth of the conditioning section: 1.6 m | | | | | | |

**Fining vessel**

Simulations were carried out to assess the refining efficiency of the fining vessel in the presence of a barrier element, arranged either in the front part or the back part of the fining vessel, in the absence of a barrier element and a ramp, and in the presence of a barrier element arranged in the front part combined with a ramp. In line with the definitions of this disclosure, the following dimensions were modelled in the simulations: a width $w_m$ of 3.6 m; a length $l_m$ of 6.0 m; a length of 8.0 m including the upstream part, i.e., the riser duct, and the downstream part, i.e., the vertical duct; a working height $h_{melt}$ of the glass melt of 0.4 m; a total free surface of the glass melt of 28.8 m$^2$; and a height of the barrier element $h_w$ (if present) of 0.30 m. Smaller bubbles with a diameter of 500 $\mu$m or less were removed to a large extent from the glass melt in the fining vessel, i.e., the middle part. The simulation modelled physical refining effects and neglects any chemical processes which may take place.

The removal of smaller bubbles with a diameter of 500 $\mu$m was more efficient in the presence of a barrier element, because above the barrier element the glass melt is narrowed to a short height which allows optimal escape of smaller bubbles due to their vicinity to the glass melt surface.

The minimum dwell time was found to be a relevant parameter when assessing the efficiency of the fining for a given fining vessel design at a constant melt throughput. A longer minimum dwell time provides for a better and more thorough refining because a larger part of the generated gas bubbles is given a chance to grow and to leave the melt. Kinetic processes determine the growth of the bubbles. A sufficient size of the grown bubbles is required to leave the melt within a certain time. Stated differently, the glass melt portion with the shortest minimum dwell time determines the quality of fining and hence the quality of the final glass (product).

| Arrangement | Minimum dwell time, at a glass melt throughput of 42 t/d |
|---|---|
| (1) barrier element between 11/12 and 1.0 $l_m$ along the length $l_m$ | 11.5 h |
| (2) no barrier element and no ramp | 10.2 h |
| (3) barrier element between 0.0 and 1/12 $l_m$ along the length $l_m$ | 6.5 h |
| (4) barrier element between 0.0 and 1/12 $l_m$ along the length $l_m$ and a ramp | 5.5 h |

Arrangement (1) has thus proven superior because the glass melt has the largest minimum dwell time and is thus retained longest in the fining vessel thus giving a large proportion of grown gas bubbles the chance to leave the glass melt. The arrangements (3) and (4) provide that gas bubbles leave the glass melt in the front part of the fining vessel provided that they are already large enough and near to the glass melt surface.

Reference signs

**Melting vessel**

| | |
|---|---|
| 101 | melting vessel |
| 101a | melting section |
| 101b | conditioning section |
| 102a | first bottom wall |
| 102b | second bottom wall |
| 103a | first wall |
| 103b | second wall |
| 104a | first volume |
| 104b | second volume |
| 105 | opening |
| 106a | a first height |
| 106b | a second height |
| 107 | common controller |
| 108-1 | bottom wall mass center |
| 108-2 | opening mass center |
| 109 | superstructure |
| 110 | heating circuits |
| 111 | inlet |
| 112 | outlet |
| 113 | frequency changer |

| | |
|---|---|
| 114 | power factor correction |
| 115 | transformer |
| 116, 116a, 116b | electrodes |
| 117 | conductors |
| 118 | signal lines |
| 119a-i, 119a-ii | melting temperature probes |
| 119b-i, 119b-ii | conditioning temperature probes |
| 120 | glass melt |
| 121 | bottom temperature probe |
| 122 | outlet temperature probe |

Riser duct

| | |
|---|---|
| 201 | riser duct |
| 202 | glass melting vessel |

| | |
|---|---|
| 203 | fining vessel |
| 204 | lower electrode section |
| 205 | upper electrode section |
| 206 | flow duct |
| 207 | glass melt |
| 208 | outlet |
| 209 | heating circuit |
| 210 | electrode |
| 210a | pairs of electrodes in an upper part |
| 210b | pairs of electrodes in a bottom part |
| 211 | middle electrode section |
| 212 | gaseous phase |

**Fining vessel**

| | |
|---|---|
| 301 | fining vessel |
| 302, 302', 302" | glass melt |
| 303 | side walls |
| 303-1 | first side wall |
| 303-2 | second side wall |
| 304 | bottom |
| 305 | superstructure |
| 306, 306', 306" | gaseous phase |
| 307, 307', 307" | surface of the glass melt |
| 308 | riser duct |
| 309 | upstream part |
| 310 | downstream part |
| 311 | middle part |
| 312 | vertical duct |
| 313 | barrier element |
| 314 | heating burner |
| 315 | ramp |
| 316 | heating circuits |
| 317 | pair of electrodes |
| 318 | fictitious top layer |
| 319 | fictitious bottom layer |
| 320 | top temperature probes |
| 321 | bottom temperature probes |
| 322 | temperature probe arranged in the inner volume of the superstructure |

**Vertical duct**

| | |
|---|---|
| 401 | vertical duct |
| 402 | electrodes |

**Storage vessel**

| | |
|---|---|
| 501 | storage vessel |

**Claims**

1. A vessel system for producing and refining a glass melt, comprising

- a melting vessel (101) for glass melting,
- a riser duct (201),
- a fining vessel (301) for refining a glass melt, and
- an optional vertical duct (401),

wherein the riser duct (201) connects the melting vessel (101) to the fining vessel (301),
wherein the fining vessel (301) is optionally suitable for purging the refined glass melt into the optional vertical duct (401).

2. Vessel system according to claim 1, further comprising a storage vessel (501), wherein the storage vessel (501) is suitable for receiving the refined glass melt from the optional vertical duct (401), or wherein the storage vessel (501) is suitable for receiving the refined glass melt from the fining vessel (301).

3. Vessel system according to claim 1 or claim 2, wherein the melting vessel (101) for glass melting comprises

   - two or more heating circuits (110),
   - optionally an inlet (111) for a glass batch and/or an outlet (112) for a glass melt (120), and
   - optionally a superstructure (109),

   wherein the melting vessel (101) comprises a melting section (101a) and a conditioning section (101b), wherein the conditioning section (101b) is below the melting section (101a),
   wherein the melting section (101a) has a first bottom wall (102a) and a first wall (103a) surrounding a first volume (104a), the first bottom wall (102a) having an opening (105),
   wherein the conditioning section (101b) has a second bottom wall (102b) and a second wall (103b) surrounding a second volume (104b),
   wherein the first volume (104a) is connected to the second volume (104b) via the opening (105).

4. Vessel system according to claim 3, wherein the melting vessel (101) is **characterised by** one or more of the following features:

   - an area ratio between a bottom area and the opening (105) is between 1.2 and 3.0, wherein the bottom area is the sum of the areas of the first bottom wall (102a) and the opening (105),
   - the melting section (101a) has a first height (106a) of at least 0.8 m, or at least 1.1 m, or at least 1.4 m, the conditioning section (101b) has a second height (106b) of at least 1.0 m, or at least 1.3 m, or at least 1.6 m, wherein a ratio of the first height (106a) to the second height (106b) is 1.0 or less, or 0.95 or less, or 0.90 or less, and/or wherein an area ratio between the bottom area and the area of the opening (105) is between 1.5 and 3.0, or between 1.75 and 2.75, or between 2.0 and 2.5,
   - the first volume (104a) is at least $1.0 \text{ m}^3$, or at least $1.5 \text{ m}^3$, or at least $5.0 \text{ m}^3$, or at least $10.0 \text{ m}^3$, the second volume (104b) is at least $0.8 \text{ m}^3$, or at least $1.1 \text{ m}^3$, or at least $3.0 \text{ m}^3$, or at least $5.0 \text{ m}^3$, and/or wherein a ratio of the first volume (104a) to the second volume (104b) is 1.30 or more, or 1.50 or more, or 1.70 or more,
   - the first bottom wall (102a) is oriented horizontally or in an oblique angle $\alpha$ of 120° or less, or 110° or less, or 100° or less, with respect to the first wall (103a),
   - the first bottom wall (102a) has a minimal width of at least 0.10 m, wherein the minimal width of the first bottom wall (102a) is defined as the shortest distance between the opening (105) and the first wall (103a).

5. Vessel system according to any one of the preceding claims, wherein the riser duct (201) comprises

   - a lower electrode section (204) and an upper electrode section (205),
   - a flow duct (206) connected to the lower electrode section (204) for feeding a glass melt (207) from the glass melting vessel (202,101) into the riser duct (201), and
   - an outlet (208) arranged in the upper electrode section (205) for feeding the glass melt (207) from the riser duct (201) into the fining vessel (203).

6. Vessel system according to claim 5, wherein the riser duct (201) is **characterised by** one or more of the following features:

   - the lower electrode section (204) and the upper electrode section (205) are each provided with one or more heating circuits (209) each comprising at least one pair of electrodes (210),
   - a horizontal cross-section of the lower electrode section (204) has a smaller width than a horizontal cross-section of the upper electrode section (205),

- the outlet (208) has a width of 80 % - 110 % of an initial width of the fining vessel (203),
- between the lower electrode section (204) and the upper electrode section (205) one or more middle electrode sections (211) are arranged, wherein each of the one or more middle electrode sections (211) comprises one or more heating circuits (209) each comprising at least one pair of electrodes (210) and wherein a horizontal cross-section of each middle electrode section (211) has a larger width than that of the section directly upstream of said section and a smaller width than that of the section directly downstream of said section,
- the width of the horizontal cross-sections of the lower electrode section (204), middle electrode sections (211), and/or upper electrode section (205) changes continuously or discontinuously along a height of the riser duct (201) or is essentially constant,
- a width $w_f$ of the horizontal cross-section of the flow duct (206) and a width $w_l$ of the horizontal cross-section of the lower electrode section (204) are dimensioned $w_f \leq w_l$.

7. Vessel system according to any one of the preceding claims, wherein the fining vessel (301) has a first side wall (303-1), a second side wall (303-2), a bottom (304) and an optional ramp (315), the fining vessel (301) having a middle part (311),

   wherein the fining vessel (301) is connectable to an optional downstream part (310) for purging a refined glass melt optionally into a vertical duct (401), wherein the optional upstream part (309), the middle part (311), a part above the optional ramp (315) and the optional downstream part (310) are arrangeable in this consecutive order, wherein the middle part (311) has a width $w_m$, wherein the width $w_m$ is the shortest distance between the first side wall (303-1) and the second side wall (303-2) at a height of 30 cm above a deepest point of the bottom (304).

8. Vessel system according to claim 7, wherein the fining vessel (301) is **characterised by** one or more of the following features:

   - the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm,
   - the middle part (311) has a height $h_m$, wherein $h_m$ is at most 0.63 m, wherein the height $h_m$ refers to the vertical distance between a deepest point of the bottom (304) and the lowest height of the first side wall (303-1) or the second side wall (303-2),
   - the barrier element (313) is arranged in a section of the middle part (311) which belongs to a region between 0.8 and 1.0 $l_m$ along the length $l_m$ of the middle part (311), or the barrier element (313) is arranged in a section of the middle part (311) which belongs to a region between 0.0 and 0.2 $l_m$ along the length $l_m$ of the middle part (311),
   - the fining vessel (301) further comprising a ramp (315), wherein the ramp (315) has a height $h_r$ of 0.1 to 1.0 m with respect to the highest point of the ramp (315) and the lowest point of the ramp (315).

9. Method for producing and refining a glass melt, comprising the steps of

   - melting a batch of raw materials to form a glass melt (120) in a melting vessel (101),
   - heating the batch and/or the glass melt (120) in the melting vessel (101),
   - feeding the glass melt (120, 207) from the melting vessel (101) to a flow duct (206) of a riser duct (201), and
   - feeding the glass melt (120, 207) from an outlet (208) into a fining vessel (203), and
   - obtaining a refined glass melt.

10. Method according to claim 9,

    wherein the step melting a batch of raw materials to form a glass melt (120) in a melting vessel (101) comprises melting a batch of raw materials to form a glass melt (120) in a melting section (101a) of the melting vessel (101), the melting section (101a) having a first height (106a),
    wherein the step heating the batch and/or the glass melt (120) in the melting vessel (101) comprises heating the batch and/or the glass melt (120) using two or more heating circuits in the melting section (101a) of the melting vessel (101), wherein the melting section (101a) has a first bottom wall (102a) and a first wall (103a) surrounding a first volume (104a), the first bottom wall (102a) having an opening (105),
    further comprising the step of processing the glass melt (120) in a conditioning section (101b) of the melting vessel (101), wherein the conditioning section (101b) is below the melting section (101a), the conditioning section (101b) having a second height (106b), wherein the conditioning section (101b) has a second bottom wall (102b) and a second wall (103b) surrounding a second volume (104b).

11. Method according to claim 10, **characterised by** one or more of the following features:

- an average temperature of the glass melt (120) in the melting section (101a) is at least 10 K higher, or at least 30 K higher, or at least 50 K higher, than an average temperature of the glass melt (120) in the conditioning section (101b),
- wherein a convectional flow is established in the melting section (101a), optionally by regulating a heat flow of the batch and/or the glass melt (120) using the two or more heating circuits in the melting section (101a) of the melting vessel (101),
- wherein a uniform flow is established in the conditioning section (101b), optionally by regulating a heat flow of the glass melt (120) using the two or more heating circuits in the melting section (101a) of the melting vessel (101),
- wherein there is essentially no back-feeding from the glass melt (120) in the conditioning section (101b) into the glass melt in the melting section (101a),
- the melting section (101a) has a first bottom wall (102a) and a first wall (103a) surrounding a first volume (104a), the first bottom wall (102a) having an opening (105), wherein the conditioning section (101b) has a second bottom wall (102b) and a second wall (103b) surrounding a second volume (104b),

  wherein a ratio between the glass throughput and a bottom area is at least 1.5 $t/(d \cdot m^2)$, or at least 1.7 $t/(d \cdot m^2)$, or at least 2.0 $t/(d \cdot m^2)$, wherein the bottom area is the sum of the areas of the first bottom wall (102a) and the opening (105), and/or
  wherein a ratio between the glass throughput $[m^3/d]$ and the second volume (104b) is at least 0.3 $d^{-1}$, or at least 0.5 $d^{-1}$,

- an area ratio between the bottom area and the opening (105) is between 1.2 and 3.0, or between 1.75 and 2.75, or between 2.0 and 2.5, wherein the bottom area is the sum of the areas of the first bottom wall (102a) and the opening,
- the glass melt (120) has a minimum dwell time of at least 2.0 hours, or at least 3.0 hours, or at least 4.0 hours in the melting section (101a),
- the glass melt (120) has a minimum dwell time of at least 2.0 hours, or at least 3.0 hours, or at least 4.0 hours in the conditioning section (101b),
- the glass melt (120) has a minimum dwell time of at least 4.0 hours, or at least 5.0 hours, or at least 6.0 hours in the melting vessel (101),
- the glass melt (120) has an average dwell time of at least 20.0 hours, or at least 24.0 hours, or at least 28.0 hours in the melting section (101a),
- the glass melt (120) has an average dwell time of at least 10.0 hours, or at least 12.0 hours, or at least 14.0 hours in the conditioning section (101b),
- the glass melt (120) has an average dwell time of at least 30.0 hours, or at least 35.0 hours, or at least 39.0 hours, or at least 43.0 hours in the melting vessel (101).

12. Method according to any one of claims 9 to 11, **characterised by** one or more of the following features:

- the glass melt (207) is heated in the riser duct (201) such that an average temperature of the glass melt (207) on exit of the riser duct is < 50 °C or < 30 °C or < 10 °C below an average temperature of the glass melt (207) in the fining vessel (203),
- the glass melt (207) is heated in the riser duct (201) in a lower electrode section (204) and an upper electrode section (205) by means of heating circuits (209) and optionally by additional heaters provided in a gaseous phase (212) above the upper electrode section (205) such that a power density $P_{total, upper}$ provided by the heating circuits (209) and any additional heaters comprising the sum of an electrical power density $P_{el, upper}$ provided by the heating circuits (209) of the upper electrode section (205) and a power density $P_{add}$ provided by the additional heaters is higher than an electrical power density $P_{el, lower}$ of the lower electrode section (204),
- a mean volumetric pass-through time through the riser duct (201) is > 3 h or > 5 h or > 7 h or > 8 h,
- an average temperature of the glass melt (207) on entry into the riser duct (201) is < 50 °C or < 100 °C or < 150 °C below the average temperature of the glass melt (207) in the fining vessel (203),
- a shortest dwell time of the glass melt (207) in the riser duct (201) is > 2.0 h or > 3.0 h or > 4.0 h,
- the heating in the riser duct (201) is effected such that at least in the upper 50 % of its height or at least in the upper 75 % of its height or at least in the upper 90 % of its height essentially a plug flow of the glass melt (207) is created,
- the riser duct (201) is a riser duct (201) according to claim 5 or claim 6.

13. Method according to any one of claims 9 to 12, wherein the fining vessel (301) has a first side wall (303-1), a second side wall (303-2), a bottom (304) and an optional ramp (315), the fining vessel (301) having a middle part (311),

wherein the fining vessel (301) is connectable to an optional upstream part (309) for receiving the glass melt (302'), and wherein the fining vessel (301) is connectable to an optional downstream part (310) for purging a refined glass melt, wherein the optional upstream part (309), the middle part (311), the optional ramp (315) and the optional downstream part (310) are arrangeable in this consecutive order,
wherein the middle part (311) has a width $w_m$, wherein the width $w_m$ is the shortest distance between the first side wall (303-1) and the second side wall (303-2) at a height of 30 cm above a deepest point of the bottom (304),
wherein the fining vessel (301) comprises a barrier element (313) arranged on the bottom (304), wherein the barrier element (313) extends from the first side wall to the second side wall and has a height $h_w$, wherein the height $h_w$ refers to the vertical distance between the deepest point of the bottom (304) and the highest height of the barrier element (313), wherein $h_w \geq 20$ cm.

14. Method according to any one of claims 9 to 13, **characterised by** one or more of the following features:

- the glass melt (302) in the fining vessel (301) has a working height $h_{melt}$ of at least 0.35 m, wherein $h_{melt}$ is at most 0.6 m,
- the method further comprising the step of heating the glass melt by means of a heating burner (314) arranged within a gaseous phase (306), wherein the heating burner (314) can optionally be heated with fuel gas and oxygen, or fuel gas and air, or a mixture of hydrogen and oxygen, or with natural gas and oxygen, or with a mixture of natural gas, hydrogen and oxygen, or ammonia and oxygen, or biomethane, or biofuel,
- $h_{melt} > h_w + 0.05$ m, or $h_{melt} > h_w + 0.10$ m, or $h_{melt} > h_w + 0.15$ m,
- the glass melt (302) has a minimum dwell time of at least 2.5 hours, or at least 3.0 hours, or at least 3.5 hours in the middle part (311),
- the glass melt (302) has an average dwell time of at least 6.0 hours, or at least 8.0 hours, or at least 10.0 hours in the middle part (311),
- a ratio between a glass throughput and an area A in the middle part (311) is at least 1.5 t/(d·m²), or at least 2.0 t/(d·m²), or at least 2.3 t/(d·m²), or at least 2.6 t/(d·m²), wherein A = $l_m \times w_m$,
- a ratio between a glass throughput and a middle part volume V in the middle part (311) is at least 1.0 d⁻¹, or at least 2.0 d⁻¹, or at least 4.0 d⁻¹,
- the glass melt (302) in the middle part (311) is heated at least partially to a temperature of at least T2 which corresponds to a viscosity of the glass melt (302) of 10² dPa s,
- at least 60%, or at least 70%, or at least 80%, of a volume of the glass melt (302) in the middle part (311) is heated to a temperature of at least T2,
- the glass melt (302) has a fictitious top layer (318) and a fictitious bottom layer (319), wherein the fictitious top layer (318) consists of a portion of the glass melt (302) in a middle part volume which extends from a surface of the glass melt (307) into the glass melt (302) with a thickness of 10 cm, wherein the fictitious bottom layer (319) consists of a portion of the glass melt (302) in a middle part volume which extends from the bottom (304) into the glass melt (302) with a thickness of 10 cm, wherein the middle part volume is the volume of the glass melt (302) which is required to fill the middle part (311) up to the working height $h_{melt}$, wherein an average temperature of the glass melt in the fictitious top layer (318) is at least 10 K higher, or at least 30 K higher, or at least 50 K higher, than an average temperature of the glass melt in the fictitious bottom layer (319).

15. Method according to any one of claims 9 to 14, wherein

- the glass melt (207) is heated in the riser duct (201) such that an average temperature of the glass melt (207) before exit of the riser duct (201) already reaches the fining temperature and the fining reaction starts in an area between the upper electrode section (205) and the outlet (208), and
- the outlet (208) is formed as an integral part of the upstream part (309) of the fining vessel (203, 301).

16. Glass tube producible or produced using a vessel system according to any one of claims 1 to 8 and/or a method according to any one of claims 9 to 15 with an additional step of a tube drawing method, in particular the Danner method or the Vello method or the A-draw method, wherein the glass tube has

- (i) an aggregated airline length of 0.25 m or 0.15 m or 0.10 m or 0.05 m per 1 m tube length, wherein the aggregated airline length is defined as the sum of the lengths of closed airlines having a length > 15 mm and open airlines having a length > 2 mm, and/or (ii) no knots and stones with a diameter of > 0.8 mm per kg glass and/or at most 1 knot and/or stone with a diameter of > 0.5 per kg glass, and
- a Scope 1-PCF, product carbon footprint in Scope 1, of less than 400 g $CO_2$ / kg glass, optionally of less than 300 g $CO_2$ / kg glass or of less than 30 g $CO_2$ / kg glass.

17. Use of a glass tube according to claim 16 as an intermediate product for the production of pharmaceutical containers, such as ampoules, vials, syringes and/or cartridges.

Figure 1

**Figure 2**

101

102a

102b

116b

116a

**Figure 3a**

101

102b

102a

116b

116a

**Figure 3b**

**Figure 4a**

105

102b

108-1,108-2

102a

**Figure 4b**

**Figure 5**

Figure 6

Figure 7

Figure 8

Figure 9

**Figure 10**

Figure 11

313

315

$h_r$

**Figure 12**

**Figure 13**

**Figure 14**

Europäisches Patentamt

European Patent Office

Office européen des brevets

# EUROPEAN SEARCH REPORT

**Application Number**

EP 24 15 5845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 522 387 A (CHINA TRIUMPH INT ENG CO LTD) 29 December 2017 (2017-12-29) * paragraph [0059]; claims; figures * | 1-15 | INV. C03B5/20 C03B5/185 C03B5/225 |
| X | EP 0 403 183 A2 (PILKINGTON PLC [GB]) 19 December 1990 (1990-12-19) * column 3, lines 23-42; claims; figures * * column 5, line 36 – column 6, line 12 * * column 7, line 34 – column 8, line 10 * * column 8, lines 36-39 * | 1-15 | C03B5/027 C03B5/04 |
| X | Anonymous: "Tubing Specification Pharmaceutical Vial Tubing", , 31 December 2016 (2016-12-31), pages 1-6, XP093133264, Retrieved from the Internet: URL:https://www.corning.com/media/worldwide/cpt/documents/Specs_VialTubing.pdf [retrieved on 2024-02-20] * page 3. Title * | 16,17 | |
| X | US 4 906 272 A (BOETTNER GEORGE B [US]) 6 March 1990 (1990-03-06) | 1,9 | **TECHNICAL FIELDS SEARCHED (IPC)** C03B |
| A | * column 3, line 50 – column 4, line 8; claims; figures * | 6 | |

The present search report has been drawn up for all claims

| Place of search | Date of completion of the search | Examiner |
|---|---|---|
| The Hague | 22 February 2024 | Creux, Sophie |

EPO FORM 1503 03.82 (P04C01)

## ANNEX TO THE EUROPEAN SEARCH REPORT
## ON EUROPEAN PATENT APPLICATION NO.

EP 24 15 5845

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2024

| Patent document cited in search report | | Publication date | Patent family member(s) | | Publication date |
|---|---|---|---|---|---|
| CN 107522387 | A | 29-12-2017 | NONE | | |
| EP 0403183 | A2 | 19-12-1990 | AR | 243485 A1 | 31-08-1993 |
| | | | AT | E120723 T1 | 15-04-1995 |
| | | | AU | 632331 B2 | 24-12-1992 |
| | | | BG | 60861 B1 | 31-05-1996 |
| | | | BR | 9002798 A | 20-08-1991 |
| | | | CA | 2018740 A1 | 13-12-1990 |
| | | | CN | 1048534 A | 16-01-1991 |
| | | | CZ | 285223 B6 | 16-06-1999 |
| | | | DD | 298373 A5 | 20-02-1992 |
| | | | DE | 69018317 T2 | 28-09-1995 |
| | | | EP | 0403183 A2 | 19-12-1990 |
| | | | EP | 0403184 A2 | 19-12-1990 |
| | | | ES | 2073527 T3 | 16-08-1995 |
| | | | GB | 2232753 A | 19-12-1990 |
| | | | GB | 2235445 A | 06-03-1991 |
| | | | HU | 215945 B | 29-03-1999 |
| | | | IE | 67772 B1 | 17-04-1996 |
| | | | IN | 175675 B | 05-08-1995 |
| | | | JP | H03103328 A | 30-04-1991 |
| | | | JP | H07106913 B2 | 15-11-1995 |
| | | | KR | 910000545 A | 29-01-1991 |
| | | | NO | 178658 B | 29-01-1996 |
| | | | NZ | 234012 A | 23-12-1992 |
| | | | PL | 285637 A1 | 25-02-1991 |
| | | | PT | 94349 A | 28-02-1994 |
| | | | RO | 106124 B1 | 26-02-1993 |
| | | | TR | 27116 A | 08-11-1994 |
| | | | ZA | 904578 B | 29-05-1991 |
| US 4906272 | A | 06-03-1990 | CA | 2012301 A1 | 17-10-1990 |
| | | | DE | 69023264 T2 | 20-06-1996 |
| | | | EP | 0393882 A2 | 24-10-1990 |
| | | | JP | H02293331 A | 04-12-1990 |
| | | | KR | 900016054 A | 12-11-1990 |
| | | | US | 4906272 A | 06-03-1990 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107686226 A